# EUROPEAN PATENT APPLICATION

(11) **EP 2 589 952 A1**
(43) Date of publication of application: **08.05.2013**
(21) Application number: 11800977.8
(22) Date of filing: 30.06.2011
(51) Int. Cl.: G01N 21/64, G01N 21/03, G01N 37/00

(54) **PARTICLE FIXING STRUCTURE AND PARTICLE ANALYSIS DEVICE**

(30) Priority: 30.06.2010 JP 2010150523; 30.06.2010 JP 2010150522; 30.06.2010 JP 2010150521; 30.06.2010 JP 2010150520
(71) Applicant: Tosoh Corporation, Yamaguchi 746-8501 (JP)
(72) Inventor: MOGAMI Toshifumi, Ayase-shi Kanagawa 252-1123 (JP); MORIMOTO Atsushi, Ayase-shi Kanagawa 252-1123 (JP); FUTAMI Toru, Ayase-shi Kanagawa 252-1123 (JP)
(74) Representative: Pautex Schneider, Nicole Véronique
(86) International application number: PCT/JP2011/065113
(87) International publication number: WO 2012/002515

(57) **Abstract**

A structure 14 for particle immobilization has a plurality of holding holes 9 for holding respective test particles in order to detect light emitted from a substance which indicates the presence of a component for constructing each of the test particles, and the structure 14 for particle immobilization comprises a flat plate substrate 15, and a holding unit 20 which is arranged on the substrate 15 and which is formed with the plurality of holding holes 9. In this configuration, a light shielding film 19 which reduces light noise is provided for the substrate 15 or the holding unit 20 in order that the light noise such as the background noise and the crosstalk noise can be reduced, and a large number of test particles can be optically observed highly sensitively and highly accurately.

## Description

### TECHNICAL FIELD

The present invention relates to a structure for particle immobilization for immobilizing test particles (particles to be tested), and an apparatus for analyzing test particles.

### BACKGROUND ART

In recent years, a technique has been proposed, in which particles such as biological samples (for example, cells) are arranged on a substrate individually and regularly, and thus it is possible to individually analyze and observe the property and the structure of each of the particles. The technique is expected to be applied in a variety of fields including drug development (drug discovery), medical treatment, examination (inspection), analysis, and so forth. Patent Document 1 discloses a method for immobilizing cells one by one to respective wells by repeatedly performing such a step that a cell suspension is added onto a substrate provided with micropores (microwells) arranged in an array form to wait for the sedimentation of cells into wells, and then cells remaining outside the wells are washed out. Patent Document 2 discloses a method for introducing and immobilizing particles into through-holes by means of the dielectrophoretic force by introducing a suspension containing particles into a space between an upper electrode and a lower electrode having an insulator layer formed with a large number of through-holes, and applying an AC voltage between the both electrodes. If a substrate on which a large number of particles are individually immobilized can be manufactured by means of the method as described in Patent Documents 1 and 2, for example, the individual particles can be analyzed easily and collectively by observing the fluorescence generated by the irradiation of an excitation light. For example, Patent Document 1 proposes a method for identifying an antigen-specific lymphocyte that exists in the population at an extremely low frequency by immobilizing fluorescence-labeled lymphocytes one by one into respective wells, and observing the change of the fluorescence intensity before and after the application of stimulus with an antigen.

Patent Document 3 discloses a substrate for biochip comprising a base into whose surface a hydroxyl group can be introduced, a metallic film which is provided with a plurality of wells reaching the base, and a cross-linkable polymer film which is arranged on the metallic film. However, the substrate of Patent Document 3 is provided in order to immobilize nucleic acids, but is not provided in order to immobilize particles such as cells.

### PRIOR ART REFERENCES

### Patent documents

Patent Document 1: JP3723882B2;
Patent Document 2: JP2007-296510A;
Patent Document 3: JP2007-78631A.

### SUMMARY OF THE INVENTION

### OBJECT TO BE ACHIEVED BY THE INVENTION

When the fluorescence detection is collectively performed for a large number of particles arranged on a substrate as in Patent Documents 1 and 2, the following problem arises. In the first place, the fluorescence generated by the irradiation of the excitation light includes the auto fluorescence generated from the substrate itself, in addition to the fluorescence generated from the fluorescence-labeled particles (fluorescence signal). This autofluorescence exerts the influence as the background noise, which lowers the detection accuracy of the intensity of the fluorescence signal. Further, the light from the outside such as the indoor light as well as the fluorescence is also detected as the background light in the same manner depending on the configuration of the measuring apparatus and the measurement condition. In the second place, when the distance (interval) between the particles is narrow, a problem also arises in relation to the decrease in the detection accuracy caused by the leakage light (crosstalk noise) from the adjacent particle. In the third place, in order to avoid the discoloration (fading) of the fluorescence caused by the irradiation of the excitation light for a long period of time, it is also demanded to shorten the detection time of the fluorescence intensity generated from the fluorescence-labeled biological sample.

In view of the above, the present invention has been proposed taking the forgoing conventional circumstances into consideration, and an object thereof is to provide a technique which makes it possible to reduce the background noise, the crosstalk noise, and so forth and optically observe a large number of particles highly sensitively and highly accurately.

### MEANS FOR ACHIEVING THE OBJECT

In order to achieve the above-described object, the present invention adopts the following configuration. That is, the structure for particle immobilization according to the present invention (hereinafter simply referred to as "structure" as well) is a structure for particle immobilization having a plurality of holding holes for holding respective test particles in order to detect light emitted from a substance which indicates the presence of a component for constructing each of the test particle, the structure comprising: a flat plate substrate; a holding unit which is arranged on the substrate and which is formed with the plurality of holding holes; and a light shielding film which is provided for the substrate or the holding unit and which reduces light noise generated from the holding unit.
According to this configuration, owing to the light shielding film provided for the holding unit, for example, it is possible to reduce the light noise such as the background noise which results from the autofluorescence of the insulator film itself and the crosstalk noise which results from the leakage light coming from the adjacent holding hole, and thereby to detect only the light emitted from the substance to be observed in each of the holding holes highly sensitively and highly accurately. Further, it is also possible to expect the effect to shorten the detection time, because the detection can be performed highly sensitively and highly accurately.

In the above-described configuration, it is preferable that the light shielding film is provided on the upper surface of the holding unit or at an intermediate layer of the holding unit. Owing to this configuration, the light noise which leaks upwardly with respect to the substrate can be shielded or reduced by the light shielding film, and hence, this configuration is effective to perform the observation from above the substrate.

Further, it is preferable to adopt such a structure that the holding unit has the light shielding film which is provided on the upper surface of the holding unit and an insulator film which is provided between the light shielding film and the substrate, the holding holes are opened on the light shielding film positioned on the upper surface of the holding unit, and the holding holes extend to (arrive at) the substrate via the insulator film.
According to this structure, the light shielding film is provided on the upper surface side of the holding unit, and hence, it is easy to shut off the upward leakage of the autofluorescence of the insulator film positioned under the light shielding film from the structure. Further, according to this structure, it is possible to shut off the light from the outside, which comes into the structure from an upward and outward position of the structure, and hence, it is possible to reduce the influence of the external light in the detection of the test particle. Further, at least one insulator film exists below the light shielding film, and hence, the effect to further suppress the autofluorescence of the insulator film is enhanced depending on the material of the light shielding film and the film thickness of the light shielding film.

In this context, the light shielding film can be provided on the entire portion other than the plurality of holding holes, of the upper surface of the holding unit, or can be provided around the opening portions of the holding holes, of the upper surface of the holding unit. In the case of the former, the above-described light shielding performance of the light shielding film can be appropriately exhibited. Even in the case of the latter, the upper surface of the holding unit is sectionalized into the portion which is covered with the light shielding film and the portion at which the insulator film is exposed, and hence, it is possible to preferably perform the detection of the light in relation to the test particles by utilizing the difference in the hydrophilicity between the light shielding film and the insulator film. For example, when the light shielding film has the hydrophilicity and the insulator film has the hydrophobicity, then an aqueous solution can be held only around the respective holding holes by sealing the holding holes with a water-insoluble liquid after introducing a water-soluble liquid into the holding holes. As a result, for example, it is possible to investigate the response to each of the plurality of test particles by being immobilized to the holding holes.

It is also preferable to adopt such a structure that the holding unit has at least two insulator films and the light shielding film which is provided while being interposed between the two insulator films, the holding holes are opened on the upper surface side of the holding unit, and the holding holes extend to the substrate via the two insulator films and the light shielding film.
It is preferable, but not necessary, that the two insulator films and the light shielding film are arranged so that they are adjacent to each other. A film which is neither the insulator film nor the light shielding film can also be arranged between one insulator film (insulator film nearer to the opening) and the light shielding film and/or between the light shielding film and the other insulator film (insulator film nearer to the substrate). Further, for example, also in such an embodiment that one of the two insulator films is provided on the upper surface of the holding unit, and the light shielding film is provided adjacently below the insulator film provided on the upper surface of the holding unit, it is possible that a film other than the insulator films is arranged below the light shielding film, and the other insulator film is provided further below the film other than the insulator films.

A stacked structure in which the light shielding film is interposed between the two insulator films is provided, and hence, it is possible to suppress the autofluorescence of at least one insulator film from exerting influence on the optical detection in relation to the test particles. Further, at least one insulator film exists under or below the light shielding film. Therefore, the effect to further suppress the autofluorescence of the insulator film is enhanced depending on the material of the light shielding film and the film thickness of the light shielding film.

According to the above-described configuration, a structure in which the light shielding film itself is covered with the insulator film on the upper surface of the holding unit is provided. Therefore, if the material of the light shielding film is a material that possibly exerts any influence on the motion of the test particle in the technique adopted when the test particle is immobilized to the holding hole, it is possible to smoothly realize the holding of the test particle in the holding hole by covering the light shielding film with the insulator film. For example, when the test particle is induced into the holding hole by utilizing the electric field in accordance with the dielectrophoresis method as described later on, it is possible to avoid disturbance of the electric field formation by covering the light shielding film with the insulator film.

In this context, the light shielding film can be provided on the entire portion other than the plurality of holding holes at the layer between the two insulator films. Accordingly, the above-described light shielding performance of the light shielding film can be appropriately exhibited.

It is also preferable to adopt such a structure that the holding unit has at least an insulator film and the light shielding film which is provided between the insulator film and the substrate, the holding holes are opened on the upper surface of the holding unit, and the holding holes extend to the substrate via the insulator film and the light shielding film. According to this configuration, the light noise which leaks downwardly with respect to the substrate can be shut off by the light shielding film, and hence, this configuration is especially effective for the observation performed from below the substrate.

In this context, it is appropriate that the light shielding film is provided at a portion other than the plurality of holding holes, of the boundary surface between the insulator film and the substrate. Preferably, it is appropriate that the light shielding film is provided at the entire portion other than the plurality of holding holes, of the boundary surface between the insulator film and the substrate. However, when the light shielding film composed of metallic film(s) is used in a configuration in which a pair of electrodes is provided on the substrate, it is preferable that the light shielding film is provided only on the electrodes at the portion other than the holding holes in order to avoid a short circuit between the electrodes.

It is also preferable to adopt such a structure that the substrate is composed of light-transmissive material(s); the holding unit is arranged on a first surface of the substrate; the light shielding film is arranged on the second surface on the opposite side of the first surface of the substrate; the holding holes are opened on the upper surface of the holding unit and extend to the first surface of the substrate; and the light shielding film has a plurality of openings at positions corresponding to the plurality of holding holes, which openings allow the second surface of the substrate to be exposed. In this context, the "position corresponding to the holding hole (on the second surface of the substrate)" can be defined as the position of an imaginary area (for example, the central position of the area) obtained by vertically projecting a holding hole (or the bottom portion of a holding hole) onto the second surface of the substrate. The imaginary area, which is obtained by vertically projecting the holding hole (or the bottom portion of the holding hole) onto the second surface of the substrate, is also referred to as "area corresponding to the holding hole (on the second surface of the substrate)".

According to this configuration, by observing the holding hole through the substrate and the opening of the light shielding film from the side of the second surface of the substrate, for example, it is possible to reduce the light noise such as the background noise which results from the autofluorescence of the holding unit itself and the crosstalk noise which results from the leakage light coming from the adjacent holding hole, and thereby to detect only the light emitted from the substance to be observed in each of the holding holes highly sensitively and highly accurately. Further, it is also possible to expect the effect to shorten the detection time, because the detection can be performed highly accurately at the high sensitivity.
In this context, it is preferable that the light shielding film covers the entire area other than areas corresponding to the plurality of holding holes, of the second surface of the substrate. This is because, accordingly, the light signal emitted from the holding hole can be properly detected, while removing the light noise emitted from a portion other than the holding hole as much as possible.

In this context, it is preferable that the structure of the present invention further comprises an accommodating unit for accommodating a suspension containing the test particles above the holding unit, wherein the holding holes are provided so that the holding holes are communicated with the accommodating unit. Accordingly, the test particles can be easily introduced into the respective holding holes. As the method for introducing the test particles into the holding holes, the spontaneous sedimentation (gravity) can be utilized, or the dielectrophoretic force can be utilized. The method utilizing the dielectrophoretic force is more preferred, because the test particles can be introduced into a large number of the holding holes within an extremely short period of time of about several seconds.

In order to allow the dielectrophoretic force to act on the test particles, it is sufficient that the AC electric field is applied so that the electric flux lines (lines of electric force) are concentrated on the portions of the holding holes in a state where the accommodating unit and the holding holes are filled with the suspension. As the configuration to apply such an AC electric field, for example, it is possible to adopt such a configuration that a pair of electrodes arranged at respective positions corresponding to the mutually different holding holes is provided on the holding unit-side surface (surface at the side of the holding unit) of the substrate, and the holding holes extend from the upper surface of the holding unit to the electrodes on the substrate. Further, it is also possible to adopt such a configuration that a first electrode arranged at positions corresponding to the holding holes is provided on the holding unit-side surface of the substrate, the holding holes extend from the upper surface of the holding unit to the first electrode on the substrate, and a second electrode is provided on the side opposite to the first electrode with the holding unit and the accommodating unit intervening therebetween. In the case of any the configuration, the test particle contained in the suspension can be introduced into the holding hole by applying the AC voltage having a given waveform between the two electrodes.

It is preferable that the substrate is composed of light-transmissive material(s), and the electrode provided on the holding unit-side surface of the substrate is a transparent electrode such as ITO. Accordingly, the light emitted from the holding hole can be observed through the substrate from below the substrate. Any material can be adopted for the light shielding film as long as the material has the light shielding property. The light shielding film can be, for example, a metallic film.

In another aspect, an apparatus for particle analysis according to the present invention is characterized by comprising the above-described structure for particle immobilization; a power source which applies an AC voltage to the electrodes in order to generate a dielectrophoretic force; and a detecting unit which detects light emitted from a substance that indicates the presence of a component for constructing each of the test particles held in the holding holes of the structure for particle immobilization after applying the voltage from the power source.

Further, a method for analyzing test particles according to the present invention is characterized by comprising immobilizing the test particles to the holding holes of the above-described structure for particle immobilization, and detecting light emitted by a substance which indicates the presence of a component for constructing each of the immobilized test particles. In this context, the substance which indicates the presence of the component for constructing the test particle is a marker (labeled substance) as described later on.

### EFFECT OF THE INVENTION

According to the present invention, for example, it is possible to reduce the background noise, the crosstalk noise, or the like is reduced, and optically observe a large number of particles highly sensitively and highly accurately.

### BRIEF DESCRIPTION OF THE DRAWINGS

Fig. 1 shows figures for illustrating the structure according to the first embodiment of the present invention.
Fig. 2 shows sectional views of the structure shown in Fig. 1.
Fig. 3 shows a figure for illustrating the structure and the particle immobilizing apparatus according to the second embodiment of the present invention.
Fig. 4 shows a sectional view of the structure shown in Fig. 3.
Fig. 5 shows a figure for illustrating the structure and the particle immobilizing apparatus according to the third embodiment of the present invention.
Fig. 6 shows a figure for illustrating the structure and the particle immobilizing apparatus according to the fourth embodiment of the present invention.
Fig. 7 shows a sectional view of the structure shown in Fig. 6.
Fig. 8 shows a first drawing for illustrating a method for immobilizing particles by means of the dielectrophoresis.
Fig. 9 shows a second drawing for illustrating the method for immobilizing particles by means of the dielectrophoresis.
Fig. 10 shows a figure for illustrating a method for analyzing particles.
Fig. 11 shows an example in which the apparatus of the present invention is applied to an apparatus for detecting abnormal cells.
Fig. 12A shows first drawings for illustrating a method for producing the structure of Example 1-1.
Fig. 12B shows second drawings for illustrating the method for producing the structure of Example 1-1.
Fig. 13A shows first drawings for illustrating a method for producing the structure of Example 1-2.
Fig. 13B shows second drawings for illustrating the method for producing the structure of Example 1-2.
Fig. 13C shows third drawings for illustrating the method for producing the structure of Example 1-2.
Fig. 14 shows figures for illustrating the structure according to the fifth embodiment of the present invention.
Fig. 15 shows sectional views of the structure shown in Fig. 14.
Fig. 16 shows a figure for illustrating the structure and the particle immobilizing apparatus according to the sixth embodiment of the present invention.
Fig. 17 shows a sectional view of the structure shown in Fig. 16.
Fig. 18 shows a figure for illustrating the structure and the particle immobilizing apparatus according to the seventh embodiment of the present invention.
Fig. 19 shows a figure for illustrating the structure and the particle immobilizing apparatus according to the eighth embodiment of the present invention.
Fig. 20 shows a sectional view illustrating the structure shown in Fig. 19.
Fig. 21A shows first drawings for illustrating a method for producing the structure of Example 2-1.
Fig. 21B shows second drawings for illustrating the method for producing the structure of Example 2-1.
Fig. 22A shows first drawings for illustrating a method for producing the structure of Example 2-2.
Fig. 22B shows second drawings for illustrating the method for producing the structure of Example 2-2.
Fig. 22C shows third drawings for illustrating the method for producing the structure of Example 2-2.
Fig. 23 shows figures for illustrating the structure according to the ninth embodiment of the present invention.
Fig. 24 shows sectional views of the structure shown in Fig. 23.
Fig. 25 shows a figure for illustrating the structure and the particle immobilizing apparatus according to the tenth embodiment of the present invention.
Fig. 26 shows a sectional view of the structure shown in Fig. 25.
Fig. 27 shows a figure for illustrating the structure and the particle immobilizing apparatus according to the eleventh embodiment of the present invention.
Fig. 28 shows a figure for illustrating the structure and a particle immobilizing apparatus according to the twelfth embodiment of the present invention.
Fig. 29 shows a sectional view of the structure shown in Fig. 28.
Fig. 30 shows figures for illustrating a method for producing the structure of Example 3-1.
Fig. 31 shows figures for illustrating a method for producing the structure of Example 3-2.
Fig. 32 shows figures for illustrating the method for producing the structure of Example 3-2.
Fig. 33 shows figures for illustrating the structure according to the thirteenth embodiment of the present invention.
Fig. 34 shows sectional views of the structure shown in Fig. 33.
Fig. 35 shows a figure for illustrating the structure and the particle immobilizing apparatus according to the fourteenth embodiment of the present invention.
Fig. 36 shows a sectional view of the structure shown in Fig. 35.
Fig. 37 shows a figure for illustrating the structure and the particle immobilizing apparatus according to the fifteenth embodiment of the present invention.
Fig. 38 shows a figure for illustrating the structure and the particle immobilizing apparatus according to the sixteenth embodiment of the present invention.
Fig. 39 shows a sectional view of the structure shown in Fig. 38.
Fig. 40A shows figures for illustrating a method for producing the structure of Example 4-1.
Fig. 40B shows figures for illustrating the method for producing the structure of Example 4-1.
Fig. 41A shows figures for illustrating a method for producing the structure of Example 4-2.
Fig. 41B shows figures for illustrating the method for producing the structure of Example 4-2.
Fig. 41C shows figures for illustrating the method for producing the structure of Example 4-2.

### MODES FOR CARRYING OUT THE INVENTION

Preferred embodiments of the present invention will be exemplarily explained in detail below by way of example with reference to the drawings. However, the shapes, the sizes (dimensions), the materials, and the like, of the members disclosed in the following embodiments and the corresponding drawings are merely specific examples provided to achieve the object of the present invention. Hence, it is not intended that the scope of the present invention is limited only to such configurations.

### <Basic Structure of Structure for Particle Immobilization>

At first, an explanation will be made about the basic structure of the structure for particle immobilization according to the present invention (hereinafter simply referred to as "structure" as well).

The structure for particle immobilization is a member for individually and regularly arranging and holding (immobilizing) a large number of test particles to be tested, and thereby facilitating the manipulation (operation), the observation, the analysis, and the like, of the large number of test particles. Examples of the test particles which can be immobilized by using the structure of the present invention can include biological sample-related particles, inorganic material-related particles (such as silica, zirconia, and nickel oxide), and organic material-related particles (such as polystyrene). In particular, the present invention can be preferably applied to the immobilization of the biological sample-related particles represented by cells and virus particles. Therefore, the following embodiments will be explained by referring to the biological sample-related particles (hereinafter referred to as "biological sample" as well) by way of example.

The structure according to the present invention is characterized in that the structure comprises a substrate, a holding unit which is provided on the substrate and which is formed with a plurality of holding holes for holding test particles, and a light shielding film for reducing light noise such as the background noise and the crosstalk noise in order that the light emitted from each of the holding holes can be detected highly sensitively and highly accurately. The structure according to the present invention can be roughly classified into the following first to fourth structures depending on the arrangement of the light shielding film.

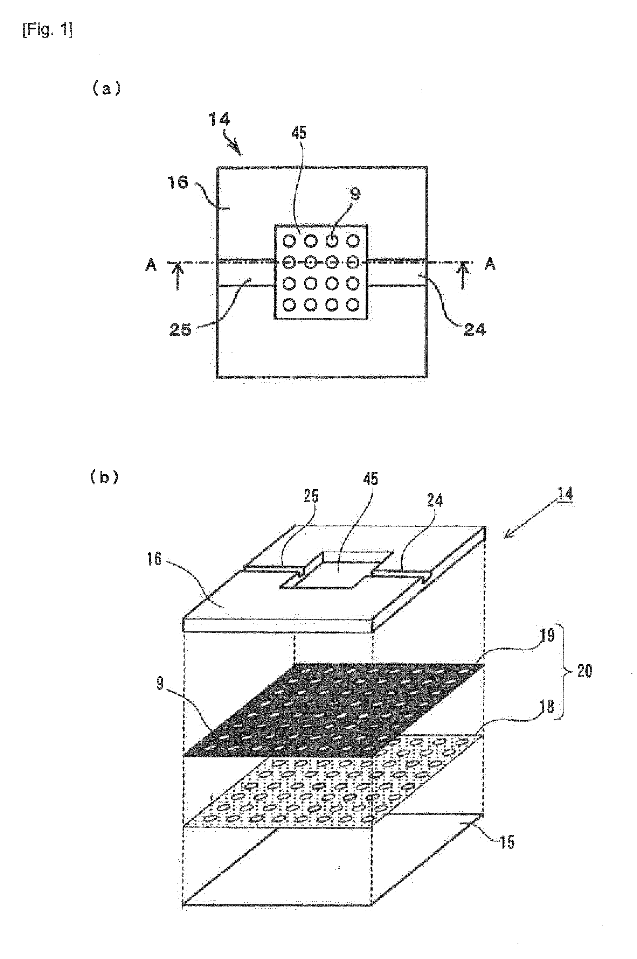

The first structure is a structure in which the light shielding film is provided on a surface layer of the holding unit (around the openings of the holding holes).
In this structure, the light noise which leaks upwardly with respect to the substrate (toward the opening side of the holding holes) can be shut off by the light shielding film, and hence, this structure is especially effective for the observation from above the substrate. First to fourth embodiments, Example 1-1 to Example 1-3, and Figs. 1 to 13C show specific examples of the first structure.

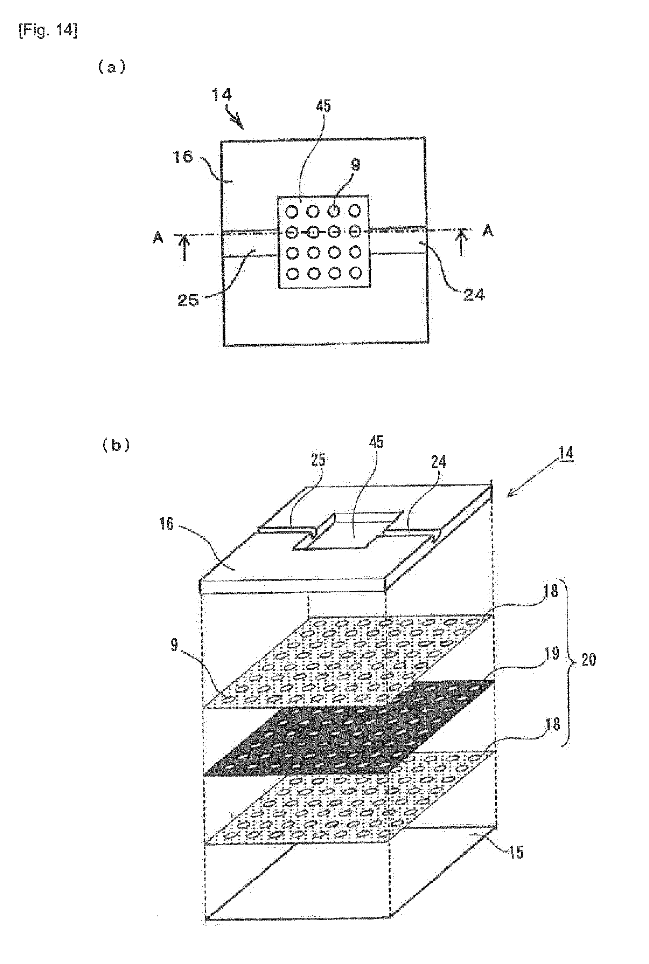

The second structure is a structure in which the light shielding film is provided at an intermediate layer of the holding unit. In this structure, both of the light noise which leaks upwardly with respect to the substrate and the light noise which leaks downwardly with respect to the substrate can be reduced, and hence, this structure is especially effective when it is required to perform the observation from the both sides of, i.e. from above and below, the substrate. Fifth to eighth embodiments, Example 2-1 to Example 2-3, and Figs. 14 to 22C show specific examples of the second structure.

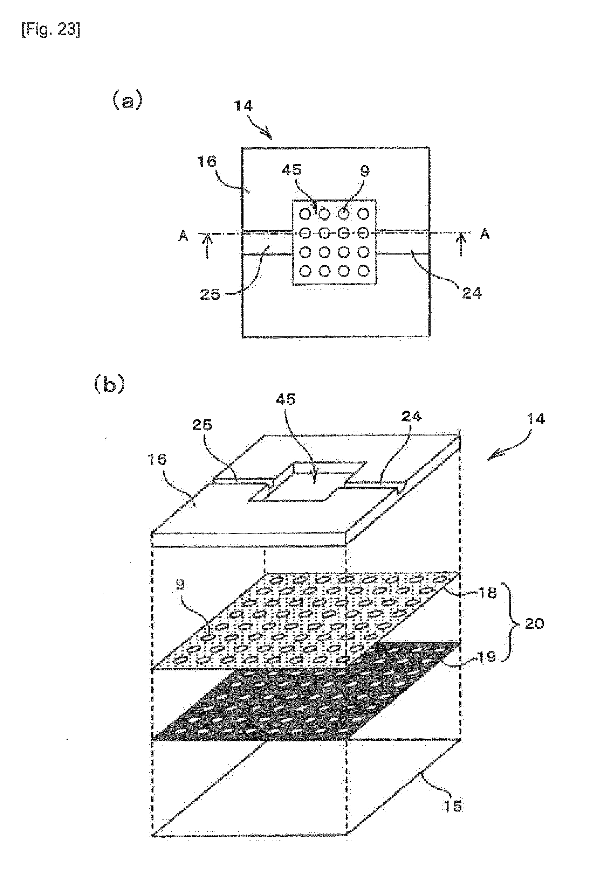

The third structure is a structure in which the light shielding film is provided between the holding unit and the substrate (around the bottom surface of the holding holes). In this structure, the light noise which leaks downwardly with respect to the substrate can be shut off by the light shielding film, and hence, this structure is especially effective for the observation from below the substrate. Ninth to twelfth embodiments, Example 3-1 to Example 3-3, and Figs. 23 to 32 show specific examples of the third structure.

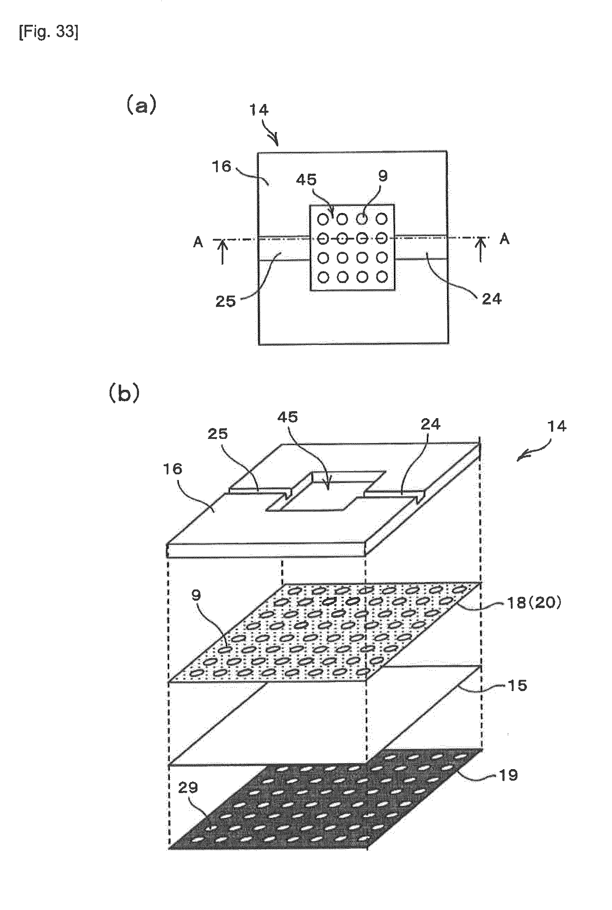

The fourth structure is a structure in which the light shielding film is provided on the lower surface of the substrate (surface on the side opposite to the holding unit). Also in this structure, the light noise which leaks downwardly with respect to the substrate can be shut off by the light shielding film, and hence, this structure is especially effective for the observation from below the substrate. Thirteenth to sixteenth embodiments, Example 4-1 to Example 4-3, and Figs. 33 to 41C show specific examples of the fourth structure.

### (First Embodiment)

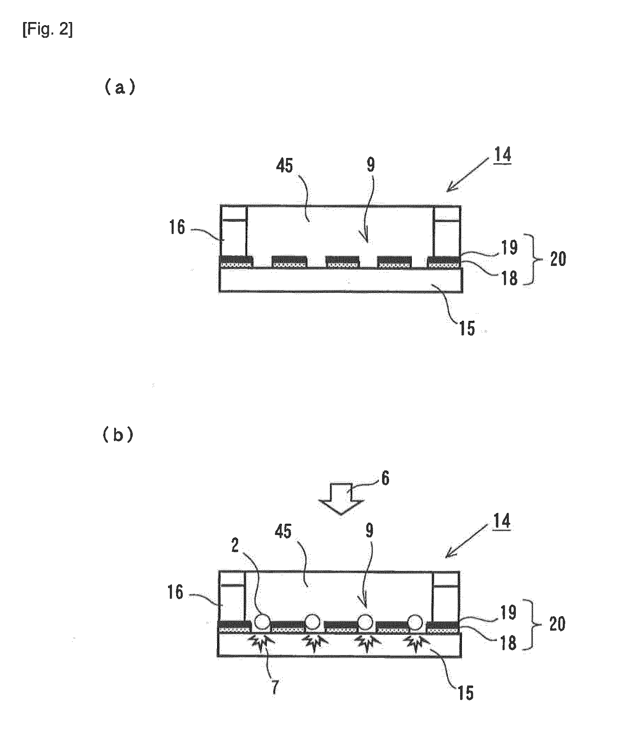

Figs. 1 and 2 schematically show the structure according to the first embodiment. Fig. 1(a) shows a plan view of the structure, and Fig. 1(b) shows an exploded perspective view to illustrate the layer structure of the structure. Fig. 2(a) shows a sectional view of in Fig. 1(a) along with A-A, and Fig. 2(b) shows a state where biological samples (for example, cells) are immobilized to the structure.

As shown in Figs. 1 and 2, the structure 14 is composed of a flat plate substrate 15, a holding unit 20 which is arranged on the substrate 15, and a spacer 16 for forming, above the holding unit 20, a space (referred to as "accommodating unit" as well) 45 for introducing thereinto a suspension containing the biological sample. The holding unit 20 is composed of a stack of an insulator film 18 and a light shielding film 19. The light shielding film 19 is arranged above the insulator film 18. The holding unit 20 has a plurality of holding holes (through-holes) 9 which are formed so as to extend to (arrive at) the substrate 15 via the insulator film 18 and the light shielding film 19. In this configuration, the holding hole 9 is a bottomed cylindrical hole in which the substrate 15 serves as the bottom surface. The holding hole 9 is formed so as to extend in the film thickness direction of the holding unit 20 (stack of the insulator film 18 and the light shielding film 19) from the upper surface of the substrate 15 and be opened for the accommodating unit 45. Only several holding holes 9 are depicted in the drawings for the convenience of the explanation and the illustration of drawings. However, an actual structure is provided with several thousand to several million or several ten million of holding holes 9.

According to the above-described configuration, for example, the suspension containing the biological samples is introduced into the accommodating unit 45 from an introducing port 24 provided for the spacer 16, the biological samples are sedimented into the holding holes 9 by means of the gravity, and thereby the biological samples 2 can be immobilized to the respective holding holes 9 as shown in Fig. 2(b). After the necessary operation such as the labeling is performed for the structure 14 in which the biological samples 2 are immobilized to the respective holding holes 9, for example, when the excitation light 6 is radiated from the upper side (accommodating unit side) of Fig. 2(b), and the fluorescence 7 is observed from the upper side as well, then the autofluorescence of the insulator film 18 and the leakage light coming from the adjacent holding hole(s) 9 are shut off by the light shielding film 19. Therefore, it is possible to reduce the light noise such as the background noise and the crosstalk noise. Accordingly, a weak light signal emitted from a labeled substance bound to the biological sample 2 (described later on) can be detected highly sensitively and highly accurately. Even when the fluorescence 7 is observed from the lower side of Fig. 2(b), the leakage light coming from the adjacent holding hole(s) 9 is somewhat shut off by the light shielding film 19, and hence, the light signal can be detected highly sensitively and highly accurately.

Next, an explanation will be made about other embodiments of the structure for particle immobilization according to the first structure. In the case of the structure of the first embodiment, the particles are introduced into the holding holes in accordance with the action of the gravity. By contrast, the structures of second to fourth embodiments described below each adopt such a configuration that the particles are introduced into the holding holes mainly by utilizing the dielectrophoretic force.

### (Second Embodiment)

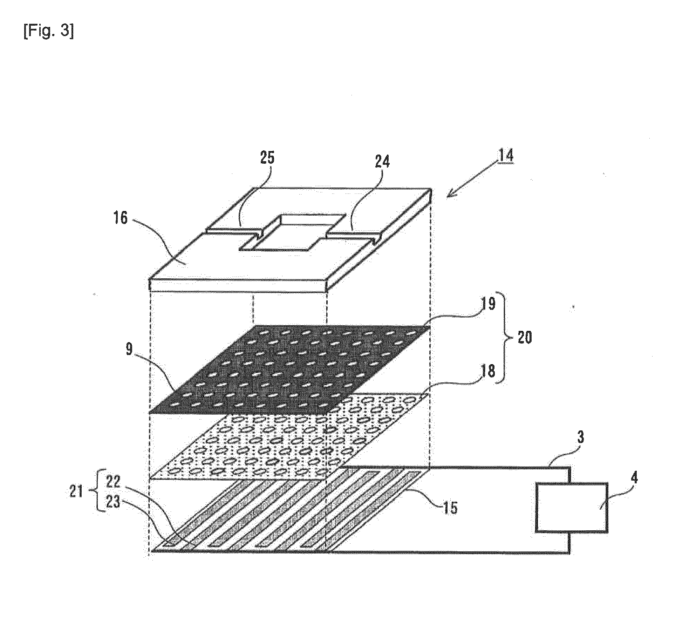

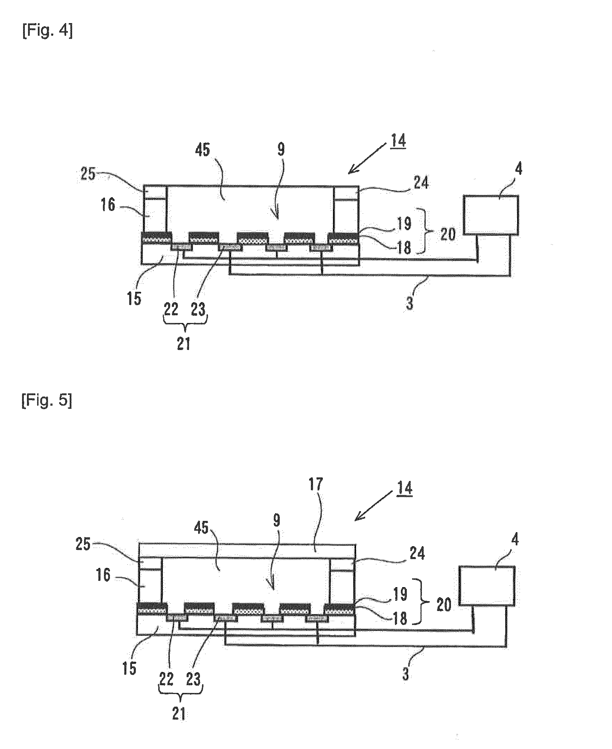

Figs. 3 and 4 schematically show the configuration of the structure and the particle immobilizing apparatus according to the second embodiment. Fig. 3 shows an exploded perspective view to illustrate the layer structure of the structure, and Fig. 4 shows a sectional view of the structure. Fig. 4 shows a cross section of the same portion as that corresponding to the A-A line shown in Fig. 1(a) (the same hold for sectional views described later on). The structure 14 of the second embodiment has a comb-shaped electrode 21 which is composed of a pair of electrodes 22 and 23 on the holding unit-side surface of the substrate 15. Each of the electrodes 22 and 23 has a plurality of band-shaped electrodes which are arranged in parallel to one another in the direction of arrangement of the holding holes 9. The band-shaped electrodes of one electrode 22 and the band-shaped electrodes of the other electrode 23 are arranged alternately to one another. As shown in Fig. 4, the band-shaped electrodes are provided at positions corresponding to the respective holding holes 9, and the electrodes are exposed at the bottom portions of the respective holding holes 9. The electrodes 22 and 23 are connected to an AC power source 4 via respective conductive lines 3. In this configuration, when the interior of the accommodating unit 45 is filled with the suspension containing the biological sample, and the AC voltage is applied between the electrodes 22 and 23 from the AC power source 4, then thereby the dielectrophoretic force can be allowed to act on the biological sample, and the biological sample can be introduced into and immobilized to the holding hole 9 at which the electric flux lines are concentrated. Details of the dielectrophoresis will be described later on.

### (Third Embodiment)

Fig. 5 shows the structure and the particle immobilizing apparatus according to the third embodiment. The difference from the structure of the second embodiment shown in Fig. 4 resides in that an upper lid 17 which covers the accommodating unit 45 is provided on the spacer 16. The provision of the upper lid 17 is advantageous in that the water content of the suspension containing the biological sample introduced into the accommodating unit 45 can be prevented from being evaporated and the suspension containing the biological sample can be stably supplied from the introducing port 24 into the accommodating unit 45. The reason why the supply of the suspension is stabilized is considered to be because the flow line of a fluid which flows between the upper lid 17 and the accommodating unit 45 of the spacer 16 easily forms a laminar flow parallel to the plane of the substrate. The upper lid can also be provided for the structure of the first embodiment in order to obtain a similar effect. On the other hand, such a configuration having no upper lid as shown in the first embodiment and the second embodiment is also advantageous in that the effect of simplifying the production and reducing the cost owing to the reduction of the number of parts is obtained, and the operation such as sampling any arbitrary biological sample immobilized to the inside of the holding hole 9 by using a micropipette or the like can easily be performed. Therefore, it is appropriate to select whether or not the upper lid is provided, depending on the way of use and the purpose. In the embodiment in which the upper lid is not provided and in an embodiment in which the upper lid is provided detachably, the suspension containing the biological sample can be directly introduced or discharged from the upper side of the interior of the accommodating unit 45, without providing the introducing port 24 or the like for the spacer 16.

### (Fourth Embodiment)

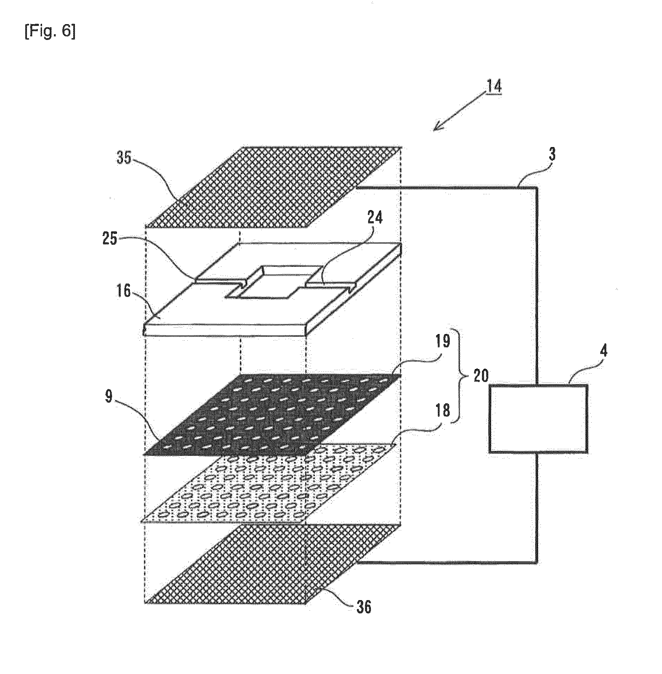

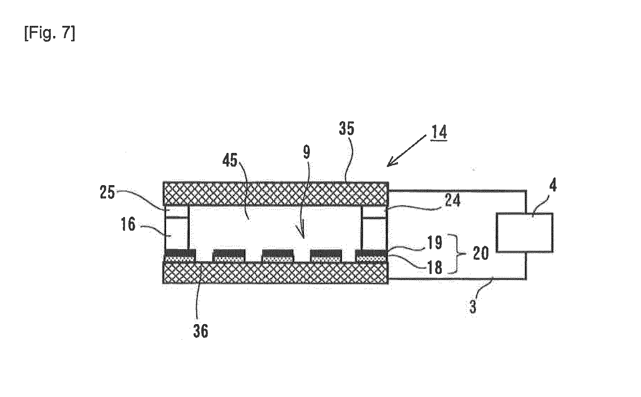

Figs. 6 and 7 show the structure and the particle immobilizing apparatus according to the fourth embodiment. Fig. 6 shows an exploded perspective view to illustrate the layer structure of the structure, and Fig. 7 shows a sectional view of the structure. The structure 14 of the fourth embodiment has a structure in which a lower electrode substrate 36 and an upper electrode substrate 35 are arranged respectively on the lower side and the upper side of the holding unit 20. The lower electrode substrate 36 is composed of the substrate 15 described in the foregoing embodiments, and an electrode layer which is arranged on the holding unit-side surface of the substrate 15 (i.e., between the substrate 15 and the insulator film 18). Reference numeral 15 is omitted from the illustration. The shape of this electrode layer is not limited as long as the electrode layer is formed so as to be exposed to the bottom portion of the holding hole 9. However, the configuration in which the electrode layer is provided on the entire surface of the substrate as shown in Fig. 6 is a preferred form in view of facilitating the production process. On the other hand, as for the upper electrode substrate 35, it is also allowable to adopt such a configuration that the electrode layer is provided on the substrate in the same manner as the lower electrode substrate 36. Alternatively, a plate composed of conductive material(s) can be used as the upper electrode substrate 35. In this embodiment, the upper electrode substrate 35 also serves as the upper lid for covering the accommodating unit 45. In this configuration, when the interior of the accommodating unit 45 is filled with the suspension containing the biological sample, and the AC voltage is applied between the upper electrode substrate 35 and the lower electrode substrate 36 from the power source 4, then thereby the dielectrophoretic force can be allowed to act on the biological sample, and the biological sample can be introduced into and immobilized to the holding hole 9 in which the electric flux lines are concentrated.

Also in the above-described structures according to the second to fourth embodiments, owing to the light shielding film 19 provided so as to cover the upper surface of the holding unit 20, i.e., so as to cover the insulator film 18, it is possible to reduce the light noise such as the background noise and the crosstalk noise when the biological sample is optically observed, and thereby a weak light signal emitted from the biological sample can be detected highly sensitively and highly accurately, in the same manner as described in the first embodiment. In the embodiments described above, the holding unit 20 is formed so that the entire surface of the insulator film 18 is covered with the light shielding film 19. However, it is also allowable to adopt such a configuration that the light shielding film 19 covers a part of the insulator film 18 as long as the light shielding film 19 covers the surroundings of the openings of the holding holes 9. That is, the arrangement of the light shielding film 19 can be appropriately adjusted so that the fluorescence emitted from one holding hole 9 is not disturbed by the fluorescence from other holding hole(s) and/or the autofluorescence of the insulator film 18.

Next, an explanation will be made about embodiments of the structure for particle immobilization according to the second structure.

### (Fifth Embodiment)

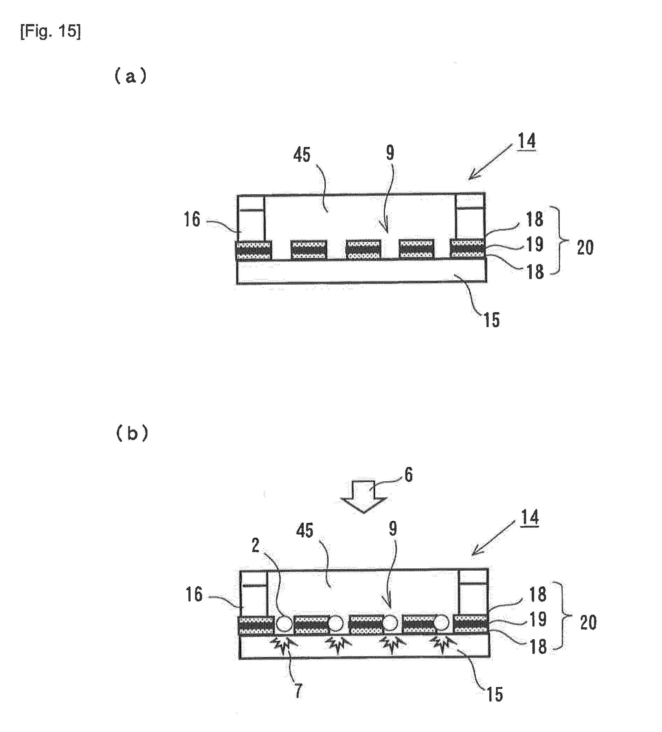

Figs. 14 and 15 schematically show the structure according to the fifth embodiment. Fig. 14(a) shows a plan view of the structure, and Fig. 14(b) shows an exploded perspective view to illustrate the layer structure of the structure. Fig. 15(a) shows a sectional view of Fig. 14(a) along with A-A, and Fig. 15(b) shows a state where biological samples (for example, cells) are immobilized to the structure.

As shown in Figs. 14 and 15, the structure 14 is composed of a flat plate substrate 15, a holding unit 20 which is arranged on the substrate 15, and a spacer 16 for forming, above the holding unit 20, a space (referred to as "accommodating unit" as well) 45 for introducing thereinto a suspension containing the biological sample. The holding unit 20 is composed of a stack of two layers of insulator films 18 and a light shielding film 19. The light shielding film 19 is arranged while being interposed between the two layers of the insulator films 18. The holding unit 20 has a plurality of holding holes (through-holes) 9 which are formed so as to extend to (arrive at) the substrate 15 via the two layers of the insulator films 18 and the light shielding film 19. In this configuration, the holding hole 9 is a bottomed cylindrical hole in which the substrate 15 serves as the bottom surface. The holding hole 9 is formed so as to extend in the film thickness direction of the holding unit 20 (stack of the two layers of the insulator films 18 and the light shielding film 19) from the upper surface of the substrate 15 and be opened for the accommodating unit 45. Only several holding holes 9 are depicted in the drawings for the convenience of the explanation and the illustration of drawings. However, an actual structure is provided with several thousand to several million or several ten million of holding holes 9.

According to the above-described configuration, for example, the suspension containing the biological samples is introduced into the accommodating unit 45 from an introducing port 24 provided for the spacer 16, and the biological samples are sedimented into the holding holes 9 by means of the gravity, and thereby the biological samples 2 can be immobilized to the respective holding holes 9 as shown in Fig. 15(b). After the necessary operation such as the labeling is performed for the structure 14 in which the biological samples 2 are immobilized to the respective holding holes 9, for example, when the excitation light 6 is radiated from the upper side (accommodating unit side) of Fig. 15(b), and the fluorescence 7 is observed from the lower side (substrate side) of Fig. 15(b) through the substrate 15, then the autofluorescence of at least one layer of the insulator film 18 (i.e., the insulator film 18 disposed on the upper side) and the leakage light coming from the adjacent holding hole(s) 9 are shut off by the light shielding film 19. Therefore, it is possible to reduce the light noise such as the background noise and the crosstalk noise. Accordingly, a weak light signal emitted from the labeled substance bound to the biological sample 2 (described later on) can be detected highly sensitively and highly accurately. Even when the fluorescence 7 is observed from the upper side of Fig. 15(b), the autofluorescence of at least one layer of the insulator film 18 (i.e., the insulator film 18 disposed on the lower side) and the leakage light coming from the adjacent holding hole(s) 9 are shut off by the light shielding film 19 in the same manner as described above, and hence, the light signal can be detected highly sensitively and highly accurately.

Next, an explanation will be made about other embodiments of the structure for particle immobilization according to the second structure. In the case of the structure of the fifth embodiment, the particles are introduced into the holding holes in accordance with the action of the gravity. By contrast, the structures of sixth to eighth embodiments described below each adopt such a configuration that the particles are introduced into the holding holes mainly by utilizing the dielectrophoretic force.

### (Sixth Embodiment)

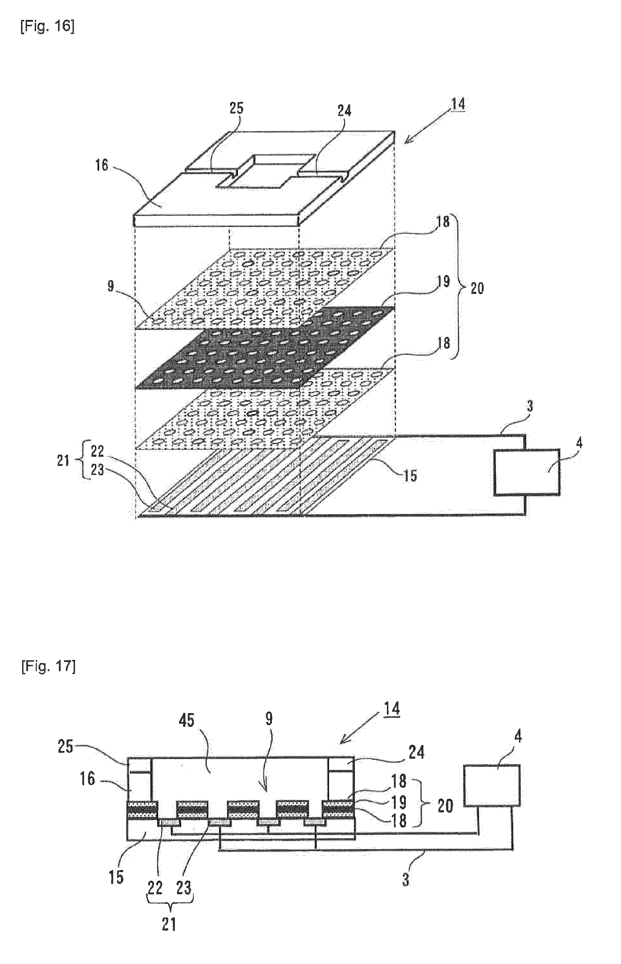

Figs. 16 and 17 schematically show the configuration of the structure and the particle immobilizing apparatus according to the sixth embodiment. Fig. 16 shows an exploded perspective view to illustrate the layer structure of the structure, and Fig. 17 shows a sectional view of the structure. Fig. 17 shows a cross section of the same portion as that corresponding to the A-A line shown in Fig. 14(a) (the same holds for sectional views described later on). The structure 14 of the sixth embodiment has a comb-shaped electrode 21 which is composed of a pair of electrodes 22 and 23 on the holding unit-side surface of the substrate 15. Each of the electrodes 22 and 23 has a plurality of band-shaped electrodes which are arranged in parallel to one another in the direction of arrangement of the holding holes 9. The band-shaped electrodes of one electrode 22 and the band-shaped electrodes of the other electrode 23 are arranged alternately to one another. As shown in Fig. 17, the band-shaped electrodes are provided at positions corresponding to the respective holding holes 9, and the electrodes are exposed at the bottom portions of the respective holding holes 9. The electrodes 22 and 23 are connected to an AC power source 4 via respective conductive lines 3. In this configuration, when the interior of the accommodating unit 45 is filled with the suspension containing the biological sample, and the AC voltage is applied between the electrodes 22 and 23 from the AC power source 4, then thereby the dielectrophoretic force can be allowed to act on the biological sample, and the biological sample can be introduced into and immobilized to the holding hole 9 at which the electric flux lines are concentrated. Details of the dielectrophoresis will be described later on.

### (Seventh Embodiment)

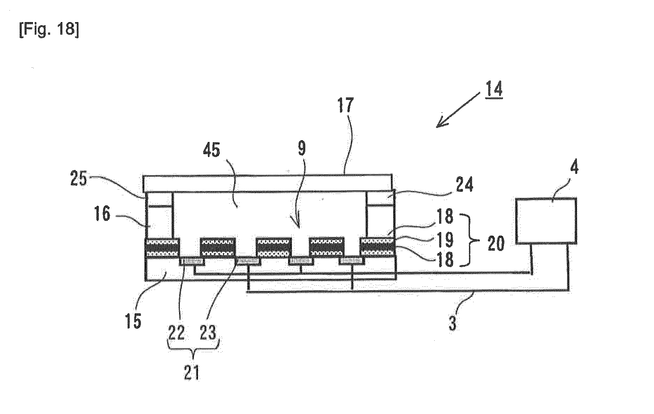

Fig. 18 shows the structure and the particle immobilizing apparatus according to the seventh embodiment. The difference from the structure of the sixth embodiment shown in Fig. 17 resides in that an upper lid 17 which covers the accommodating unit 45 is provided on the spacer 16. The provision of the upper lid 17 is advantageous in that the water content of the suspension containing the biological sample introduced into the accommodating unit 45 can be prevented from being evaporated and the suspension containing the biological sample can be stably supplied from the introducing port 24 into the accommodating unit 45. The reason why the supply of the suspension is stabilized is considered to be because the flow line of a fluid which flows between the upper lid 17 and the introducing port 24 of the accommodating unit 45 easily forms a laminar flow parallel to the plane of the substrate. The upper lid can also be provided for the structure of the fifth embodiment in order to obtain a similar effect. On the other hand, such a configuration having no upper lid as shown in the fifth embodiment and the sixth embodiment is also advantageous in that the effect of simplifying the production and reducing the cost owing to the reduction of the number of parts is obtained, and the operation such as sampling any arbitrary biological sample immobilized to the inside of the holding hole 9 by using a micropipette or the like can easily be performed. Therefore, it is appropriate to select whether or not the upper lid is provided, depending on the way of use and the purpose. In the embodiment in which the upper lid is not provided and in an embodiment in which the upper lid is provided detachably, the suspension containing the biological sample can be directly introduced or discharged from the upper side of the interior of the accommodating unit 45, without providing the introducing port 24 or the like for the spacer 16.

### (Eighth Embodiment)

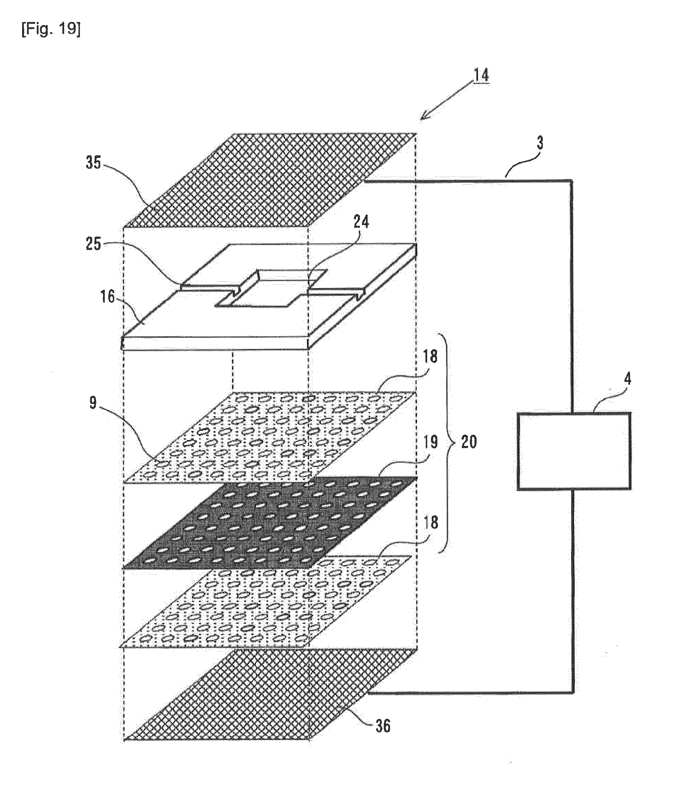

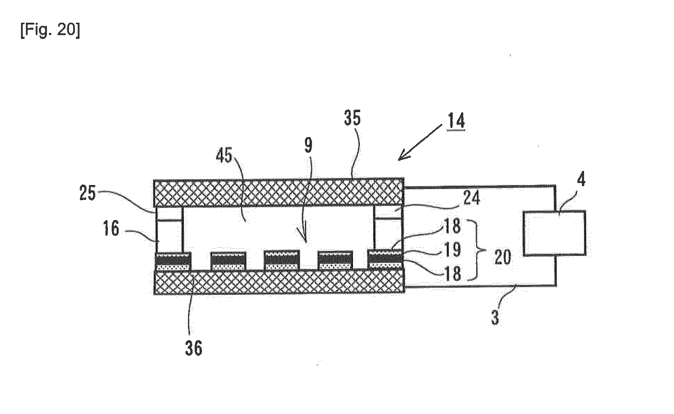

Figs. 19 and 20 show the structure and the particle immobilizing apparatus according to the eighth embodiment. Fig. 19 shows an exploded perspective view to illustrate the layer structure of the structure, and Fig. 20 shows a sectional view of the structure. The structure 14 of the eighth embodiment has a structure in which a lower electrode substrate 36 and an upper electrode substrate 35 are arranged respectively on the lower side and the upper side of the holding unit 20. The lower electrode substrate 36 is composed of the substrate 15 described in the foregoing embodiments, and an electrode layer which is arranged on the holding unit-side surface of the substrate 15 (i.e., between the substrate 15 and the insulator film 18 of the lower side). Reference numeral 15 is omitted from the illustration. The shape of this electrode layer is not limited as long as the electrode layer is formed so as to be exposed to the bottom portion of the holding hole 9. However, the configuration in which the electrode layer is provided on the entire surface of the substrate as shown in Fig. 19 is a preferred form in view of facilitating the production process. On the other hand, as for the upper electrode substrate 35, it is also allowable to adopt such a configuration that the electrode layer is provided on the substrate in the same manner as the lower electrode substrate 36. Alternatively, a plate composed of conductive material(s) can be used as the upper electrode substrate 35. In this embodiment, the upper electrode substrate 35 also serves as the upper lid for covering the accommodating unit 45. In this configuration, when the interior of the accommodating unit 45 is filled with the suspension containing the biological sample, and the AC voltage is applied between the upper electrode substrate 35 and the lower electrode substrate 36 from the power source 4, then thereby the dielectrophoretic force can be allowed to act on the biological sample, and the biological sample can be introduced into and immobilized to the holding hole 9 in which the electric flux lines are concentrated.

Also in the above-described structures according to the sixth to eighth embodiments, owing to the light shielding film 19 provided to be interposed between the two layers of the insulator films 18, it is possible to reduce the light noise such as the background noise and the crosstalk noise when the biological sample is optically observed, and thereby a weak light signal emitted from the biological sample can be detected highly sensitively and highly accurately, in the same manner as described in the fifth embodiment. In particular, when it is intended to form the electric field in order to perform the dielectrophoresis by providing the electrodes, then there is a possibility that a desired electric field can be hardly formed depending on the material of the light shielding film 19 (for example, in the case of a metallic film). However, when the configuration in which the light shielding film 19 is interposed between the two layers of the insulator films 18 is adopted as in the above-described sixth to eighth embodiments, then thereby the light noise is reduced and it is easy to form a desired electric field.

Next, an explanation will be made about embodiments of the structure for particle immobilization according to the third structure.

### (Ninth Embodiment)

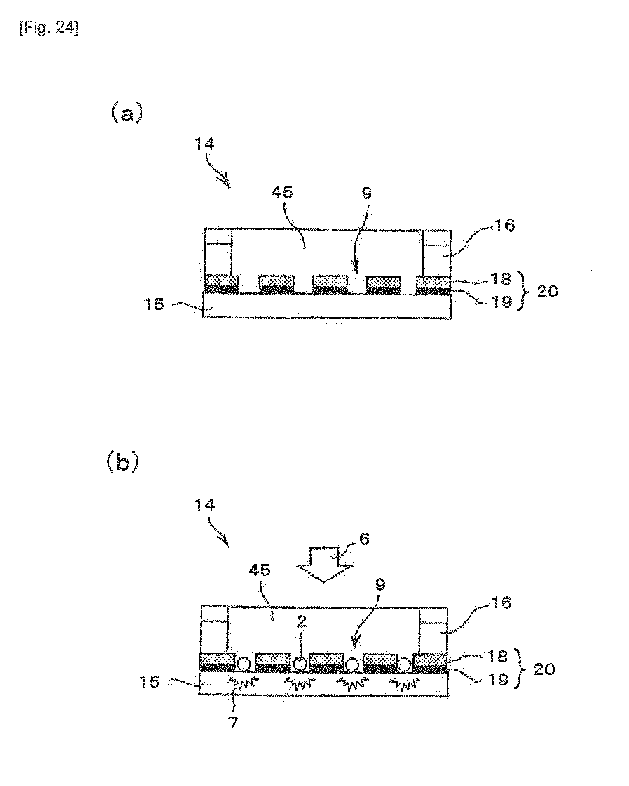

Figs. 23 and 24 schematically show the structure according to the ninth embodiment. Fig. 23(a) shows a plan view of the structure, and Fig. 23(b) shows an exploded perspective view to illustrate the layer structure of the structure. Fig. 24(a) shows a sectional view of Fig. 23(a) along with A-A, and Fig. 24(b) shows a state where biological samples (for example, cells) are immobilized to the structure.

As shown in Figs. 23 and 24, the structure 14 is composed of a flat plate substrate 15, a holding unit 20 which is arranged on the substrate 15, and a spacer 16 for forming, above the holding unit 20, a space (referred to as "accommodating unit" as well) 45 for introducing thereinto a suspension containing the biological sample. The holding unit 20 is composed of a stack of an insulator film 18 and a light shielding film 19. The holding unit 20 has a plurality of holding holes (through-holes) 9 which are formed so as to extend to (arrive at) the substrate 15 via the insulator film 18 and the light shielding film 19. In this configuration, the holding hole 9 is a bottomed cylindrical hole in which the substrate 15 serves as the bottom surface. The holding hole 9 is formed so as to extend in the film thickness direction of the holding unit 20 (stack of the insulator film 18 and the light shielding film 19) from the upper surface of the substrate 15 and be opened for the accommodating unit 45. Only several holding holes 9 are depicted in the drawings for the convenience of the explanation and the illustration of drawings. However, an actual structure is provided with several ten to several million or several ten million of holding holes 9.

According to the above-described configuration, for example, the suspension containing the biological samples is introduced into the accommodating unit 45 from an introducing port 24 provided for the spacer 16, and the biological samples are sedimented into the holding holes 9 by means of the gravity, and thereby the biological samples 2 can be immobilized to the respective holding holes 9 as shown in Fig. 24(b). After the necessary operation such as the labeling is performed for the structure 14 in which the biological sample 2 is immobilized to the respective holding holes 9, for example, when the excitation light 6 is radiated from the upper side (accommodating unit side) as shown in Fig. 24(b), and the fluorescence 7 is observed from the lower side (substrate side) of Fig. 24(b) through the substrate 15, then the autofluorescence of the insulator film 18 and the leakage light coming from the adjacent holding hole(s) 9 are shut off by the light shielding film 19. Therefore, it is possible to reduce the light noise such as the background noise and the crosstalk noise. Accordingly, a weak light signal emitted from the labeled substance bound to the biological sample 2 (described later on) can be detected highly sensitively and highly accurately.

Next, an explanation will be made about other embodiments of the structure for particle immobilization according to the third structure. In the case of the structure of the ninth embodiment, the particles are introduced into the holding holes in accordance with the action of the gravity. By contrast, the structures of tenth to twelfth embodiments described below each adopt such a configuration that the particles are introduced into the holding holes mainly by utilizing the dielectrophoretic force.

### (Tenth Embodiment)

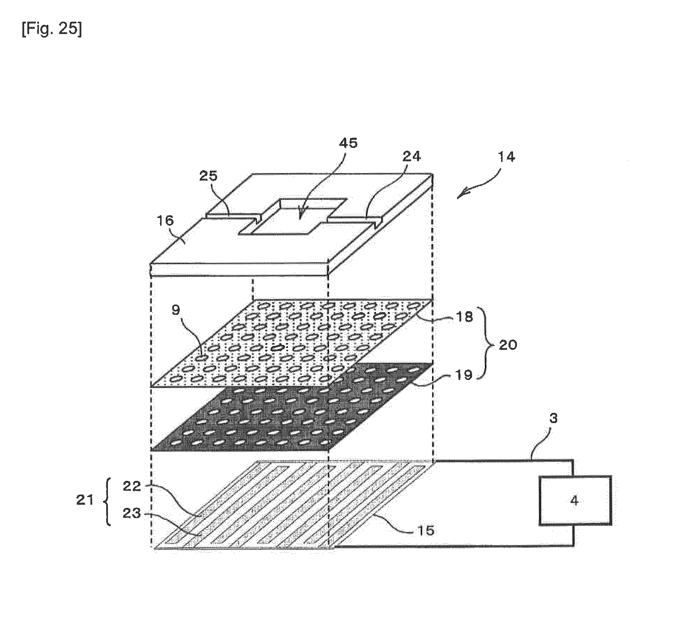

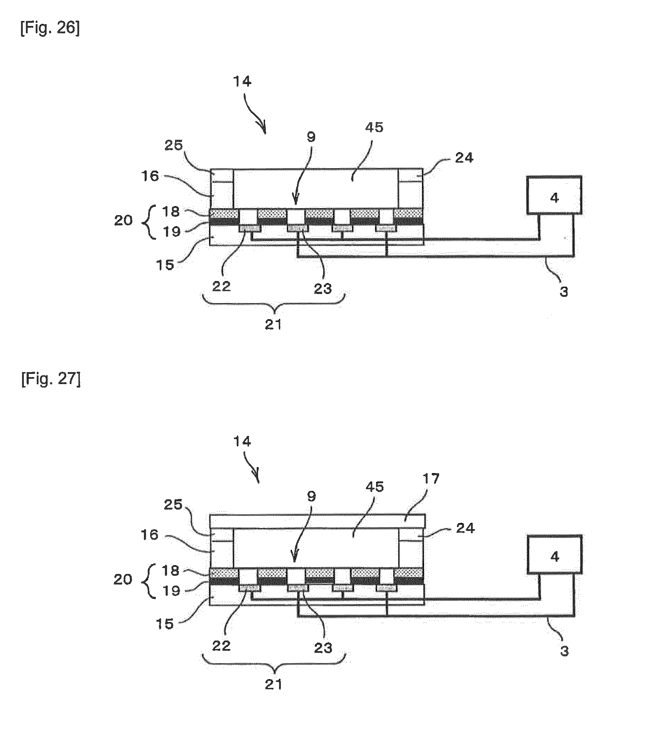

Figs. 25 and 26 schematically show the configuration of the structure and the particle immobilizing apparatus according to the tenth embodiment. Fig. 25 shows an exploded perspective view to illustrate the layer structure of the structure, and Fig. 26 shows a sectional view of the structure. Fig. 26 shows a cross section of the same portion as that corresponding to the A-A line shown in Fig. 23(a) (the same holds for sectional views described later on). The structure 14 of the tenth embodiment has a comb-shaped electrode 21 which is composed of a pair of electrodes 22 and 23 on the holding unit-side surface of the substrate 15. Each of the electrodes 22 and 23 has a plurality of band-shaped electrodes which are arranged in parallel to one another in the direction of arrangement of the holding holes 9. The band-shaped electrodes of one electrode 22 and the band-shaped electrodes of the other electrode 23 are arranged alternately to one another. As shown in Fig. 26, the band-shaped electrodes are provided at positions corresponding to the respective holding holes 9, and the electrodes are exposed at the bottom portions of the respective holding holes 9. The electrodes 22 and 23 are connected to an AC power source 4 via respective conductive lines 3. In this configuration, when the interior of the accommodating unit 45 is filled with the suspension containing the biological sample, and the AC voltage is applied between the electrodes 22 and 23 from the AC power source 4, then thereby the dielectrophoretic force can be allowed to act on the biological sample, and the biological sample can be introduced into and immobilized to the holding hole 9 at which the electric flux lines are concentrated. Details of the dielectrophoresis will be described later on.

### (Eleventh Embodiment)

Fig. 27 shows the structure and the particle immobilizing apparatus according to the eleventh embodiment. The difference from the structure of the tenth embodiment shown in Fig. 26 resides in that an upper lid 17 which covers the accommodating unit 45 is provided on the spacer 16. The provision of the upper lid 17 is advantageous in that the water content of the suspension containing the biological sample introduced into the accommodating unit 45 can be prevented from being evaporated and the suspension containing the biological sample can be stably supplied from the introducing port 24 into the accommodating unit 45. The reason why the supply of the suspension is stabilized is considered to be because the flow line of a fluid which flows between the upper lid 17 and the accommodating unit 45 of the spacer 16 easily forms a laminar flow parallel to the plane of the substrate. The upper lid can also be provided for the structure of the ninth embodiment in order to obtain a similar effect. On the other hand, such a configuration having no upper lid as shown in the ninth embodiment and the tenth embodiment is also advantageous in that the effect of simplifying the production and reducing the cost owing to the reduction of the number of parts is obtained, and the operation such as sampling any arbitrary biological sample immobilized to the inside of the holding hole 9 by using a micropipette or the like can easily be performed. Therefore, it is appropriate to select whether or not the upper lid is provided, depending on the way of use and the purpose. In the embodiment in which the upper lid is not provided and in an embodiment in which the upper lid is provided detachably, the suspension containing the biological sample can be directly introduced or discharged from the upper side of the interior of the accommodating unit 45, without providing the introducing port 24 or the like for the spacer 16.

### (Twelfth Embodiment)

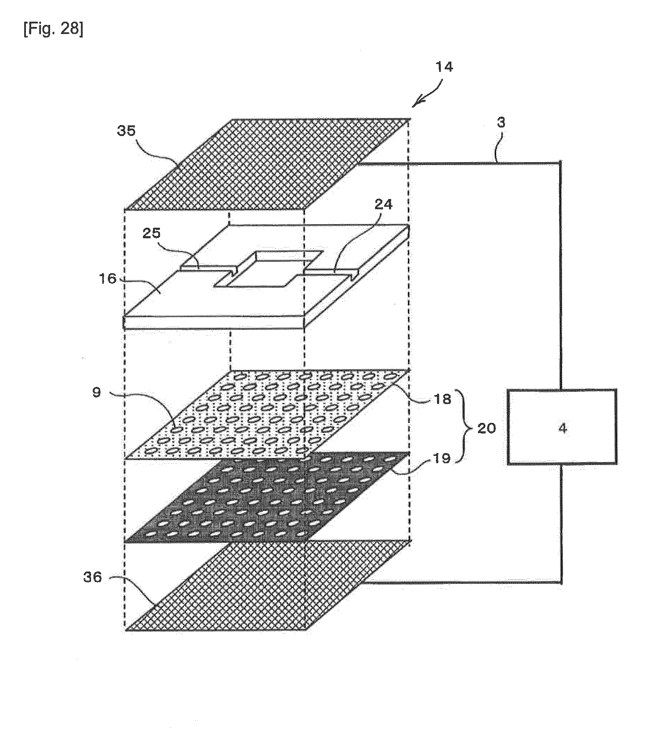

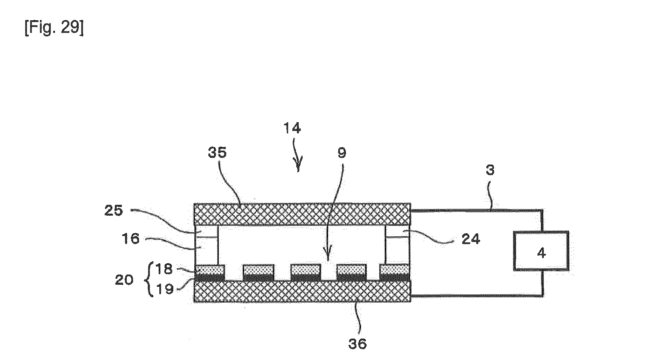

Figs. 28 and 29 show the structure and the particle immobilizing apparatus according to the twelfth embodiment. Fig. 28 shows an exploded perspective view to illustrate the layer structure of the structure, and Fig. 29 shows a sectional view of the structure. The structure 14 of the twelfth embodiment has a structure in which a lower electrode substrate 36 and an upper electrode substrate 35 are arranged respectively on the lower side and the upper side of the holding unit 20. The lower electrode substrate 36 is composed of the substrate 15 described in the foregoing embodiments, and an electrode layer which is arranged on the holding unit-side surface of the substrate 15 (i.e., between the substrate 15 and the light shielding film 19). Reference numeral 15 is omitted from the illustration. The shape of this electrode layer is not limited as long as the electrode layer is formed so as to be exposed to the bottom portion of the holding hole 9. However, the configuration in which the electrode layer is provided on the entire surface of the substrate as shown in Fig. 28 is a preferred form in view of facilitating the production process. On the other hand, as for the upper electrode substrate 35, it is also allowable to adopt such a configuration that the electrode layer is provided on the substrate in the same manner as the lower electrode substrate 36. Alternatively, a plate composed of conductive material(s) can be used as the upper electrode substrate 35. In this embodiment, the upper electrode substrate 35 also serves as the upper lid for covering the accommodating unit 45. In this configuration, when the interior of the accommodating unit 45 is filled with the suspension containing the biological sample, and the AC voltage is applied between the upper electrode substrate 35 and the lower electrode substrate 36 from the power source 4, then thereby the dielectrophoretic force can be allowed to act on the biological sample, and the biological sample can be introduced into and immobilized to the holding hole 9 in which the electric flux lines are concentrated.

Also in the above-described structures according to the tenth to twelfth embodiments, owing to the light shielding film 19 provided between the insulator film 18 and the substrate 15, it is possible to reduce the light noise such as the background noise and the crosstalk noise when the biological sample is optically observed, and thereby a weak light signal emitted from the biological sample can be detected highly sensitively and highly accurately, in the same manner as described in the ninth embodiment.

Next, an explanation will be made about embodiments of the structure for particle immobilization according to the fourth structure.

### (Thirteenth Embodiment)

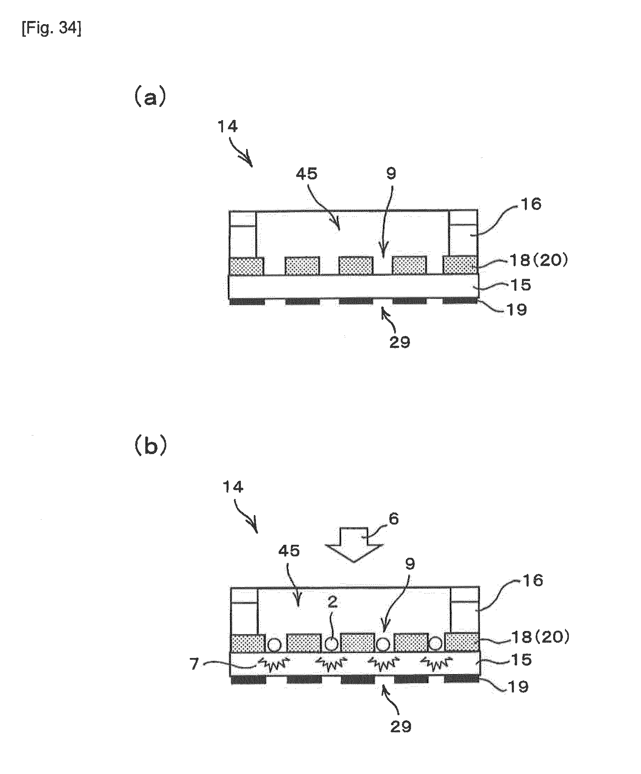

Figs. 33 and 34 schematically show a structure according to a thirteenth embodiment. Fig. 33(a) shows a plan view of the structure, and Fig. 33(b) shows an exploded perspective view to illustrate the layer structure of the structure. Fig. 34(a) shows a sectional view of Fig. 33(a) along with A-A, and Fig. 34(b) shows a state where biological samples (for example, cells) are immobilized to the structure.

As shown in Figs. 33 and 34, the structure 14 is composed of a light-transmissive flat plate substrate 15, a holding unit 20 which is arranged on a first surface (upper surface in the drawing) of the substrate 15, a light shielding film 19 which is arranged on the second surface (lower surface in the drawing) of the substrate 15, and a spacer 16 for forming, above the holding unit 20, a space (referred to as "accommodating unit" as well) 45 for introducing thereinto a suspension containing the biological sample. The holding unit 20 is composed of an insulator film 18. The holding unit 20 has a plurality of holding holes (through-holes) 9 which are formed so as to extend to (arrive at) the substrate 15 while penetrating through the insulator film 18. In this configuration, the holding hole 9 is a bottomed cylindrical hole in which the first surface of the substrate 15 serves as the bottom surface. The holding hole 9 is formed so as to extend in the film thickness direction of the holding unit 20 (insulator film 18) from the first surface of the substrate 15 and be opened for the accommodating unit 45. Only several holding holes 9 are depicted in the drawings for the convenience of the explanation and the illustration of drawings. However, an actual structure is provided with several thousand to several million or several ten million of holding holes 9. On the other hand, the light shielding film 19 is provided with openings 29 at positions corresponding to the respective holding holes 9, which openings allow the second surface of the substrate 15 to be exposed. That is, the holding holes 9 and the openings 29 are arranged at the positions just corresponding to one another with the light-transmissive substrate 15 intervening therebetween.

According to the above-described configuration, for example, the suspension containing the biological samples is introduced into the accommodating unit 45 from an introducing port 24 provided for the spacer 16, and the biological samples are sedimented into the holding holes 9 by means of the gravity, and thereby the biological samples 2 can be immobilized to the respective holding holes 9 as shown in Fig. 34(b). After the necessary operation such as the labeling is performed for the structure 14 in which the biological sample 2 is immobilized to the respective holding holes 9, when the excitation light 6 is radiated from the upper side (accommodating unit side) of Fig. 34(b), and the fluorescence 7 is observed from the lower side (substrate side) of Fig. 34(b) through the opening 29 and the substrate 15, then the autofluorescence of the insulator film 18 and the leakage light coming from the adjacent holding hole(s) 9 are shut off by the light shielding film 19. Therefore, it is possible to reduce the light noise such as the background noise and the crosstalk noise. Accordingly, a weak light signal emitted from the labeled substance bound to the biological sample 2 (described later on) can be detected highly sensitively and highly accurately.

Next, an explanation will be made about other embodiments of the structure for particle immobilization according to the fourth structure. In the case of the structure of the thirteenth embodiment, the particles are introduced into the holding holes in accordance with the action of the gravity. By contrast, the structures of fourteenth to sixteenth embodiments described below each adopt such a configuration that the particles are introduced into the holding holes mainly by utilizing the dielectrophoretic force.

### (Fourteenth Embodiment)

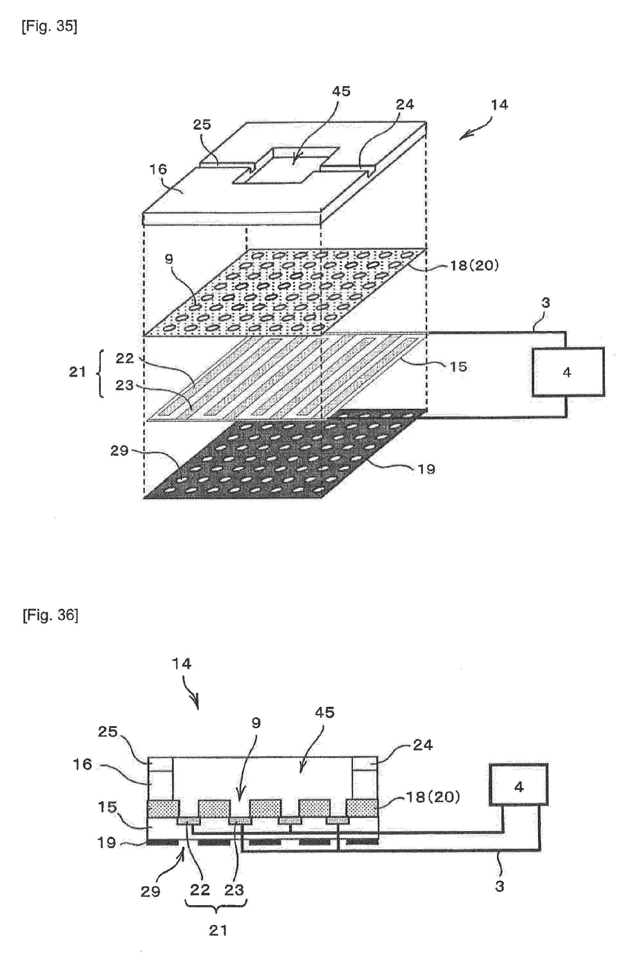

Figs. 35 and 36 schematically show the configuration of the structure and the particle immobilizing apparatus according to the fourteenth embodiment. Fig. 35 shows an exploded perspective view to illustrate the layer structure of the structure, and Fig. 36 shows a sectional view of the structure. Fig. 36 shows a cross section of the same portion as that corresponding to the A-A line shown in Fig. 33(a) (the same holds for sectional views described later on). The structure 14 of the fourteenth embodiment has a comb-shaped electrode 21 which is composed of a pair of transparent electrodes 22 and 23 on the holding unit-side surface of the substrate 15. Each of the electrodes 22 and 23 has a plurality of band-shaped electrodes which are arranged in parallel to one another in the direction of arrangement of the holding holes 9. The band-shaped electrodes of one electrode 22 and the band-shaped electrodes of the other electrode 23 are arranged alternately to one another. As shown in Fig. 36, the band-shaped electrodes are provided at positions corresponding to the respective holding holes 9, and the electrodes are exposed at the bottom portions of the respective holding holes 9. The electrodes 22 and 23 are connected to an AC power source 4 via respective conductive lines 3. In this configuration, when the interior of the accommodating unit 45 is filled with the suspension containing the biological sample, and the AC voltage is applied between the electrodes 22 and 23 from the AC power source 4, then thereby the dielectrophoretic force can be allowed to act on the biological sample, and the biological sample can be introduced into and immobilized to the holding hole 9 at which the electric flux lines are concentrated. Details of the dielectrophoresis will be described later on.

### (Fifteenth Embodiment)

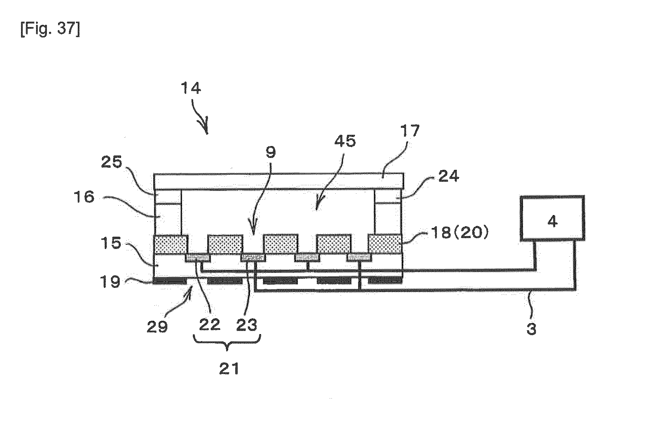

Fig. 37 shows the structure and the particle immobilizing apparatus according to the fifteenth embodiment. The difference from the structure of the fourteenth embodiment shown in Fig. 36 resides in that an upper lid 17 which covers the accommodating unit 45 is provided on the spacer 16. The provision of the upper lid 17 is advantageous in that the water content of the suspension containing the biological sample introduced into the accommodating unit 45 can be prevented from being evaporated and the suspension containing the biological sample can be stably supplied from the introducing port 24 into the accommodating unit 45. The reason why the supply of the suspension is stabilized is considered to be because the flow line of a fluid which flows between the upper lid 17 and the accommodating unit 45 of the spacer 16 easily forms a laminar flow parallel to the plane of the substrate. The upper lid can also be provided for the structure of the thirteenth embodiment in order to obtain a similar effect. On the other hand, such a configuration having no upper lid as shown in the thirteenth embodiment and the fourteenth embodiment is also advantageous in that the effect of simplifying the production and reducing the cost owing to the reduction of the number of parts is obtained, and the operation such as sampling any arbitrary biological sample immobilized to the inside of the holding hole 9 by using a micropipette or the like can easily be performed. Therefore, it is appropriate to select whether or not the upper lid is provided, depending on the way of use and the purpose. In the embodiment in which the upper lid is not provided and in an embodiment in which the upper lid is provided detachably, the suspension containing the biological sample can be directly introduced or discharged from the upper side of the interior of the accommodating unit 45, without providing the introducing port 24 or the like for the spacer 16.

### (Sixteenth Embodiment)

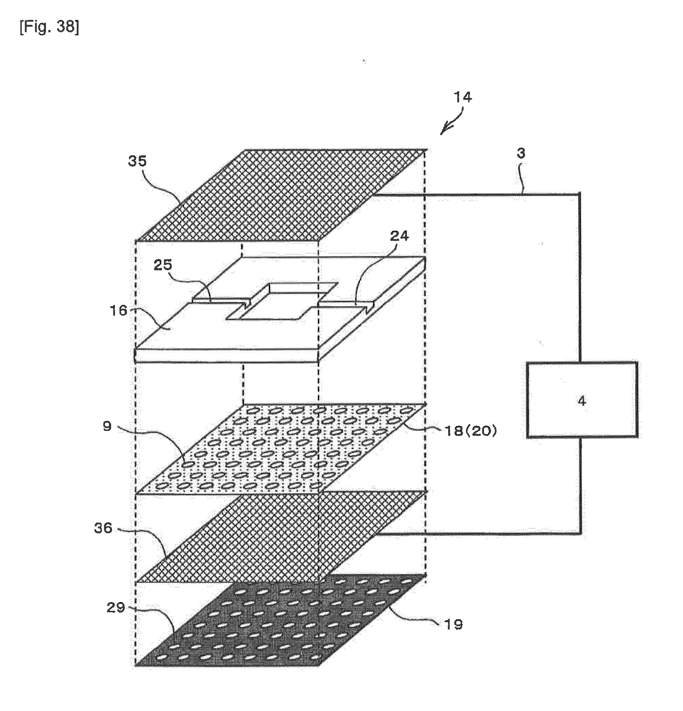

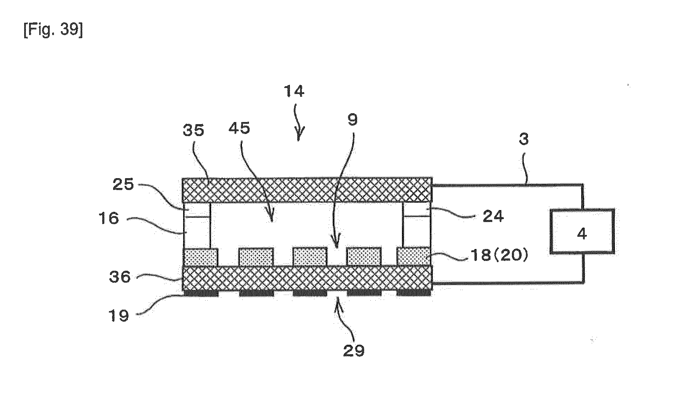

Figs. 38 and 39 show the structure and the particle immobilizing apparatus according to the sixteenth embodiment. Fig. 38 shows an exploded perspective view to illustrate the layer structure of the structure, and Fig. 39 shows a sectional view of the structure. The structure 14 of the sixteenth embodiment has a structure in which a lower electrode substrate 36 and an upper electrode substrate 35 are arranged respectively on the lower side and the upper side of the holding unit 20. The lower electrode substrate 36 is composed of the substrate 15 described in the foregoing embodiments, and a transparent electrode layer which is arranged on a first surface of the substrate 15 (i.e., between the substrate 15 and the holding unit 20). Reference numeral 15 is omitted from the illustration. The shape of this electrode layer is not limited as long as the electrode layer is formed so as to be exposed to the bottom portion of the holding hole 9. However, the configuration in which the electrode layer is provided on the entire surface of the substrate as shown in Fig. 38 is a preferred form in view of facilitating the production process. On the other hand, as for the upper electrode substrate 35, it is also allowable to adopt such a configuration that the electrode layer is provided on the substrate in the same manner as the lower electrode substrate 36. Alternatively, a plate composed of conductive material(s) can be used as the upper electrode substrate 35. In this embodiment, the upper electrode substrate 35 also serves as the upper lid for covering the accommodating unit 45. In this configuration, when the interior of the accommodating unit 45 is filled with the suspension containing the biological sample, and the AC voltage is applied between the upper electrode substrate 35 and the lower electrode substrate 36 from the power source 4, then thereby the dielectrophoretic force can be allowed to act on the biological sample, and the biological sample can be introduced into and immobilized to the holding hole 9 in which the electric flux lines are concentrated.

Also in the above-described structures according to the fourteenth to sixteenth embodiments, owing to the light shielding film 19 provided on the second surface of the substrate 15, it is possible to reduce the light noise such as the background noise and the crosstalk noise when the biological sample is optically observed, and thereby a weak light signal emitted from the biological sample can be detected highly sensitively and highly accurately, in the same manner as described in the thirteenth embodiment.

When the accommodating unit 45 has a hermetically sealable box form, and the specific gravity of the suspension containing the biological sample is not less than the specific gravity of the biological sample so that the biological sample floats in the upward direction in the suspension (even when the specific gravity of the biological sample is large, it is easy to allow the specific gravity of the suspension to be not less than the specific gravity of the biological sample), then it is possible to adopt such a configuration that a holding unit 20 which has holding holes 9 opened downwardly is provided above the accommodating unit 45. This provides a structure having a configuration in which the structure of the third, fourth, seventh, eighth, eleventh, twelfth, fifteenth, or sixteenth embodiment is inverted upside down. However, in view of the fact that the gravity can also be utilized for the manipulation of the biological sample, the separate recovery of the biological sample after the immobilization, and the separate recovery of the gene eluted from the biological sample by means of the extraction, it is preferable that the holding unit 20 is arranged below the accommodating unit 45 and further it is preferable that the upper lid 17 of the accommodating unit 45 and the upper electrode substrate 35 are configured to be detachable from the spacer 16, in order that that such an operation can be carried out in accordance with an extremely simple operation such as suction from an upward position.

### <Explanation of Constitutive Members>

Next, an explanation will be made in detail about the respective constitutive members (components) of the above-described structure 14 for particle immobilization.
The configuration other than the arrangement of the light shielding film (for example, the shape, the size (dimensions), the material, the characteristics, and the production method, of each of the members) can be commonly provided in the first to fourth structures, unless otherwise particularly restricted. Therefore, the specific configuration explained below can be applied to any structure 14 having any one of the first to fourth structures, unless otherwise stated.

### (Substrate and Electrode)

As the material for the substrate 15, acrylic resin, epoxy resin, synthetic silica (synthetic quarts) (SiO₂) containing a main component of silicon oxide, ceramics, and metallic materials, and so forth, can be utilized. In particular, Pyrex glass (registered trademark), which contains main components of silicon oxide and boron oxide and has both of satisfactory processing performance and low coefficient of thermal expansion can be exemplified as a preferred member. When the rigidity required for the structure is secured by member(s) (for example, the spacer 16 or the like) other than the substrate 15, it is also possible to use paper subjected to the water repelling processing, protein sheet, or the like as the material for the substrate 15.

The material of the electrode provided on the substrate surface is not particularly limited as long as the material has the conductivity and the material is chemically stable. It is possible to use, for example, metal such as platinum, gold, and copper, alloy such as stainless steel, and transparent conductive material such as ZnO (zinc oxide), SnO (tin oxide), and ITO (Indium Tin Oxide), and the like. When the light emitted from the labeled substance in the holding hole 9 is observed through the electrode substrate, it is appropriate that the electrode composed of transparent conductive material(s) is provided on the light-transmissive substrate such as glass. In particular, the ITO electrode is an especially preferable electrode material in view of the transparency thereof, the film formation performance thereof, or the like.

The method for optically observing the labeled substance in the holding hole 9 includes those of the two types, i.e., the "transmission type" and the "reflection type". The transmission type refers to a method in which the light is radiated from the side of one of the bottom portion and the opening of the holding hole 9 and the light is observed (detected) from the opposite side thereto. The reflection type refers to a method in which the light is radiated from the side of one of the bottom portion and the opening of the holding hole 9 and the light is observed (detected) from the same side. Any one of the methods can be utilized herein. However, in the case of the reflection type, both of the light radiating means and the light detecting means should be installed on the same side with respect to the structure 14, and hence, the restriction regarding the apparatus configuration arises as compared with the case of the transmission type. Therefore, the transmission type is advantageous in view of the simplification of the apparatus configuration. When the "reflection type" is adopted, the substrate 15 and the electrode each can be composed of light-transmissive material(s) or non-light-transmissive material(s). By contrast, when the "transmission type" is adopted, it is preferable that the substrate 15 and the electrode each are composed of light-transmissive material(s). The same number of the light detecting means as the number of the holding holes can be provided. Or, in order to improve the maintenance and the operability by simplifying the apparatus configuration, it is preferable that a smaller number of the light detecting means than the number of the holding holes is/are provided, and the light detecting means is/are driven by appropriate actuator(s) to perform the scanning of the respective holding holes. Alternatively, it is also preferable that the lights coming from the plurality of holding holes are collectively detected by using light detecting means such as an image scanner.

### (Light Shielding Film)

The light shielding film 19 is provided so as to surround the holding holes 9. Specifically, in the case of the first structure, the light shielding film 19 is provided at the portion other than the holding holes 9, of the upper surface of the holding unit 20. In the case of the second structure, the light shielding film 19 is provided at the portion other than the holding holes 9 at the intermediate layer interposed between the two layers of the insulator films 18. In the case of the third structure, the light shielding film 19 is provided at the portion other than the holding holes 9, of the boundary surface between the insulator film 18 and the substrate 15. In the case of the fourth structure, the light shielding film 19 is provided at the portion other than the area corresponding to the holding holes 9, of the second surface (lower surface) of the substrate 15. When the arrangement is made as described above, then the light emitted from the inside of the holding hole is not shut off by the light shielding film, and hence, it is possible to avoid the decrease in the detection intensity of the light emitted from the labeled substance. Further, the light can be observed not only from the opening side of the holding hole 9 but also through the substrate 15 from the bottom surface side of the holding hole 9. Preferably, as shown in the drawings, in the case of the first to third structures, it is appropriate that the light shielding film 19 is provided at the entire portion except for the holding holes 9. In the case of the fourth structure, it is appropriate that the light shielding film 19 is provided so as to cover the entire area other than the area corresponding to the holding holes 9, of the second surface (lower surface) of the substrate 15. Further, it is preferable that the size of the opening 29 of the light shielding film 19 is the same as or smaller than the area corresponding to the holding hole 9. Accordingly, the light noise generated from a portion other than the holding hole can be removed as much as possible.

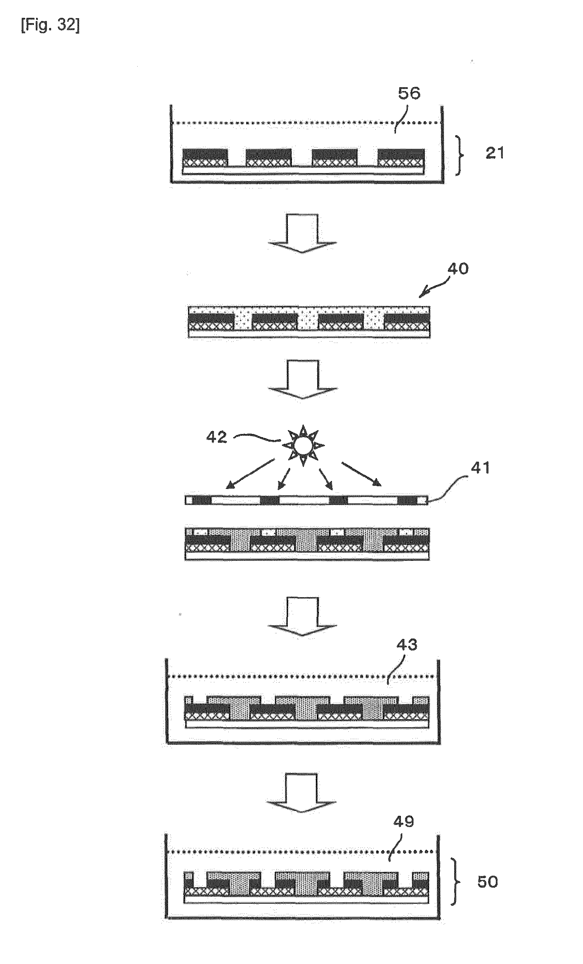

When the optical observation based on the above-described reflection type is performed in the third structure, if the light is radiated from the opening side of the holding hole 9 and the light is observed (detected) on the same side, then the light shielding film 19 can also be provided at the holding hole 9 (substrate surface portion to which the holding hole 9 extends). However, in the case of the configuration in which a pair of electrodes is provided on the substrate 15 as shown in Fig. 25, it is necessary that non-conductive material(s) is/are selected as the material for the light shielding film 19. This is to avoid a short circuit between the pair of electrodes due to the light shielding film 19. When a conductive material such as a metallic film is utilized as the light shielding film 19 in the configuration in which the pair of electrodes is provided on the substrate 15, it is appropriate that the light shielding film 19 is provided only on the electrodes at the portions other than the holding holes (see Fig. 32). Accordingly, it is possible to avoid the short circuit between the electrodes.

In the fourth structure, the shape, the size (dimensions), the position, the arrangement, and so forth, of the opening 29 of the light shielding film 19 can be appropriately designed in accordance with the shape, the size (dimensions), the position, the arrangement, and so forth, of the holding hole 9 of the holding unit 20. However, when the optical observation based on the above-described reflection type is performed, if the light is radiated from the opening side of the holding hole 9 and the light is observed (detected) on the same side, then the light shielding film 19 can also be provided at the holding hole 9 (substrate surface portion to which the holding hole 9 extends).

As the material for the light shielding film 19, it is appropriate to use a material having sufficient light shielding performance with respect to the light having a wavelength emitted from the labeled substance (for example, light having a wavelength of 380 nm to 780 nm in the case of the visible light). It is possible to utilize metallic materials, carbon-based materials, ceramics, resins, and so forth. In particular, it is preferable to use metallic materials such as metals such as chromium (Cr), titanium (Ti), platinum (Pt), niobium (Nb), tantalum (Ta), tungsten (W), aluminum (Al), and gold (Au), and metal oxides. In particular, it is preferable to use chromium (Cr), which has the high light shielding performance and which has the high tight contact performance with respect to the substrate 15 and the insulator film 18. The thickness of the light shielding film can be appropriately set depending on the material. In the case of the metallic film such as chromium (Cr), the film thickness thereof is preferably within a range of 50 nm to 10 µm, or especially preferably not less than 100 nm, wherein the sufficient light shielding performance is obtained. The same holds for other metallic films. In the case of the metallic film, it is possible to perform the film formation and the formation of holes by means of the general photolithography and the etching. In the case of the ceramics, for example, it is conceived that the processing is performed by means of the spray, the sticking, or the like. Alternatively, a resin or a film, for which holes are preliminarily formed by means of the machining, can be stuck to the substrate. When the insulator film 18 is a light shielding member or a member subjected to the light shielding treatment, then the insulator film 18 can also serve as the light shielding film.

### (Insulator Film)

The reason why a part of the holding unit 20 is composed of insulator material(s) and the electrode is exposed on the bottom portion of the holding hole 9 is that it is intended to concentrate the electric flux lines on the holding hole 9 when the AC voltage is applied to the electrodes so that the biological sample is moved and immobilized to the holding hole. As described above, when only the spontaneous sedimentation (gravity) is utilized to introduce the test particles into the holding holes, the insulator film is unnecessary as well, because it is unnecessary to provide the electrode.

As the material for the insulator film 18, it is possible to utilize materials having the insulation performance, for example, silicone rubber, resist, cross-linkable polymers such as resins, ceramics, glass, water-repellent paper, and so forth. In the following description, the insulator film which is composed of cross-linkable polymer(s) is referred to as "polymer film" in some cases. It is preferable that the insulator film is composed of insulating material(s) which has/have the affinity for the test particle, because the test particle is attracted and immobilized to the holding hole 9 provided for the insulator film 18. As the insulator film having the affinity for the test particle, a hydrophilic insulator film is preferred when the test particle is hydrophilic, while a hydrophobic insulator film is preferred when the test particle is hydrophobic. The criterion for the affinity is generally represented by the contact angle between the surface of the insulator film and the liquid droplet formed when a liquid having the affinity approximate to that of the test particle is dripped onto the surface of the insulator film (the smaller the contact angle is, the higher the affinity between the liquid and the surface of the insulator film is, while the larger the contact angle is, the lower the affinity between the liquid and the surface of the insulator film is). Examples of the polymer film having relatively high hydrophilicity can include polyethylene glycol-based polymers, glass, and titanium oxide. Examples of the polymer film having relatively high hydrophobicity can include epoxy resin, polystyrene, polyimide, and Teflon (registered trademark). In particular, an epoxy resin to which the photosensitivity with respect to the ultraviolet light is imparted is preferred. Further, SU-8 3000 Series (Kayaku Microchem Co., Ltd.), which makes it possible to manufacture the structure at a high aspect ratio, is preferred.

Even when an insulator film which has the low affinity for the test particle is required to be used, it is possible to enhance the affinity between the insulator film and the test particle by modifying the surface of the insulator film. As the method for making the hydrophobic polymer film such as the resin to be hydrophilic, it is appropriate to use any known method such as the plasma treatment and the modification based on the physical adsorption of protein, any method in which these methods are arbitrarily combined, or the like. In this context, the plasma treatment of the polymer film surface refers to a treatment in which the electrically neutral ionization gas (plasma) in which the active species such as electrons, ions, and radicals are present is radiated onto the surface of the polymer film, and thereby an organic contaminant is removed and/or the chemical bonding state is changed on the surface of the polymer film, so that the surface of the polymer film is made hydrophilic. Also in this context, as for the modification based on the physical adsorption of protein or the like, for example, the polymer film is immersed for several minutes to several hours in a solution containing a protein such as BSA (bovine serum albumin), and thereby the protein can be physically adsorbed, so that the surface of the polymer film can be made hydrophilic. As the method for making a hydrophilic polymer film such as polyethylene glycol diacrylate polymer to be hydrophobic, it is appropriate to use a method based on the chemical modification in which a silane coupling agent is bonded to a hydrophilic polymer surface. The silane coupling agent is a compound which is composed of an organic matter and silicon and which has, in the molecule, two or more types of different reactive groups, i.e., a reactive group that exhibits the hydrophilicity (such as hydroxyl group, carboxyl group, amino group, and sulfon group) and a reactive group that exhibits the hydrophobicity (such as vinyl group, methyl group, ethyl group, and propyl group). Therefore, when a hydrophilic polymer film is immersed in a dilute solution of the silane coupling agent, then the reactive group which exhibits the hydrophilicity, of the silane coupling agent, is chemically bonded to the surface of the hydrophilic material, thereby the reactive group which exhibits the hydrophobicity covers the surface, and hence, the surface of the hydrophobic material can be uniformly made hydrophobic with ease.

As the method for evaluating the hydrophilicity or the hydrophobicity, it is possible to use the following general technique. That is, pure water is dripped onto the polymer film, then the contact angle between the surface of the polymer film and the liquid droplet formed on the surface of the polymer film at that time is measured, and thus the hydrophilicity and the hydrophobicity of the surface of the polymer film are evaluated. Any strict definition for the hydrophilicity and the hydrophobicity is absent.
Therefore, in the present invention, the hydrophilicity is defined as the case of the contact angle of not more than 50°, or preferably not more than 40°, while the hydrophobicity is defined as the case of the contact angle of larger than 50°, or preferably larger than 60°.
Further, the contact angle is measured by using the θ/2 method, in which the contact angle is calculated from the angle of the straight line to connect the left or right end point and the apex of the liquid droplet dripped onto the substrate with respect to the solid surface.

### (Holding Holes)

In order to form the holding holes (through-holes) 9 at the holding unit 20, it is possible to adopt various methods depending on the types of the insulator film 18 and the light shielding film 19. For example, in order to form the holding holes 9, it is possible to use any known method such as a method in which the laser is radiated and a method in which the holding unit 20 is molded by using a mold having pins for forming the holding holes 9. Also, when a light curing resin (photo-curing resin) or the like is used, the holding holes 9 can be formed by means of the general photolithography (exposure) and the etching (development) by using a photomask for exposure drawn with a pattern corresponding to the holding holes 9. When the holding holes are formed through the light shielding film 19 composed of metallic material(s), it is possible to adopt a method in which an insulator film, a part of which is selectively removed, is used as an etching mask to selectively remove a part of the light shielding film by means of the isotropic wet etching.

In the embodiment described above, the holding hole 9 having the cylindrical shape is exemplified. However, the shape of the holding hole 9 is not limited thereto. For example, the planar (opening) shape of the holding hole 9 can also be an elliptical shape, a polygonal shape, or the like (including polygons having round corners). It is also preferable to adopt such a shape that the diameter (width) of the holding hole 9 is increased from the bottom portion toward the opening in a stepwise manner or continuously.

It is preferable to adopt such a configuration that the plurality of holding holes 9 are arranged regularly in the plane of the holding unit 20. Specifically, it is preferable that the plurality of holding holes 9 are arranged in an array form. The "array form" in a narrow sense means that the holding holes are arranged at equal intervals two-dimensionally in rows and columns. However, in the present invention, a configuration in which the holding holes are arranged at equal intervals one-dimensionally only in the row direction (lateral direction) or in the column direction (vertical direction) is also expressed as the array form. When the holding holes are arranged in the array form as described above, the electric field generated by the voltage applied between the electrodes is generated approximately equivalently for all of the holding holes, and thereby biological samples can be identically induced and immobilized to all of the holding holes. In addition, when the biological samples are arranged regularly in the array form, it is easy to individually detect and analyze the light signal of the corresponding labeled substance. Further, when the biological samples are arranged regularly in the array form, such an advantage is also obtained that the number or the ratio of the samples having a specific property can be quantitatively evaluated from all of the immobilized samples, and the position (address) on the substrate of the sample from which a specific light signal is detected can be easily identified. In order to easily manipulate the sample positioned at the specific address on the substrate after performing the optical detection, it is preferable to provide storage means which stores the information of the light signal detected from each of the holding holes and the position information while relating them to one another.

### (Spacer)

The spacer 16 which constitutes the accommodating unit 45 is provided to secure the space for holding (retaining) the suspension of the biological sample. The spacer 16 can be constructed by using, for example, a material of an insulator such as glass, ceramics, and resins. Alternatively, as long as such a configuration that the upper electrode substrate 35 and the lower electrode substrate 36 are not in electric conduction is adopted, the spacer 16 can be constructed by using a material of a conductor such as metals. For example, a quick curing type adhesive agent is allowed to flow into a mold for the spacer arranged on the holding unit 20 so that the adhesive agent is cured, and thereby it is possible to simultaneously perform the formation and the lamination of the spacer 16. Alternatively, the spacer 16 which was formed as a distinct component can be adhered to the holding unit 20 with an adhesive agent, or can be fused to the holding unit 20 by applying the heat and the pressure. Further alternatively, a resin which has the surface stickiness, such as PDMS (poly-dimethylsiloxane) or silicon sheet, can be used to manufacture the spacer 16, and thus the spacer 16 can be stuck with the holding unit 20 under the pressure. The accommodating unit 45 is constructed by the spacer. However, the shape thereof need not be quadrangular as shown in the first to fourth embodiments, and it is possible to adopt various shapes such as circular, elliptic, and rhombus shapes. The spacer can be provided with the introducing port and the discharge port (24, 25) for introducing and discharging the suspension. However, when the suspension is directly introduced from the upper side of the accommodating unit 45, it is unnecessary to provide the introducing port and the discharge port. The introducing port and the discharge port need not be provided in a straight form at the opposing positions as shown in the first to fourth embodiments. Also, for example, when a box which is insulative by itself is prepared, and the structure is arranged on an inner bottom surface of the box, then thereby the accommodating unit 45 can be constructed without using the spacer. In this form, for example, a structure provided with one of the pair of electrodes can be arranged on the inner bottom surface of the above-described box, and further, the other electrode, which forms the counterpart, can be arranged on the inner upper surface, or the upper surface itself of the above-described box can serve as the other electrode.

In the above-described embodiment, the spacer 16 is provided with the introducing flow passage; the introducing port 24 communicated with the introducing flow passage; the discharge flow passage for discharging the suspension; and the discharge port 25 communicated with the discharge flow passage, so that the supply and the discharge of the biological sample suspension to be fed to the apparatus can be quickly carried out. The size (dimensions) and the shape of the spacer 16 and the inner space and the thickness of the spacer can be determined in relation to the amount of the suspension to be accommodated in the accommodating unit, and are not specifically limited. It is usually appropriate to provide a volume for introducing about several µL to several mL of the biological sample suspension. For example, when the size of the spacer is about length 40 mm x breadth 40 mm, then it is appropriate that the inner space of the spacer is about length 20 mm x breadth 20 mm, and it is appropriate that the thickness of the spacer is about 0.5 to 2.0 mm.

### (AC Power Source)

In the particle immobilizing apparatus described in the foregoing embodiments, the AC power source 4 is connected via the conductive lines 3 to the pair of electrodes of the structure 14. It is appropriate that the AC power source 4 can apply, between the electrodes, the voltage which is sufficient to generate the electric field for moving and immobilizing the biological sample to the holding hole 9. Specifically, it is possible to exemplify a power source capable of applying the AC voltage having a waveform such as a sine wave, a rectangular wave, a triangular wave, or a trapezoidal wave at a peak voltage of about 1 V to 20 V and a frequency of about 100 kHz to 3 MHz. In particular, it is especially preferable to apply, between the electrodes, the AC voltage having such a waveform that the biological sample can be moved and only one individual of the biological sample can be immobilized to one holding hole. As the AC voltage having such a waveform, it is preferable to use the rectangular wave. The rectangular wave instantaneously arrives at the preset peak voltage as compared with any case in which the waveform is the sine wave, the triangular wave, or the trapezoidal wave, and hence, the biological sample can be quickly moved toward the holding hole, so that it is possible to lower the probability that two or more individuals of the biological sample overlappedly enter the holding hole (it is possible to increase the probability that only one individual of the biological sample is immobilized to one holding hole). The biological sample can be regarded as a capacitor in an electrical viewpoint. During the period in which the peak voltage of the rectangular wave is not changed, the current hardly flows in the biological sample immobilized to the holding hole, thereby the electric flux lines are hardly generated, and as a result, the dielectrophoretic force is hardly generated in the holding hole to which the biological sample is immobilized. Therefore, when the biological sample is once immobilized to the holding hole, the probability that another biological sample is immobilized to the same holding hole is lowered. In place thereof, the biological sample is successively immobilized to another holding hole in which the electric flux line is generated and the dielectrophoretic force is generated (empty holding hole to which no biological sample is immobilized).

In the apparatus of the present invention, it is preferable to adopt a power source which generates the AC voltage having no DC component. This is because, if the AC voltage having a DC component is applied, then the biological sample is moved while receiving the force biased to a specific direction due to the electrostatic force (electrophoretic force) generated by the DC component, and the biological sample is hardly immobilized to the holding hole by means of the dielectrophoretic force. Also, if the AC voltage having a DC component is applied, then the ion contained in the suspension containing the biological sample causes the electric reaction on the electrode surface to generate the heat, thereby the biological sample causes the thermal motion on account thereof, and hence, it is impossible to control the motion by means of the dielectrophoretic force and it is difficult to move and immobilize the biological sample to the holding hole. The AC voltage having the DC component refers to the voltage in which the frequency duty ratio is not 50%, the voltage which has the offset, the voltage in which the cycle is extremely long (for example, not less than 1 second), or the like.

### (Distance and Size (Dimensions) of Holding Hole)

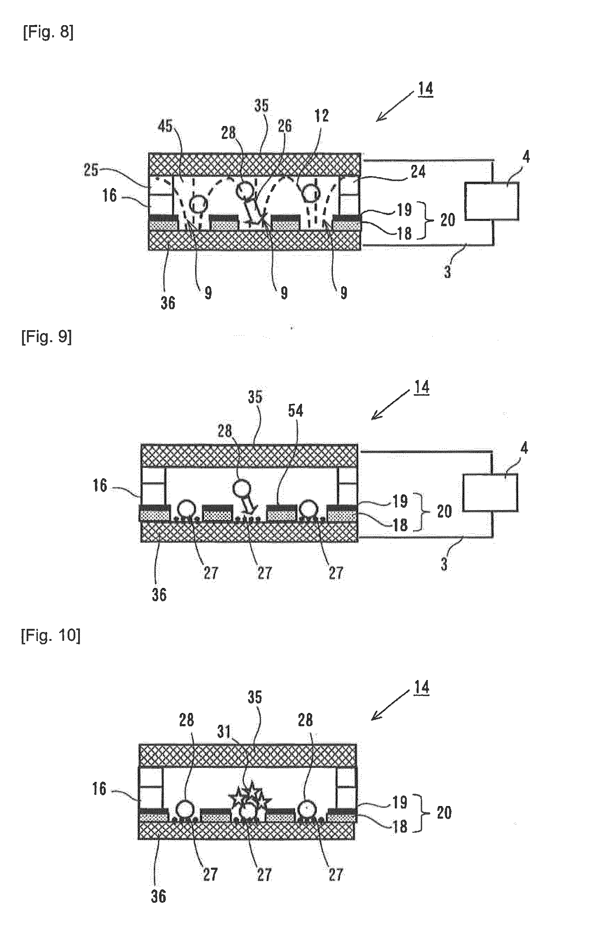

In the apparatus of the present invention, the waveform of the AC voltage to be applied is preferably rectangular so that only one individual of the biological sample can be immobilized to one holding hole. In order to achieve such an object, further, it is preferable that the arrangement, the size (dimensions), and the shape of the holding hole are designed such that the arrangement, the size (dimensions), and the shape are suitable to successfully immobilize only one individual of the biological sample to one holding hole. For example, as for the arrangement, it is preferable that the holding holes are arranged in an array form on the surface of the holding unit. However, if the distance between the adjacent holding holes is too narrow, then the probability to immobilize a plurality of individuals of the biological sample to one holding hole is increased, the biological sample suspensions contained in the both adjacent holding holes are mixed with each other, and/or the crosstalk noise is generated, and hence, any favorable influence is not attained in the analysis of the biological sample. By contrast, if the distance between the adjacent holding holes is wide, then the biological sample remains at the position between the adjacent holding holes (54 as shown in Fig. 9), and thus the probability of the occurrence of holding hole(s) incapable of immobilizing the biological sample is increased. Hence, it is appropriate that the distance between the holding holes and the size (diameter, depth) of the holding hole are set depending on the particle size (grain size) of the biological sample to be immobilized. Specifically, it is preferable that the distance between the adjacent holding holes is within a range of not less than 0.5 time to not more than 20 times the particle size of the biological sample to be immobilized. Further, it is preferable that the diameter and the depth of the holding hole each are within a range of not less than 1 time to not more than 5 times the diameter of the biological sample. In this way, the electrostatic force is generated between the electrode surface disposed on the bottom surface of the holding hole and the biological sample, the biological sample is reliably immobilized to the holding hole, and it is possible to perform the observation satisfactorily.

### (Biological Sample)

Preferred test particle is the biological sample such as cells, virus particles, DNA, and proteins. The cell is not specifically limited as long as the cell is composed of dielectric material(s) and can be collected by means of the dielectrophoresis. Examples of the preferred biological sample include samples each of which has a labelable substance (specific substance) on the surface or at the inside thereof, such as cells (living cells) contained in blood, lymph, cerebrospinal fluid, expectoration, urine, or feces; microorganisms or protozoa existing in the body or in the environment; and cultured cells. More specifically, it is possible to exemplify cancer cells which cause distant metastasis via blood or lymph, such as cells originating from stomach cancer, colorectal cancer, esophageal cancer, liver cancer, lung cancer, pancreatic cancer, bladder cancer, and uterine cancer (epithelial tumor); and blood cells such as lymphocyte and leukocyte (lymphoma, leukemia). As the cancer cell, it is possible to exemplify a cancer cell in which a specific protein such as collagenase is present on the cell surface and the protein lyses collagen (extracellular matrix) existing around the cancer cell to cause the invasion and the metastasis thereby.

As for the virus, it is possible to exemplify viruses such as herpes virus, hepatitis virus, HIV virus (human immunodeficiency virus), and ATL virus (adult T cell leukemia virus). As for DNA and the protein, it is preferable that the length or the molecular weight respectively is not less than 40 kbp or not less than 100,000 Da, or preferably not less than 100 kbp or not less than 500,000 Da. As for the biological sample, it is possible to exemplify particles in which protein, peptide, DNA, RNA, polysaccharide, lipid, virus, or the like, is captured by carrier particles which were modified to be able to capture these substances. The carrier particle is not particularly limited as long as the carrier particle is composed of dielectric material(s). Because the protein or the like can be concentrated on the particles, it is expected to improve the detection sensitivity as compared with the detection performed in a state where various proteins exist in a mixed manner in a solution. Also, when a plurality of types of specific particles are prepared for the respective proteins or the like, it is possible to detect multiple specimens. As for the protein, it is possible to exemplify various tumor markers such as CEA (carcinoembryonic antigen; tumor marker for digestive organ such as esophagus, stomach, and rectum), CA19-9 (carbohydrate antigen 19-9; tumor marker for digestive organ such as cancer of pancreas and cancer of biliary tract), and PSA (prostate specific antigen; marker specific for prostate gland).

It is appropriate that the biological sample suspension to be fed to the apparatus is a suspension in which such a biological sample as described above can be moved in accordance with the dielectrophoresis. Preferred examples of the biological sample suspension can include, for example, a suspension in which a sample to be analyzed is contained in an aqueous solution of sugar such as mannitol, glucose, or sucrose, or in an aqueous solution containing, in the foregoing aqueous solution, electrolyte such as calcium chloride or magnesium chloride, or protein such as BSA (bovine serum albumin).

### <Dielectrophoresis and Analysis of Particles>

Next, an explanation will be made with reference to Figs. 8 to 10 about a method for immobilizing particles by utilizing the dielectrophoresis and a method for analyzing immobilized particles. In this section, the explanation will be made as exemplified by the structure and the immobilizing apparatus of the fourth embodiment (Fig. 7) by way of example. However, the immobilization and the analysis of particles can also be performed in accordance with a similar method even in the case of the structure and the immobilizing apparatus of any other embodiment.

At first, as shown in Fig. 8, the suspension containing the biological sample is injected from the introducing port 24 of the spacer 16 to fill the interiors of the accommodating unit 45 and the holding holes 9 with the suspension. Then, when the AC voltage which has the above-described waveform is applied from the AC power source 4, then the electric flux lines 12 are concentrated on the holding holes 9, and the dielectrophoretic force 26 acts on the biological sample 28. Accordingly, the biological sample 28 is moved along the electric flux lines 12 toward the holding holes 9, and thus one individual of the biological sample can be introduced into and immobilized to one holding hole 9. The principle of the dielectrophoretic force will be explained with reference to Fig. 8. The polarization arises in the biological sample 28, i.e., the dielectric particle such as cells, contained in the solution placed in the AC voltage, i.e., in the AC electric field, and the positive and negative electric charges are induced. In this situation, as shown in Fig. 8, when an uneven and ununiform electric field (electric flux lines 12 shown in Fig. 8) is applied to the holding hole 9 provided for the insulator film 18 on the lower electrode substrate 36, then the biological sample 28 is attracted in the direction in which the electric field is concentrated (direction in which the electric flux lines 12 are dense), i.e., in the direction directed to the holding hole 9. This is the dielectrophoretic force 26. In general, the dielectrophoretic force is proportional to the volume of the particle, the difference in the dielectric constant between the particle and the solution, and the square of the magnitude of the ununiform electric field. For example, when the AC electric field of 1 x 10⁵ to 5 x 10⁵ V/m having a frequency of 100 kHz to 3 MHz is applied as the electric field to the particle having a diameter of about 5 to 10 µm, then the dielectrophoretic force is allowed to act, so that the particle is attracted in the direction in which the electric field is concentrated. In this case, the biological sample 28 is introduced into the holding hole 9 mainly by the dielectrophoretic force, the gravity, and the electrostatic force from the electrodes. The number of individuals of the biological sample contained in the suspension fed to the accommodating unit is not specifically limited. However, considering the effective use of the biological sample, it is preferable that the number of individuals is approximately equivalent to the number of the holding holes provided for the holding unit of the structure. In the above-described second structure, the light shielding film 19 is arranged while being interposed between the two layers of the insulator films 18, and hence, even when the light shielding film 19 is a metallic film or the like, the possibility to disturb the electric field formation upon the voltage application is extremely low. That is, it is affirmed that the sixth to eighth embodiments are such embodiments that the light shielding performance owing to the light shielding film 19 and the holding of the biological sample by means of the dielectrophoresis can be preferably attained.

Subsequently, as shown in Fig. 9, the biological sample 28 is bound to the inside of the holding hole 9 modified with a substance 27 which binds to the biological sample, while applying the AC voltage. The substance 27 which binds to the biological sample is not particularly limited as long as the substance 27 binds to the biological sample 28. For example, it is possible to exemplify a substance which recognizes a specific substance existing on the surface of the biological sample, a Biocompatible Anchor for Membrane (BAM) having aliphatic oleyl group which binds to the lipid bilayer of the cell, and a substance which electrostatically binds to the biological sample. As for the combination of the specific substance existing on the surface of the biological sample and the molecule which binds thereto, it is possible to exemplify receptor-ligand, sugar chain-lectin, antigen-antibody, and so forth. Considering the binding to the biological sample in a relatively short period of time, the substance which electrostatically binds to the biological sample surface can be exemplified as a preferred substance which binds to the biological sample. As for such a substance, it is possible to exemplify a polycation agent such as poly-L-lysine.

When a substance which binds to a marker generic to various cancer cells (i.e. a marker common or not specific between cancer cells), for example, EpCAM (also referred to as CD326, epithelium specific antigen (ESA), or human epithelium antigen (HEA)), is used as the substance which binds to the biological sample, then only cancer cell contained in blood or the like is immobilized, and cell (such as blood cells) other than the cancer cell is not immobilized. Therefore, the cell other than the cancer cell can be disengaged from the holding hole by performing the washing or the like, and thus only the cancer cell can be reliably immobilized and detected. As described later on, in order to detect a specific cancer cell, it is preferable that a specific substance existing only in the concerning specific cancer cell is detected by using a labeled substance. However, for example, when various and extensive cancer cells are assumed as target samples and the purpose is to know whether or not any of the target samples exists in the biological sample, then it is appropriate that the inside of the holding hole was preliminarily modified with a substance which binds to a marker generic to them and thus the presence or absence of the cell can be detected after the washing. In such a case, for example, it is also sufficient that the light is radiated from above the holding hole, and only whether or not the radiated light arrives at the lower side of the holding hole is detected, i.e., only the shadow of the immobilized cell is detected.

Further, when a substance which specifically recognizes a cell or the like that is not intended to be immobilized to the holding hole (for example, an antibody against the concerning cell or the like) is arranged at a portion other than the holding hole (for example, 54 as shown in Fig. 9), then it is possible to prevent the concerning cell or the like from entering the holding hole, i.e., it is possible to separate the objective cell (cell placed in the holding hole) from the non-objective cell or the like (cell immobilized on the film outside the holding hole).

Further, a substance which binds to a marker (for example, antigen) generic (common) to cancer cells (for example, antibody which specifically binds to the concerning common antigen) is preliminarily arranged in the holding hole, and the cancer cell is immobilized to the holding hole by means of the dielectrophoretic force. After that, the labeling is further performed with a substance which binds to HER2 (antigen) specifically expressed, for example, in breast cancer, lung cancer, or the like, of cancer cells (antibody against HER2 (anti-HER2 antibody)). Accordingly, it is possible to estimate the type of immobilized cancer cell.

The method for modifying the holding hole 9 with the substance 27 which binds to the biological sample is not particularly limited as long as the inside of the holding hole 9 can binds to the biological sample 28. For example, a self-assembled monolayer (SAM) film is utilized so that the substance 27 which binds to the biological sample having an amino group or the like can be reacted with the electrode which is composed of a metal oxide film or the like on the bottom surface of the holding hole, and thereby the interior of the holding hole can be specifically modified. Further, a solution containing the substance 27 that binds to both of the biological sample and the interior of the holding hole 9 is injected into the accommodating unit after capturing the biological sample 28 in the holding hole 9, and thereby it is possible to allow the interior of the holding hole 9 and the biological sample 28 to bind to one another. When the binding is attained by injecting the solution containing the substance 27 which binds to the biological sample, it is preferable that the substance 27 in the accommodating unit, which binds to the biological sample, is washed and removed after the binding reaction by using the solution to be used for suspending the biological sample 28, for example, an aqueous solution of sugar such as mannitol, glucose, or sucrose, or in an aqueous solution containing, in the foregoing aqueous solution, electrolyte such as calcium chloride or magnesium chloride, or protein such as BSA (bovine serum albumin). The biological sample 28 captured by the holding hole 9 by means of the substance 27 that binds to the biological sample as described above is not disengaged from the holding hole 9 even when the AC voltage is not applied.

Subsequently, as shown in Fig. 10, a reagent solution which is required to analyze the test particle such as the biological sample is injected into the accommodating unit. The reagent used to analyze the test particle is not particularly limited as long as the substance which exists on the surface or at the inside of the test particle can be optically detected.

The component which constitutes the test particle such as the biological sample, for example, the substance which exists on the surface or at the inside of the test particle (hereinafter referred to as "specific substance" in some cases) refers to a substance which exists specifically on the surface or at the inside of the particle having the specific property (hereinafter referred to as "target sample" in some cases) of the test particles. The phrase "exists specifically in the target sample" means that the substance exists in the target sample and the substance does not exist in any particle other than the target sample or that the substance exists in the target sample in an amount larger than that in any particle other than the target sample.

When the test particle is a cell, the specific substance is exemplified by antigen, receptor, sugar chain, enzyme, nucleic acid, and so forth. The antigen is exemplified by antigen on tumor cell, major histocompatibility antigen (MHC, HLA in the case of human), and so forth. The antigen on tumor cell is exemplified by EpCAM and so forth. The receptor is exemplified by hormone receptor, Fc receptor, virus receptor, and so forth. The nucleic acid is exemplified by DNA and RNA. The protein such as the tumor marker can be used as the biological sample as it is, or can be carried on the carrier particle as described above. More specifically, for example, when the target sample is various cancer cells, the marker generic (common) to various cancer cells can be the specific substance. When the target sample is breast cancer or lung cancer, HER2 (antigen), which is specifically expressed in such cancers, can be the specific substance.

Such a specific substance as described above can be observed (detected) by labeling the same with a substance which indicates the presence of the specific substance, for example, a substance which specifically binds to the specific substance. For example, an antibody against a certain antigen binds to the antigen, a ligand bindable to a certain receptor binds to the receptor, and lectin binds to a sugar chain. Accordingly, such a substance which specifically binds to the specific substance is bonded to the substance which emits the optically detectable signal, so as to prepare the labeled substance. However, for example, when the specific substance binds to or reacts with only an arbitrary substance and an optically detectable signal is emitted as a result thereof, then the arbitrary substance itself can be used as the labeled substance.

The labeled substance 31 for detecting the specific substance of the present invention is not specifically limited as long as the target sample can be detected. The labeled substance refers to any substance which is capable of indicating the presence of the component for constituting the test particle. Representative examples of the useful detectable labeled substance can include substances in which a substance which can be detected on the basis of the property of fluorescence, phosphorescence, or light emission is bonded to a substance which can specifically bind to the above-described specific substance such as antigen, ligand, or lectin.

The labeled substance is exemplified by the labeled substance itself, for example, a substance which emits fluorescence, phosphorescence, or light, for example, a substance in which a fluorescent dye or the like is bonded to the substance which can specifically bind to the specific substance. The labeled substance can be a substance in which a substance for catalyzing the reaction to emit light, for example, the reaction to produce a substance which emits the fluorescence or the phosphorescence, or the light emission reaction is bonded to the substance which can specifically bind to the specific substance. For example, the fluorescent dye is exemplified by FITC (fluorescein isocyanate), PE (phycoerythrin), Rhodamine, and so forth. The substance which catalyzes the above-described reaction is exemplified by peroxidase, β-galactosidase, alkaline phosphatase, luciferase, and so forth. For example, when the specific substance reacts with only an arbitrary substance and an optically detectable signal is emitted as a result of the reaction, then the arbitrary substance itself can be used as the labeled substance.

Further, it is possible to exemplify the use of the labeled substance in which a quencher for inhibiting fluorescence, phosphorescence, or light emission is bonded to the substance which specifically binds to the specific substance. In this case, when the biological sample is preliminarily stained with the substrate which emits fluorescence, phosphorescence, or light, and the concerning labeled substance is further allowed to react therewith, then the fluorescence, the phosphorescence, or the light emission, which comes from the holding hole to which the biological sample having the specific substance is immobilized, is decreased by the quencher. Therefore, it is appropriate to detect the decrease. It is possible to exemplify the use of a combination of the above-described labeled substance and a substance obtained by bonding the substance which binds to the marker generic (common) to all cells contained in the biological sample to the substance which emits fluorescence, phosphorescence, or light.

As described above, the labeled substance can be a substance which binds to or react with the specific substance by itself or can be a substance obtained by bonding the substance which specifically binds to the specific substance to the substance which emits the optically detectable signal. When the substance which emits the optically detectable signal is bonded to the substance which specifically binds to the specific substance, then the both can be directly bonded to one another by means of any known chemical method or the like, or the both can be indirectly bonded to one another via a substance which is bondable to the substance which specifically binds to the specific substance. For example, when the substance which specifically binds to the specific substance is an antibody, it is possible to exemplify a case where an antibody against immunoglobulin of an animal used to prepare the antigen, or protein A or protein G is bonded to the substance which generates the signal. It is also possible to exemplify a case where the substance which specifically binds to the specific substance is preliminarily bonded to biotin, and the substance which generates the signal is preliminarily bonded to avidin or streptavidin. In this case, avidin or streptavidin bonded to the substance that generates the signal binds to biotin bonded to the substance which specifically binds to the specific substance. As a result, a complex of (specific substance) - (substance which specifically binds to specific substance) - (biotin) - (avidin or streptavidin) - (substance which generates signal) is formed, and thus the specific substance is indirectly labeled. Such an indirect case is also included in the specific substance referred to in the present invention.

When the specific substance is a nucleic acid, the nucleic acid can be detected by means of the hybridization using a probe which is directly or indirectly bonded (or bondable) to the substance which generates the signal and which probe is bindable to the nucleic acid, or the amplification of the nucleic acid using primers which are directly or indirectly bonded (or bondable) to the substance that generates the signal. For the amplification of the nucleic acid, it is possible to utilize a method known *per se* such as the PCR method, the LAMP method, the RT-PCR method, the NASBA method, the TMA method, or the TRC method. In the TaqMan method, an oligonucleotide in which the 5' end is modified with a fluorescent substance and the 3' end is modified with a quencher substance is utilized as the probe. In the case of this probe, the emission of the fluorescence is suppressed, because as well as the fluorescent substance, the quencher substance is present near the fluorescent substance. When the TaqMan probe hybridized with the target nucleic acid is decomposed by the 5' → 3' exonuclease activity possessed by Taq DNA polymerase in the step of the elongation reaction of PCR, then the fluorescent dye is liberated from the probe, the suppression by the quencher is removed, and thereby the fluorescence is emitted. The nucleic acid is exemplified by DNA or RNA. When RNA is amplified, it is appropriate that the reverse transcription reaction is performed by using RNA as a template and produced cDNA is amplified in accordance with the PCR method (RT-PCR). The substance which generates the signal can be combined with the quencher which inhibits fluorescence, phosphorescence, or light emission in the same manner as described above.

As described above, the primer which binds to the nucleic acid produced by the amplification reaction is also included in the substance which specifically binds to the specific substance referred to in the present invention.

When the cell as the target sample is detected by PCR, then the heating and the cooling in the PCR reaction can be performed by placing the structure for particle immobilization on a heat block of a thermal cycler, or can be performed, by providing a heat block for the biological sample analyzing apparatus of the present invention, on the heat block.

The light emitted by the labeled substance, i.e., the light emitted from the labeled substance or the light emitted by the reaction catalyzed by the labeled substance, indicates the presence of the component for constructing the test particle, i.e., the presence of the specific substance.

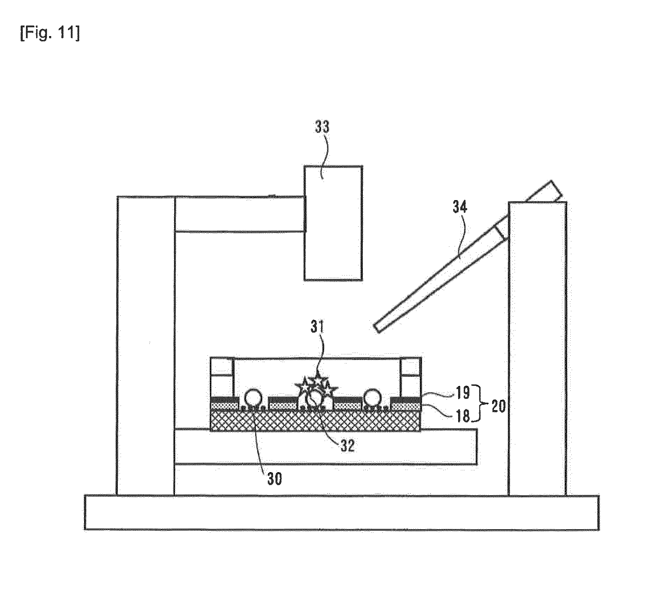

Fig. 11 shows an exemplary application of the biological sample analyzing apparatus of the present invention. For example, a suspension for which the existence of an abnormal cell 32 such as cancer is suspected is fed to the biological sample analyzing apparatus, and the cells are captured to the holding holes. Also, the labeled substance for detecting the specific substance existing on the surface or at the inside of the abnormal cell 32 as the objective of the detection is introduced, and the abnormal cell is detected. Further, the abnormal cell such as cancer which is detected by a fluorescence microscope 33 can be collected by using a micropipette as the biological sample collecting means 34, so as to analyze the biological sample in detail.

The micropipette has been explained above as the biological sample collecting means. However, the biological sample collecting means is not particularly limited as long as the biological sample can be collected. Other than the micropipette, it is possible to use a biological sample collecting means capable of precisely collecting (sampling) the biological sample by utilizing an electroosmotic flow.

As another exemplary application of the biological sample analyzing apparatus of the present invention, the apparatus can also comprise a disrupting means for disrupting the biological sample. The disrupting means is not particularly limited as long as the biological sample can be disrupted and the nucleic acid contained in the biological sample can be eluted to the outside of the biological sample. For example, it is possible to exemplify a means consisting of a pair of electrodes and a power source for applying a DC voltage or an AC voltage having a low frequency of about 1 Hz to the electrodes, wherein the voltage is applied to the biological sample immobilized to the holding hole of the holding unit. When the biological sample is a cell having no cell wall, the cell can be disrupted by applying the voltage of about 1 V to the cell membrane. The electrodes for allowing the dielectrophoretic force to act on the biological sample so as to move the biological sample to the holding unit can also serve as the pair of electrodes of the disrupting means. Further, for example, it is possible to exemplify a heating means for heating the biological sample immobilized to the holding hole of the holding unit. The biological sample can be disrupted by allowing the biological sample to be under a temperature condition of 90°C for about several minutes. Further, for example, it is possible to exemplify an ultrasonic wave generating means for vibrating the biological sample immobilized to the holding hole of the holding unit. The biological sample can be disrupted by applying the vibration of 20 to 40 kHz continuously or intermittently at an output of 100 to 200 W. Each of the means for applying the voltage, the heating means, and the ultrasonic wave generating means, which have been exemplified by way of example, is not needed to be utilized exclusively, and thus, for example, it is also possible to utilize both of the heating means and the ultrasonic wave generating means.

When the nucleic acid eluted from the disrupted biological sample is detected after performing the amplification by means of the PCR method, the biological sample is firstly immobilized to the holding hole of the holding unit. After that, for example, a reaction solution containing primers, enzyme, substrates for enzyme, and so forth, for causing the PCR reaction is fed to the accommodating unit, and the solution which exists in the holding hole communicated with the accommodating unit (solution used to suspend the biological cell) is replaced with the reaction solution. In the PCR reaction, the temperature is raised to about 90°C for the gene eluted from the biological sample immobilized to the holding hole. During this process, the thermal convection can be caused at the inside of the holding hole, the gene originating from the biological sample in the holding hole can be diffused to the outside of the holding hole, and thus the gene can contaminate the biological sample suspension in the adjacent holding hole(s). Therefore, it is preferable that silicon oil or the like is added dropwise to the holding hole at the stage of completion of the solution replacement, and a temperature-responsive polymer is added into the PCR reaction solution so as to suppress such a thermal convection. If it is intended that the biological sample is suspended in the reaction solution for the PCR reaction to move the biological sample to the holding hole by means of the dielectrophoresis, then an overcurrent is provided when the voltage is applied, due to various electrolytes contained in the reaction solution for the PCR reaction, the thermal convection is caused by the heat generation, and hence, it is difficult to move and immobilize the biological sample to the holding portion. Therefore, it is preferable to perform such a solution replacement. After performing the sealing, the above-described disruption is performed and then the detection of the nucleic acid is performed.

In the configuration shown in Fig. 11, the light shielding film 19 covers the entire surface of the insulator film 18. However, in place thereof, it is also allowable to adopt such a configuration that the light shielding film 19 covers a part of the insulator film 18 as long as the light shielding film 19 covers the surroundings of the openings of the holding holes 9. In such a configuration, the upper surface of the holding unit 20 is sectionalized into the portion which is covered with the light shielding film and the portion at which the insulator film is exposed. Accordingly, it is possible to preferably detect the fluorescence in relation to the biological sample by utilizing the difference in the hydrophilicity between the light shielding film 19 and the insulator film 18. For example, when the light shielding film 19 is a metallic film having the hydrophilicity and the insulator film 18 is a polymer film having the hydrophobicity, then an aqueous solution can be held only around the respective holding holes by sealing the holding holes 9 with a water-insoluble liquid after introducing a water-soluble liquid into the holding holes 9. As a result, for example, it is possible to investigate the response to each of the plurality of test particles by being immobilized to the holding holes 9.

### <Effects>

The structure according to the above-described embodiments of the present invention and the immobilizing apparatus and the analyzing apparatus using the same provide the following effects.

The structure of these embodiments and the immobilizing apparatus using the same make it possible to quickly immobilize one particle to each of the holding holes provided for the holding unit. Further, the plurality of holding holes are arranged in the array form, and hence, a plurality of particles can be separated one by one and immobilized in the array form, so that it is possible to collectively analyze the individual particles. Further, owing to the light shielding film provided for the holding unit or the substrate, it is possible to reduce the light noise such as the background noise and the crosstalk noise, and it is possible to detect only the light emitted from the substance to be observed in the holding hole highly sensitively and highly accurately. Furthermore, it is also possible to shorten the detection time, because it is possible to detect the light highly accurate at the high sensitivity.

### <Examples>

The present invention will be explained in further detail below on the basis of Examples. However, the present invention is not limited to Examples described below.

### (Example 1-1)

In Example 1-1, the structure and the immobilizing apparatus shown in Fig. 6 and Fig. 7 as the sectional view thereof are used.

A glass substrate of length 78 mm x breadth 56 mm x thickness 1 mm is used for the substrate for constructing a lower electrode substrate 36. A spacer 16 is manufactured by using a silicon sheet so that an accommodating unit of length 20 mm x breadth 20 mm x thickness 1.5 mm is formed on a holding unit. Further, the spacer 16 is provided with an introducing port 24 and a discharge port 25 in order to introduce and discharge a suspension containing a biological sample.

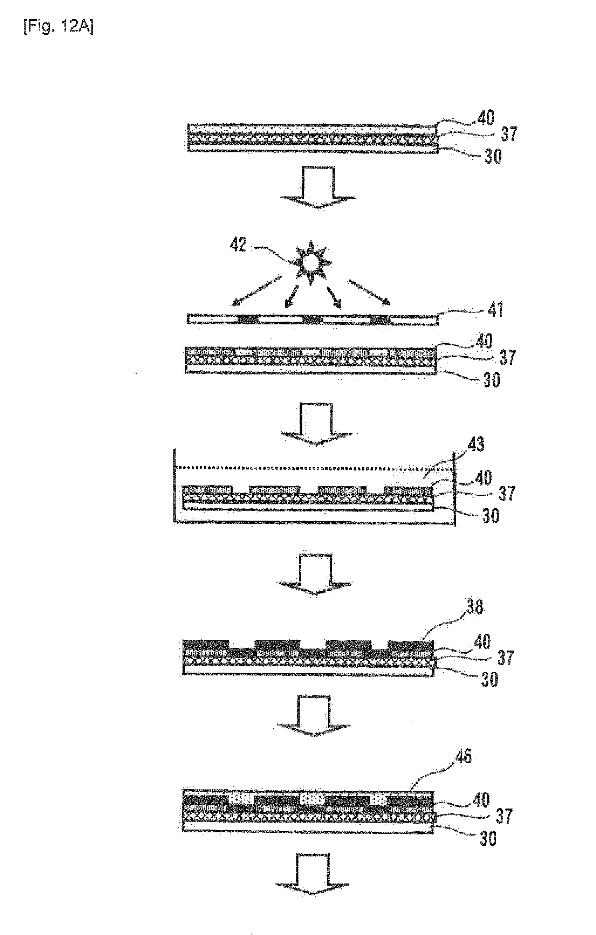

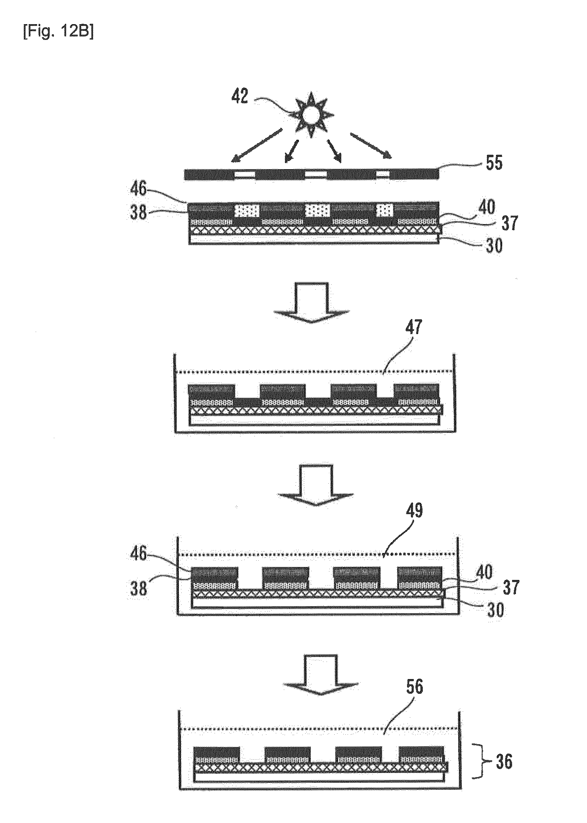

The holding unit, which has a plurality of holding holes 9, is formed integrally on the lower electrode substrate by means of a method based on the photolithography and the etching shown in Figs. 12A and 12B. A resist 40 is applied so as to provide a film thickness of 5 µm by using a spin coater onto an ITO film formation surface of the glass substrate 30 on which ITO 37 has been formed as a film. After performing natural drying for 1 minute, the prebaking (95°C, 3 minutes) is performed by using a hot plate. An epoxy-based negative type resist is used for the resist 40. Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the holding holes of 50 µm is depicted in an area of length 30 mm x breadth 30 mm, followed by being developed with a developing solution 43. The exposure time and the developing time are adjusted so that the depth of the holding hole is 5 µm, which is equal to the film thickness of the resist 40. After that, the postbaking (180°C, 30 minutes) is performed by using a hot plate to cause the curing of the resist structure.

Subsequently, a Cr film 38 having a film thickness of 100 nm is formed as a film by means of the sputtering on the resist 40 structure having the plurality of holding holes. Subsequently, a resist 46 is applied so that the film thickness is 1 µm from the resist film surface of the lower layer by using a spin coater onto the formed Cr film 38. After performing natural drying for 1 minute, the prebaking (95°C, 3 minutes) is performed by using a hot plate. A positive type resist is used for the resist 46. The above explains the steps shown in Fig. 12A, and the following steps are shown in Fig. 12B.

After that, as shown in Fig. 12B, the resist 46 is subjected to the exposure 42 by means of a UV exposure apparatus by using a photomask 55 for exposure on which a pattern of micropores having diameters of φ8.5 µm and aligned in an array form composed of 600 pieces (length) x 600 pieces (breadth) with the longitudinal and latitudinal distances between the holding holes of 50 µm is depicted in an area of length 30 mm x breadth 30 mm while the micropore pattern is superimposed on the holding holes of the lower layer, followed by being developed with a developing solution 47. The exposure time and the developing time are adjusted so that the depth of the holding hole is 6 µm, which is equal to the total of the film thicknesses of the lower layer and the upper layer resist. After the development, the exposed Cr film is exfoliated by means of 30% ceric ammonium nitrate solution 49 so that ITO 37 is exposed at the bottom surface of the holding hole.
Finally, the resist 46 is exfoliated by means of a remover 56 so as to expose the Cr film 38 as the metallic film. After that, the postbaking (180°C, 30 minutes) is performed by using a hot plate to cause the curing of the resist, so as to manufacture the lower electrode substrate 36 integrated with the light shielding polymer film in which the metallic film is arranged on the polymer film formed with the holding holes.

Subsequently, the spacer 16 is stacked and adhered under pressure as shown in Figs. 6 and 7 on the lower electrode substrate 36 integrated with the light shielding polymer film. The surface of the silicon sheet has the stickiness, and hence, the respective parts are brought in tight contact with each other by being adhered under pressure, so that the suspension containing the biological sample can be introduced into the spacer without leakage. The areal size cut out from the spacer is length 20 mm x breadth 20 mm, and hence the number of the holding holes existing in the accommodating unit is about 160,000. An upper electrode substrate 35 is arranged on the spacer 16, and a power source (signal generator) 4 is connected to the upper electrode substrate 35 and the lower electrode substrate 36 via respective conductive lines 3.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. The term "immobilize" means that the cell enters the holding hole. The same definition is also used in Comparative Example described below. In this case, the biological sample immobilization rate, at which rate approximately one cell enters one holding hole, is about 90%. The biological sample immobilization rate is defined by the value which is obtained by dividing the number of the holding holes in each of which one individual of the biological sample has entered by 225, when the biological sample is introduced and immobilized, while viewing 225 pieces of the holding holes composed of 15 pieces (length) x 15 pieces (breadth) in the field of a microscope. The method for calculating the biological sample immobilization rate is also the same in Examples and Comparative Example described later on.

Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes). After that, the washing is performed with a phosphate buffer, and the detection of B cell is carried out. The labeled B cell is observed by means of a CCD camera with a fluorescence microscope (U-RFL-T/IX71, Olympus Corporation, Japan). Accordingly, as compared with a fluorescence microscope image of the cell before the labeling, the fluorescence intensity only on the surface of B cell is increased after the labeling, and hence, B cell can be detected.

### (Example 1-2)

In Example 1-2, the structure and the immobilizing apparatus shown in Fig. 3 and Fig. 4 as the sectional view thereof are used.

A glass substrate 30 of length 70 mm x breadth 40 mm x thickness 1 mm is used for the substrate. A silicon sheet of length 40 mm x breadth 40 mm x thickness 1.5 mm having a shape in which an area of length 20 mm x breadth 20 mm is cut out at the central portion thereof is used as a spacer 16. Further, as shown in Fig. 3, an introducing port 24 and a discharge port 25 are provided in order to introduce and discharge a suspension containing a biological sample.

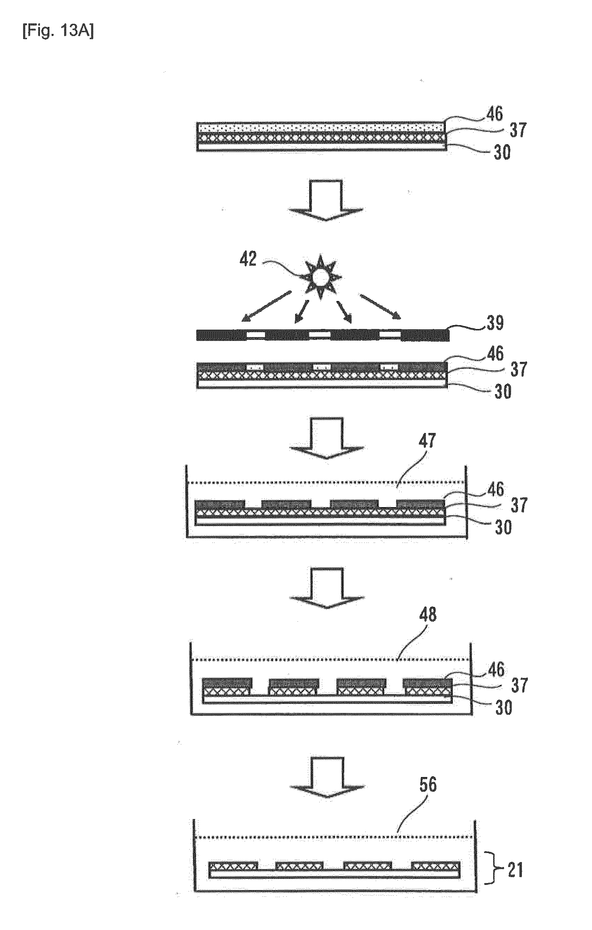

A holding unit having a plurality of through-holes 9 and a comb-shaped electrode 21 are integrally formed on the member by means of a method based on the photolithography and the etching shown in Figs. 13A to 13C. As shown in Fig. 13A, ITO 37 having a film thickness of 100 nm is formed as a film by means of the sputtering on one surface of the glass substrate 30. Subsequently, a resist 46 is applied so as to provide a film thickness of 1 µm by using a spin coater onto the formed ITO 37. After performing natural drying for 1 minute, the prebaking (105°C, 15 minutes) is performed by using a hot plate. A positive type resist is used for the resist 46.

Subsequently, the resist 46 is subjected to the exposure 42 by means of a UV exposure apparatus by using a photomask 39 for exposure on which a comb-shaped electrode pattern in which electrodes a each having a width of 10 µm and electrodes b each having a width of 10µm were formed at intervals of 50 µm is depicted in an area of length 30 mm x breadth 30 mm, followed by being developed with a developing solution 47. The exposure time and the developing time are adjusted so that the film thickness exfoliated by the development is 1 µm, which is equal to the film thickness of the resist, and ITO is exposed at the bottom surface of the through-hole. After the development, ITO etching solution (ITO-Etchant, Wako Pure Chemical Industries, Ltd.) 48 is used to exfoliate the exposed ITO film. Finally, the resist is exfoliated by means of a remover 56, so as to form the comb-shaped electrode 21.

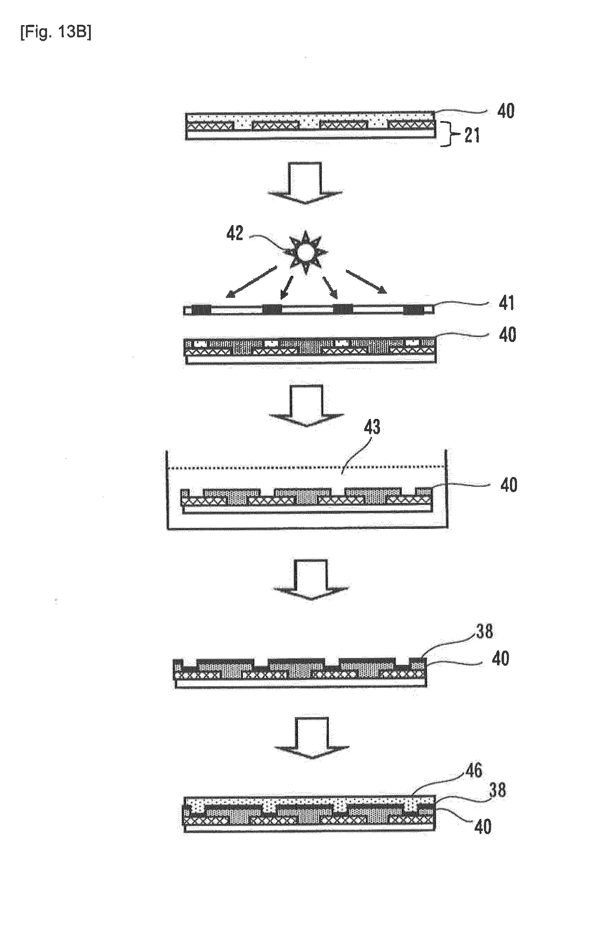

Next, the steps will be explained on the basis of Fig. 13B. A resist 40 is applied so as to provide a film thickness of 5 µm by using a spin coater onto the substrate arranged with the comb-shaped electrode 21 manufactured as described above. After performing natural drying for 1 minute, the prebaking (95°C, 3 minutes) is performed by using a hot plate. An epoxy-based negative type resist is used for the resist 40. Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the through-holes of 50 µm is depicted in an area of length 30 mm x breadth 30 mm while the micropore pattern is superimposed on the comb-shaped electrode, followed by being developed with a developing solution 43. The exposure time and the developing time are adjusted so that the depth of the through-hole is 5 µm, which is equal to the film thickness of the resist 40. After that, the postbaking (180°C, 30 minutes) is performed by using a hot plate to cause the curing of the resist structure.

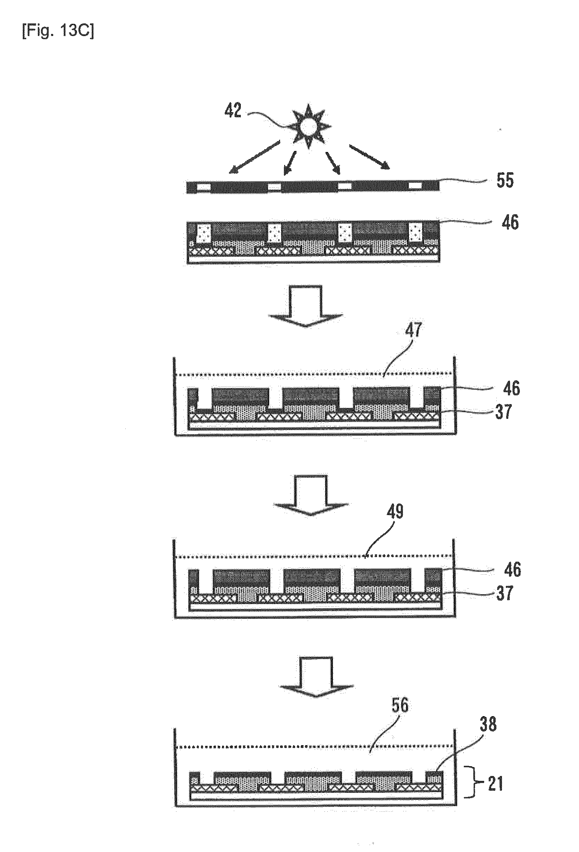

Subsequently, a Cr film 38 having a film thickness of 100 nm is formed as a film by means of the sputtering on the resist structure having the plurality of through-holes. Subsequently, a resist 46 is applied so that the film thickness is 1 µm from the resist film surface of the lower layer by using a spin coater onto the formed Cr film 38. After performing natural drying for 1 minute, the prebaking (95°C, 3 minutes) is performed by using a hot plate. The following steps will be explained on the basis of Fig. 13C. After that, the resist 46 is subjected to the exposure 42 by means of a UV exposure apparatus by using a photomask 55 for exposure on which a pattern of micropores having diameters of φ8.5 µm and aligned in an array form composed of 600 pieces (length) x 600 pieces (breadth) with the longitudinal and latitudinal distances between the through-holes of 50 µm is depicted in an area of length 30 mm x breadth 30 mm while the micropore pattern is superimposed on the through-holes of the lower layer, followed by being developed with a developing solution 47. The exposure time and the developing time are adjusted so that the depth of the through-hole is 10 µm, which is equal to the total of the film thicknesses of the lower layer and the upper layer resist. After the development, the exposed Cr film is exfoliated by means of 30% ceric ammonium nitrate solution 49 so that ITO 37 is exposed at the bottom surface of the through-hole. Finally, the resist 46 is exfoliated by means of a remover 56 so as to expose the Cr film 38 as the metallic film. After that, the postbaking (180°C, 30 minutes) is performed by using a hot plate to cause the curing of the resist, so as to manufacture the comb-shaped lower electrode substrate 21 integrated with the light shielding polymer film in which the metallic film is arranged on the polymer film formed with the through-holes.

The spacer 16 is stacked and adhered under pressure as shown in Fig. 3 on the comb-shaped lower electrode substrate 21 manufactured as described above. The surface of the silicon sheet has the stickiness, and hence, the respective parts are brought in tight contact with each other by being adhered under pressure, so that the suspension containing the biological sample can be introduced into the spacer 16 without leakage. The areal size cut out from the spacer is length 20 mm x breadth 20 mm, and hence the number of the through-holes existing in the accommodating unit is about 160,000. Further, a power source (signal generator) 4 for applying a voltage between the electrodes is connected via lead wires.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes). After that, the washing is performed with a phosphate buffer, and the detection of B cell is carried out. The labeled B cell is observed by means of a CCD camera with a fluorescence microscope (U-RFL-T/IX71, Olympus Corporation, Japan). Accordingly, as compared with a fluorescence microscope image of the cell before the labeling, the fluorescence intensity only on the surface of B cell is increased after the labeling, and hence, B cell can be detected.

A biological sample collecting means is installed to the above-described immobilizing apparatus. A pipette which can precisely collect the biological sample by utilizing an electroosmotic flow is used as the biological sample collecting means. Accordingly, the B cell detected by using the fluorescence-labeled antibody can be collected while performing the observation with the microscope.

### (Example 1-3)

The detection accuracy of one labeled cell immobilized to one holding hole can be confirmed as follows by using a structure and an immobilizing apparatus similar to those of Example 1-1.

At first, a part of mouse spleen cells are stained with CellTracker Green CMFDA (Invitrogen). A sample which is prepared by mixing cells stained with above-described CellTracker Green CMFDA and unstained mouse spleen cells (particle size: about 6 µm) at 3 : 7, is used as the sample subjected to the detection, and a cell suspension is prepared so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells is immobilized one by one to each of the plurality of holding holes. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells are electrostatically bound to the inside of the holding holes.

The cells stained with CellTracker Green CMFDA are observed by means of a CCD camera with a fluorescence microscope (U-RFL-T/IX71, Olympus Corporation, Japan). Accordingly, the fluorescence of the labeled cell can be detected from the plurality of spleen cells immobilized to the holding holes.

### (Example 2-1)

In Example 2-1, the structure and the immobilizing apparatus shown in Fig. 19 and Fig. 20 as the sectional view thereof are used.

A glass substrate of length 78 mm x breadth 56 mm x thickness 1 mm is used for the substrate for constructing a lower electrode substrate 36. A spacer 16 is manufactured by using a silicon sheet so that an accommodating unit of length 20 mm x breadth 20 mm x thickness 1.5 mm is formed on a holding unit. Further, the spacer 16 is provided with an introducing port 24 and a discharge port 25 in order to introduce and discharge a suspension containing a biological sample.

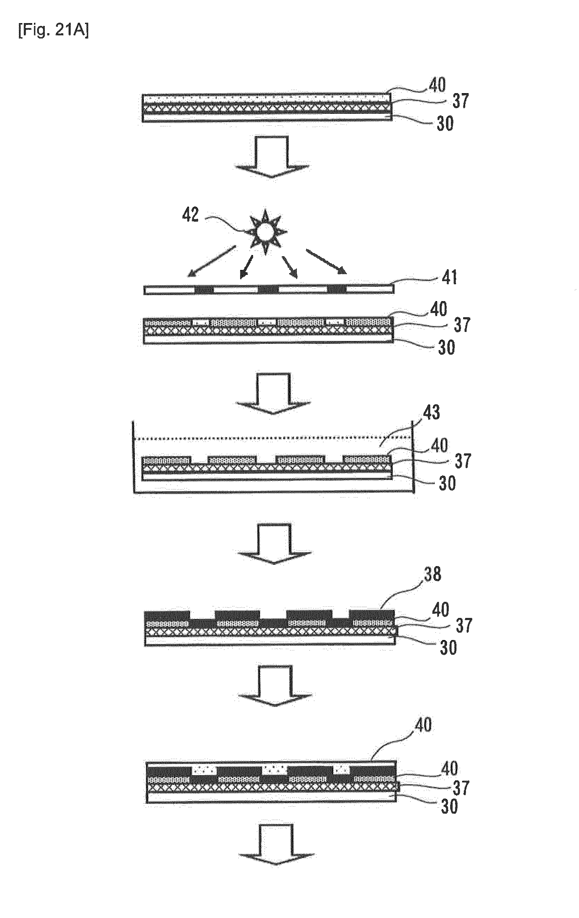

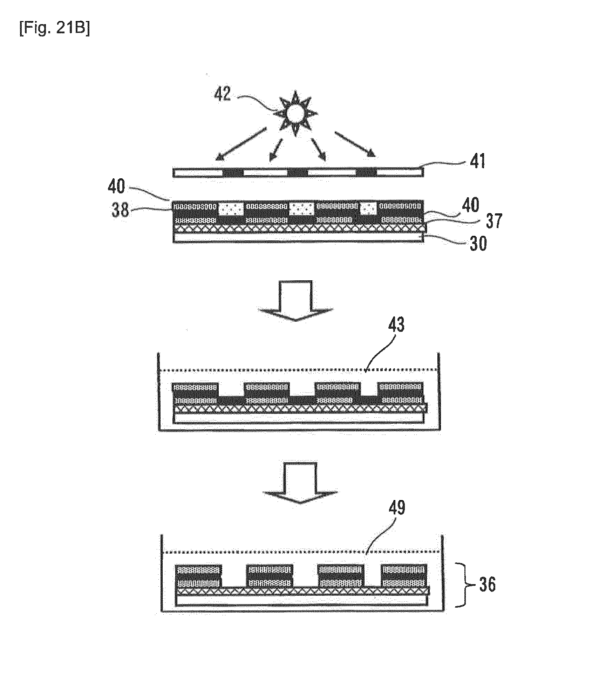

The holding unit, which has a plurality of holding holes 9, is formed integrally on the lower electrode substrate by means of a method based on the photolithography and the etching shown in Figs. 21A and 21B. A resist 40 is applied so as to provide a film thickness of 5 µm by using a spin coater onto an ITO film formation surface of the glass substrate 30 on which ITO 37 has been formed as a film. After performing natural drying for 1 minute, the prebaking (95°C, 3 minutes) is performed by using a hot plate. An epoxy-based negative type resist is used for the resist 40. Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the holding holes of 50 µm is depicted in an area of length 30 mm x breadth 30 mm, followed by being developed with a developing solution 43. The exposure time and the developing time are adjusted so that the depth of the holding hole is 5 µm, which is equal to the film thickness of the resist 40. After that, the postbaking (180°C, 30 minutes) is performed by using a hot plate to cause the curing of the resist structure.

Subsequently, a Cr film 38 having a film thickness of 100 nm is formed as a film by means of the sputtering on the resist 40 structure having the plurality of holding holes. Subsequently, a resist 40 is applied so that the film thickness is 5 µm from the resist film surface of the lower layer by using a spin coater onto the formed Cr film 38. After performing natural drying for 1 minute, the prebaking (95°C, 3 minutes) is performed by using a hot plate. The above explains the steps shown in Fig. 21A, and the following steps are shown in Fig. 21B.

After that, as shown in Fig. 21B, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the holding holes of 50 µm is depicted in an area of length 30 mm x breadth 30 mm while the micropore pattern is superimposed on the holding holes of the lower layer, followed by being developed with a developing solution 43. The exposure time and the developing time are adjusted so that the depth of the holding hole is 10 µm, which is equal to the total of the film thicknesses of the lower layer and the upper layer resist. After the development, the exposed Cr film is exfoliated by means of 30% ceric ammonium nitrate solution 49 so that ITO 37 is exposed at the bottom surface of the holding hole. After that, the postbaking (180°C, 30 minutes) is performed by using a hot plate to cause the curing of the resist, so as to manufacture the lower electrode substrate 36 in which the metallic film is arranged while being interposed between the two layers of the polymer films.

Subsequently, the spacer 16 is stacked and adhered under pressure as shown in Figs. 19 and 20 on the lower electrode substrate 36 integrated with the light shielding polymer film. The surface of the silicon sheet has the stickiness, and hence, the respective parts are brought in tight contact with each other by being adhered under pressure, so that the suspension containing the biological sample can be introduced into the spacer without leakage. The areal size cut out from the spacer is length 20 mm x breadth 20 mm, and hence the number of the holding holes existing in the accommodating unit is about 160,000. An upper electrode substrate 35 is arranged on the spacer 16, and a power source (signal generator) 4 is connected to the upper electrode substrate 35 and the lower electrode substrate 36 via respective conductive lines 3.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. In this case, the biological sample immobilization rate, at which rate approximately one cell enters one holding hole, is about 90%.

Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes) . After that, the washing is performed with a phosphate buffer, and the detection of B cell is carried out. The labeled B cell is observed by means of a CCD camera with a fluorescence microscope (U-RFL-T/IX71, Olympus Corporation, Japan). As a result, as compared with a fluorescence microscope image of the cell before the labeling, the fluorescence intensity only on the surface of B cell is increased after the labeling, and hence, B cell can be detected.

### (Example 2-2)

In Example 2-2, the structure and the immobilizing apparatus shown in Fig. 16 and Fig. 17 as the sectional view thereof are used.

A glass substrate 30 of length 70 mm x breadth 40 mm x thickness 1 mm is used for the substrate. A silicon sheet of length 40 mm x breadth 40 mm x thickness 1.5 mm having a shape in which an area of length 20 mm x breadth 20 mm is cut out at the central portion thereof is used as a spacer 16. Further, as shown in Fig. 16, an introducing port 24 and a discharge port 25 are provided in order to introduce and discharge a suspension containing a biological sample.

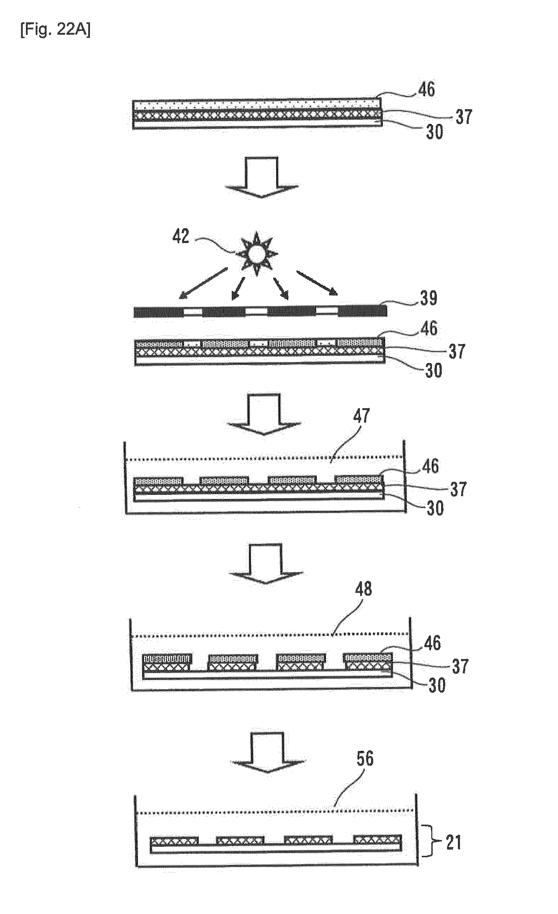

A holding unit having a plurality of through-holes 9 and a comb-shaped electrode 21 are integrally formed on the member by means of a method based on the photolithography and the etching shown in Figs. 22A to 22C. As shown in Fig. 22A, ITO 37 having a film thickness of 100 nm is formed as a film by means of the sputtering on one surface of the glass substrate 30. Subsequently, a resist 46 is applied so as to provide a film thickness of 1 µm by using a spin coater onto the formed ITO 37. After performing natural drying for 1 minute, the prebaking (105°C, 15 minutes) is performed by using a hot plate. A positive type resist is used for the resist 46.

Subsequently, the resist 46 is subjected to the exposure 42 by means of a UV exposure apparatus by using a photomask 39 for exposure on which a comb-shaped electrode pattern in which electrodes a each having a width of 10 µm and electrodes b each having a width of 10µm were formed at intervals of 50 µm is depicted in an area of length 30 mm x breadth 30 mm, followed by being developed with a developing solution 47. The exposure time and the developing time are adjusted so that the film thickness exfoliated by the development is 1 µm, which is equal to the film thickness of the resist, and ITO is exposed at the bottom surface of the through-hole. After the development, ITO etching solution (ITO-Etchant, Wako Pure Chemical Industries, Ltd.) 48 is used to exfoliate the exposed ITO film. Finally, the resist is exfoliated by means of a remover 56, so as to form the comb-shaped electrode 21.

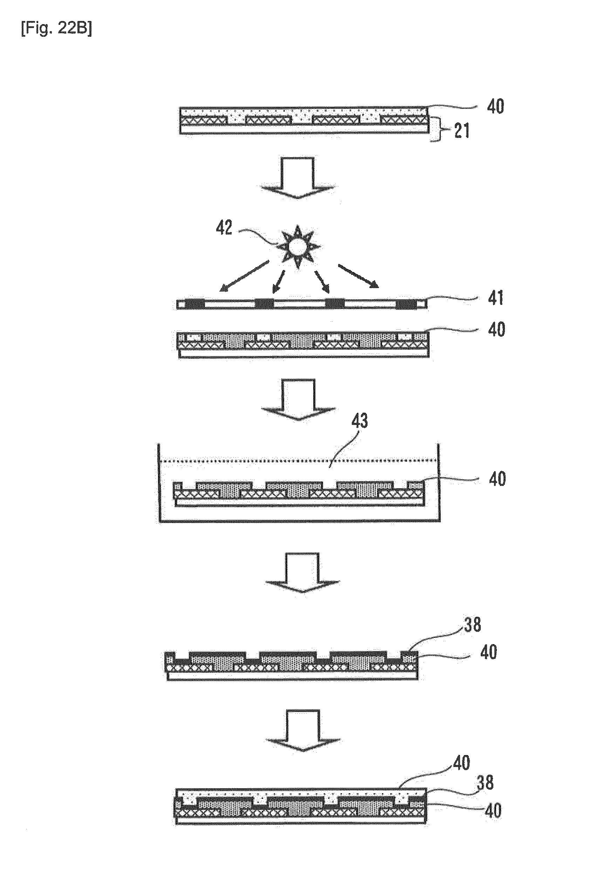

Next, the steps will be explained on the basis of Fig. 22B. A resist 40 is applied so as to provide a film thickness of 5 µm by using a spin coater onto the substrate arranged with the comb-shaped electrode 21 manufactured as described above. After performing natural drying for 1 minute, the prebaking (95°C, 3 minutes) is performed by using a hot plate. An epoxy-based negative type resist is used for the resist 40. Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the through-holes of 50 µm is depicted in an area of length 30 mm x breadth 30 mm while the micropore pattern is superimposed on the comb-shaped electrode, followed by being developed with a developing solution 43. The exposure time and the developing time are adjusted so that the depth of the through-hole is 5 µm, which is equal to the film thickness of the resist 40. After that, the postbaking (180°C, 30 minutes) is performed by using a hot plate to cause the curing of the resist structure.

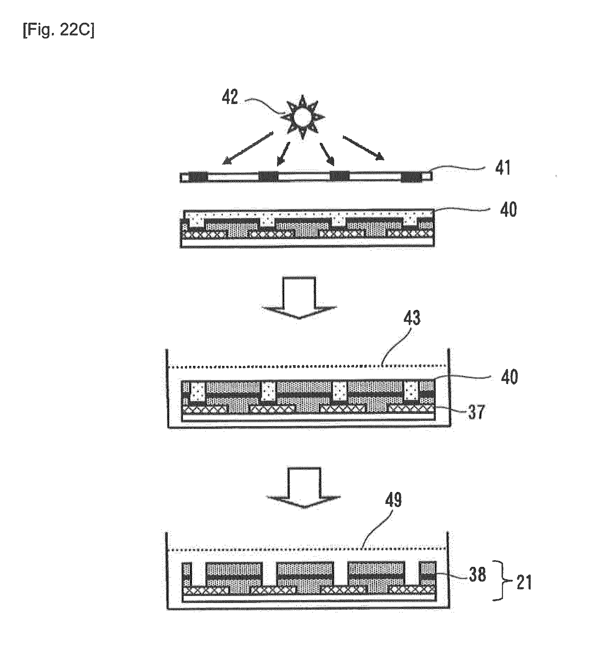

Subsequently, a Cr film 38 having a film thickness of 100 nm is formed as a film by means of the sputtering on the resist structure having the plurality of through-holes. Subsequently, a resist 40 is applied so that the film thickness is 5 µm from the resist film surface of the lower layer by using a spin coater onto the formed Cr film 38. After performing natural drying for 1 minute, the prebaking (95°C, 3 minutes) is performed by using a hot plate. The following steps will be explained on the basis of Fig. 22C. After that, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) with the longitudinal and latitudinal distances between the through-holes of 50 µm is depicted in an area of length 30 mm x breadth 30 mm while the micropore pattern is superimposed on the through-holes of the lower layer, followed by being developed with a developing solution 43. The exposure time and the developing time are adjusted so that the depth of the through-hole is 10 µm, which is equal to the total of the film thicknesses of the lower layer and the upper layer resist. After the development, the exposed Cr film is exfoliated by means of 30% ceric ammonium nitrate solution 49 so that ITO 37 is exposed at the bottom surface of the through-hole. After that, the postbaking (180°C, 30 minutes) is performed by using a hot plate to cause the curing of the resist, so as to manufacture the comb-shaped lower electrode substrate 21 in which the light shielding film is arranged while being interposed between the two layers of the insulator films.

The spacer 16 is stacked and adhered under pressure as shown in Fig. 16 on the comb-shaped lower electrode substrate 21 manufactured as described above. The surface of the silicon sheet has the stickiness, and hence, the respective parts are brought in tight contact with each other by being adhered under pressure, so that the suspension containing the biological sample can be introduced into the spacer 16 without leakage. The areal size cut out from the spacer is length 20 mm x breadth 20 mm, and hence the number of the through-holes existing in the accommodating unit is about 160,000. Further, a power source (signal generator) 4 for applying a voltage between the electrodes is connected via lead wires.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes). After that, the washing is performed with a phosphate buffer, and the detection of B cell is carried out. The labeled B cell is observed by means of a CCD camera with a fluorescence microscope (U-RFL-T/IX71, Olympus Corporation, Japan). As a result, as compared with a fluorescence microscope image of the cell before the labeling, the fluorescence intensity only on the surface of B cell is increased after the labeling, and hence, B cell can be detected.

A biological sample collecting means is installed to the above-described immobilizing apparatus. A pipette which can precisely collect the biological sample by utilizing an electroosmotic flow is used as the biological sample collecting means. Accordingly, the B cell detected by using the fluorescence-labeled antibody can be collected while performing the observation with the microscope.

### (Example 2-3)

The detection accuracy of one labeled cell immobilized to one holding hole can be confirmed as follows by using a structure and an immobilizing apparatus similar to those of Example 2-1.

At first, a part of mouse spleen cells are stained with CellTracker Green CMFDA (Invitrogen). A sample which is prepared by mixing cells stained with above-described CellTracker Green CMFDA and unstained mouse spleen cells (particle size: about 6 µm) at 3 : 7, is used as the sample subjected to the detection, and a cell suspension is prepared so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells is immobilized one by one to each of the plurality of holding holes. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells are electrostatically bound to the inside of the holding holes.

The cells stained with CellTracker Green CMFDA are observed by means of a CCD camera with a fluorescence microscope (U-RFL-T/IX71, Olympus Corporation, Japan). Accordingly, the fluorescence of the labeled cell can be detected from the plurality of spleen cells immobilized to the holding holes.

### (Example 3-1)

In Example 3-1, the structure and the immobilizing apparatus shown in Fig. 28 and Fig. 29 as the sectional view thereof were used.

A glass substrate of length 78 mm x breadth 56 mm x thickness 1 mm was used for a lower electrode substrate 36. A spacer 16 was manufactured by using a silicon sheet so that an accommodating unit of length 20 mm x breadth 20 mm x thickness 1.5 mm was formed on a holding unit. Further, the spacer 16 was provided with an introducing port 24 and a discharge port 25 in order to introduce and discharge a suspension containing a biological sample.

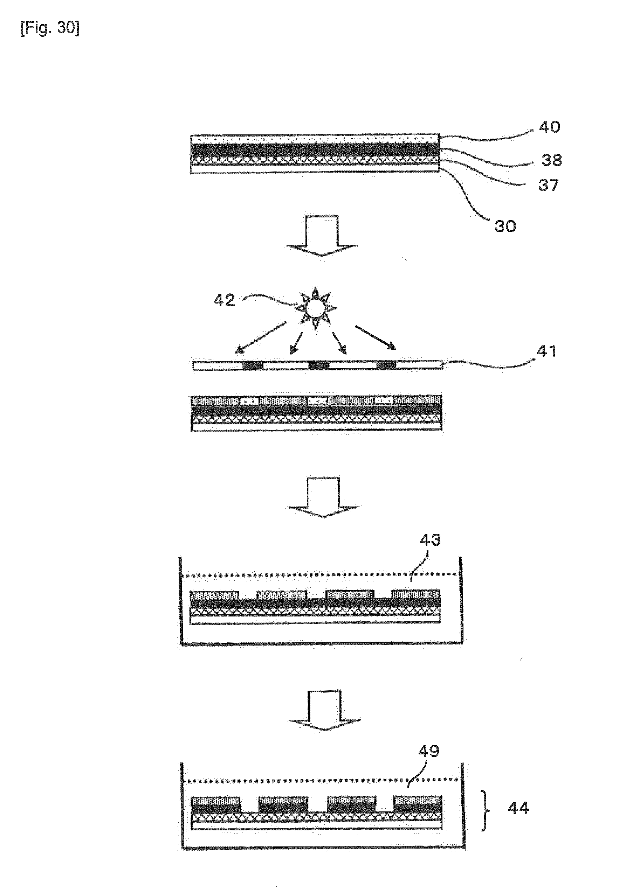

The holding unit (stack composed of an insulator film 18 and a light shielding film 19), which had a plurality of holding holes 9, was formed integrally on the lower electrode substrate by means of a method based on the photolithography and the etching shown in Fig. 30. At first, Cr 38 having a film thickness of 100 nm was formed as a film by means of the sputtering on an ITO film formation surface of a glass substrate 30 on which ITO 37 had been formed as the film. Subsequently, a resist 40 was applied so as to provide a film thickness of 5 µm by using a spin coater onto the formed Cr. After performing natural drying for 1 minute, the prebaking (95°C, 3 minutes) was performed by using a hot plate. An epoxy-based negative type resist was used for the resist. Subsequently, the resist 40 was subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) at intervals of 50 µm is depicted in an area of length 30 mm x breadth 30 mm, followed by being developed with a developing solution 43. The exposure time and the developing time were adjusted so that the depth of the holding hole was 5 µm, which was equal to the film thickness of the resist 40. After that, the postbaking (180°C, 30 minutes) was performed by using a hot plate to cause the curing of the resist structure. After that, the Cr film exposed at the bottom of the holding hole was exfoliated by means of 30% ceric ammonium nitrate solution 49 so that ITO 37 was exposed at the bottom surface of the holding hole. Accordingly, a lower electrode substrate 44 integrated with the holding unit (stack of the insulator film and the light shielding film) formed with the plurality of holding holes was manufactured.

The spacer 16 was stacked and adhered under pressure as shown in Fig. 29 on the holding unit on the lower electrode substrate manufactured as described above. The surface of the silicon sheet has the stickiness, and hence, the spacer 16 and the insulator film 19 were successfully laminated with each other by being adhered under pressure. The areal size of the accommodating unit of the spacer 16 is length 20 mm x breadth 20 mm, and hence the number of the holding holes 9 existing in the accommodating unit is about 160,000. An upper electrode substrate 35 was arranged on the spacer 16, and a power source (signal generator) 4 was connected to the upper electrode substrate 35 and the lower electrode substrate 36 via respective conductive lines 3.

Mouse spleen cells (particle size: about 6 µm) were used as the biological sample. The cells were suspended in a mannitol aqueous solution having a concentration of 300 mM to prepare a cell suspension so that the density was 2.7 x 10⁵ cells/mL.

Subsequently, 600 µL of the above-described cell suspension was injected from the introducing port 24 of the spacer 16 by using a syringe (number of introduced cells: about 160,000 cells), and a rectangular wave AC voltage having a voltage of 20 Vpp and a frequency of 3 MHz was applied between the electrodes by means of the signal generator. As a result, each of the cells was successfully immobilized one by one to each of the plurality of holding holes formed in the array form within an extremely short period of time of about 2 to 3 seconds. In this case, the biological sample immobilization rate, at which rate approximately one cell entered one holding hole, was about 90%.

Subsequently, 600 µL of poly-L-lysine having a concentration of 2.5 x 10⁻⁴% was injected into the accommodating unit. After static placement for 3 minutes, the application of the voltage was stopped. Subsequently, a phosphate buffer (pH 7.2) was injected so as to wash poly-L-lysine in the accommodating unit. Thus, the cells were electrostatically bound to the inside of the holding holes successfully.

Subsequently, B cell in the mouse spleen cell population was detected. The specific substance which served as the target for detecting B cell was CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance was fed to the accommodating unit so as to label B cell via the antigen-antibody reaction (4°C, 10 minutes). After that, the washing was performed with a phosphate buffer, and the detection of B cell was carried out. The labeled B cell was observed by means of a CCD camera with a fluorescence microscope (U-RFL-T/IX71, Olympus Corporation, Japan). As a result, as compared with a fluorescence microscope image of the cell before the labeling, the fluorescence intensity only on the surface of B cell was increased after the labeling, and hence, B cell was successfully detected.

### (Example 3-2)

In Example 3-2, the structure and the immobilizing apparatus shown in Fig. 25 and Fig. 26 as the sectional view thereof were used.

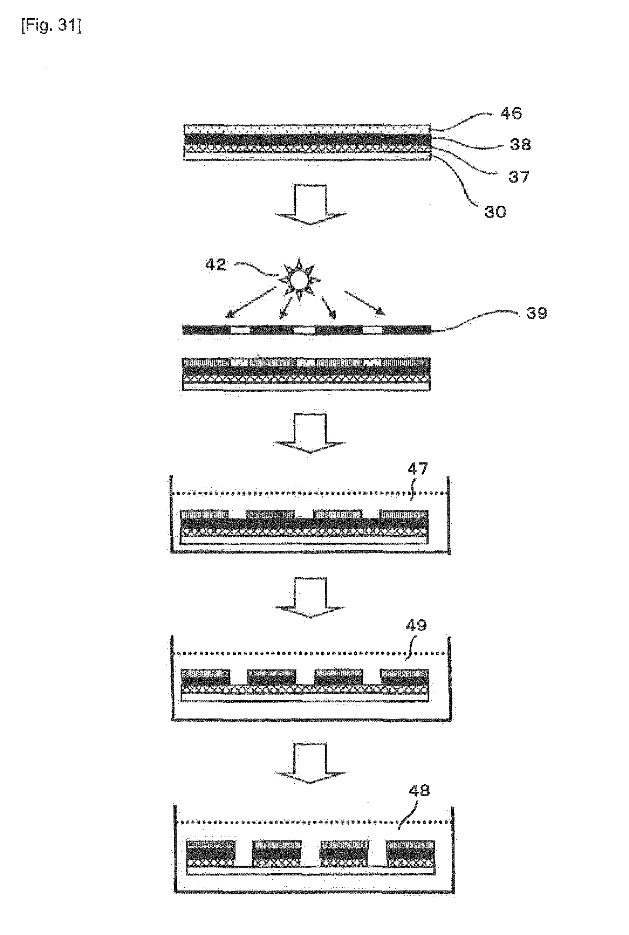

A glass substrate of length 70 mm x breadth 40 mm x thickness 1 mm was used for the substrate 15. A spacer 16 was manufactured by cutting out the central portion of length 20 mm x breadth 20 mm from a silicon sheet having length 40 mm x breadth 40 mm x thickness 1.5 mm. Further, as shown in Fig. 26, an introducing port 24 and a discharge port 25 were provided for the spacer 16 in order to introduce and discharge a suspension containing a biological sample. A holding unit (stack composed of the insulator film 18 and the light shielding film 19) having a plurality of holding holes 9 and a comb-shaped electrode 21 were integrally formed on the glass substrate by means of a method based on the photolithography and the etching shown in Figs. 31 to 32.

As shown in Figs. 31 to 32, ITO 37 having a film thickness of 100 nm was formed as a film by means of the sputtering on one surface of the glass substrate 30. Subsequently, Cr 38 having a film thickness of 100 nm was formed as a film by means of the sputtering on the formed ITO. Subsequently, a resist 46 was applied so as to provide a film thickness of 1 µm by using a spin coater onto the formed Cr. After performing natural drying for 1 minute, the prebaking (105°C, 15 minutes) was performed by using a hot plate. A positive type resist was used for the resist.

Subsequently, the resist was subjected to the exposure 42 by means of a UV exposure apparatus by using a photomask 39 for exposure on which a comb-shaped electrode pattern in which band-shaped electrodes a each having a width of 10 µm and band-shaped electrodes b each having a width of 10µm were formed at intervals of 50 µm is depicted in an area of length 30 mm x breadth 30 mm, followed by being developed with a developing solution 47. The exposure time and the developing time were adjusted so that the film thickness exfoliated by the development was 1 µm, which was equal to the film thickness of the resist. After the development, the exposed Cr film was exfoliated by means of 30% ceric ammonium nitrate solution 49 so that ITO 37 was exposed at the bottom surface of the through-hole. Subsequently, ITO etching solution (ITO-Etchant, Wako Pure Chemical Industries, Ltd.) 48 was used to exfoliate the exposed ITO film. Subsequently, as shown in Fig. 32, the resist was exfoliated by means of a remover 56, so as to form the comb-shaped electrode 21 in which the Cr film was arranged on the ITO film.

A resist 40 was applied so as to provide a film thickness of 5 µm by using a spin coater onto the substrate manufactured as described above. After performing natural drying for 1 minute, the prebaking (95°C, 3 minutes) was performed by using a hot plate. An epoxy-based negative type resist was used for the resist. Subsequently, the resist 40 was subjected to the exposure by means of a UV exposure apparatus 42 by using a photomask 41 for exposure on which a pattern of micropores having diameters of φ8.5 µm and aligned in an array form composed of 600 pieces (length) x 600 pieces (breadth) at intervals of 50 µm is depicted in an area of length 30 mm x breadth 30 mm in a state where the micropores were positionally adjusted on the comb-shaped electrode, followed by being developed with a developing solution 43. The exposure time and the developing time were adjusted so that the depth of the hole was 5 µm, which was equal to the film thickness of the resist 40. After the development, the exposed Cr film was exfoliated by means of 30% ceric ammonium nitrate solution 49 so that ITO 37 was exposed at the bottom surface of the holding hole. After that, the postbaking (180°C, 30 minutes) was performed by using a hot plate to cause the curing of the resist structure, so as to manufacture the structure 50 integrated with the holding unit (stack of the insulator film and the light shielding film) formed with the plurality of holding holes.

The spacer 16 was stacked and adhered under pressure as shown in Fig. 26 on the holding unit on the comb-shaped electrode substrate manufactured as described above. The surface of the silicon sheet has the stickiness, and hence, the spacer 16 and the insulator film 19 were successfully laminated with each other by being adhered under pressure. The areal size of the accommodating unit of the spacer is length 20 mm x breadth 20 mm, and hence the number of the holding holes 9 existing in the accommodating unit is about 160,000. A power source (signal generator) was connected to the pair of electrodes constructing the comb-shaped electrode via respective conductive lines 3.

Mouse spleen cells (particle size: about 6 µm) were used as the biological sample. The cells were suspended in a mannitol aqueous solution having a concentration of 300 mM to prepare a cell suspension so that the density was 2.7 x 10⁵ cells/mL.

Subsequently, 600 µL of the above-described cell suspension was injected from the introducing port 24 of the spacer 16 by using a syringe (number of introduced cells: about 160,000 cells), and a rectangular wave AC voltage having a voltage of 20 Vpp and a frequency of 3 MHz was applied between the electrodes by means of the signal generator. As a result, each of the cells was successfully immobilized one by one to each of the plurality of holding holes formed in the array form within an extremely short period of time of about 2 to 3 seconds. Subsequently, 600 µL of poly-L-lysine having a concentration of 2.5 x 10⁻⁴% was injected into the accommodating unit. After static placement for 3 minutes, the application of the voltage was stopped. Subsequently, a phosphate buffer (pH 7.2) was injected so as to wash poly-L-lysine in the accommodating unit. Thus, the cells were electrostatically bound to the inside of the holding holes successfully.

Subsequently, B cell in the mouse spleen cell population was detected. The specific substance which served as the target for detecting B cell was CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance was fed to the accommodating unit so as to label B cell via the antigen-antibody reaction (4°C, 10 minutes). After that, the washing was performed with a phosphate buffer, and the detection of B cell was carried out. The labeled B cell was observed by means of a CCD camera with a fluorescence microscope (U-RFL-T/IX71, Olympus Corporation, Japan). As a result, as compared with a fluorescence microscope image of the cell before the labeling, the fluorescence intensity only on the surface of B cell was increased after the labeling, and hence, B cell was successfully detected.

A biological sample collecting means 34 was installed to this immobilizing apparatus. A pipette which was able to precisely collect the biological sample by utilizing an electroosmotic flow was used as the biological sample collecting means. Accordingly, the B cell detected by using the fluorescence-labeled antibody was successfully collected while performing the observation with the microscope 33.

### (Example 3-3)

The detection accuracy of one labeled cell immobilized to one holding hole was confirmed by using a structure and an immobilizing apparatus similar to those of Example 3-1.

At first, a part of mouse spleen cells were stained with CellTracker Green CMFDA (Invitrogen). A sample which was prepared by mixing cells stained with above-described CellTracker Green CMFDA and unstained mouse spleen cells (particle size: about 6 µm) at 3 : 7 was used as the sample subjected to the detection, and a cell suspension was prepared so that the density was 2.7 x 10⁵ cells/mL.

Subsequently, 600 µL of the above-described cell suspension was injected from the introducing port 24 of the spacer 16 by using a syringe (number of introduced cells: about 160,000 cells), and a rectangular wave AC voltage having a voltage of 20 Vpp and a frequency of 3 MHz was applied between the electrodes by means of the signal generator. As a result, each of the cells was successfully immobilized one by one to each of the plurality of holding holes within an extremely short period of time of about 2 to 3 seconds. Subsequently, 600 µL of poly-L-lysine having a concentration of 2.5 x 10⁻⁴% was injected into the accommodating unit. After static placement for 3 minutes, the application of the voltage was stopped. Subsequently, a phosphate buffer (pH 7.2) was injected so as to wash poly-L-lysine in the accommodating unit. Thus, the cells were electrostatically bound to the inside of the holding holes successfully.

The cells stained with CellTracker Green CMFDA were observed by means of a CCD camera with a fluorescence microscope (U-RFL-T/IX71, Olympus Corporation, Japan). The detection rate of the stained cell was defined by the value obtained by dividing the number of successful detection in which one spleen cell immobilized to the holding hole was detected by the fluorescence, by the total number of the holding holes to each of which one spleen cell was immobilized, while viewing 225 pieces of the holding holes composed of 15 pieces (length) x 15 pieces (breadth) in the field of the microscope. As a result, spleen cells were immobilized to 198 pieces of the holding holes of 225 pieces of the holding holes in the field of the microscope (biological sample immobilization rate: 88%), and the number of spleen cells successfully detected by the fluorescence was 46 (detection ratio: 23%). Therefore, it has been revealed that the labeled cells contained in the sample could mostly be detected.

### (Example 4-1)

In Example 4-1, the structure and the immobilizing apparatus shown in Fig. 38 and Fig. 39 as the sectional view thereof are used.

A glass substrate of length 78 mm x breadth 56 mm x thickness 1 mm is used for the light-transmissive substrate 15 for constructing a lower electrode substrate 36. A spacer 16 is manufactured by using a silicon sheet so that an accommodating unit of length 20 mm x breadth 20 mm x thickness 1.5 mm is formed on a holding unit. Further, the spacer 16 is provided with an introducing port 24 and a discharge port 25 in order to introduce and discharge a suspension containing a biological sample.

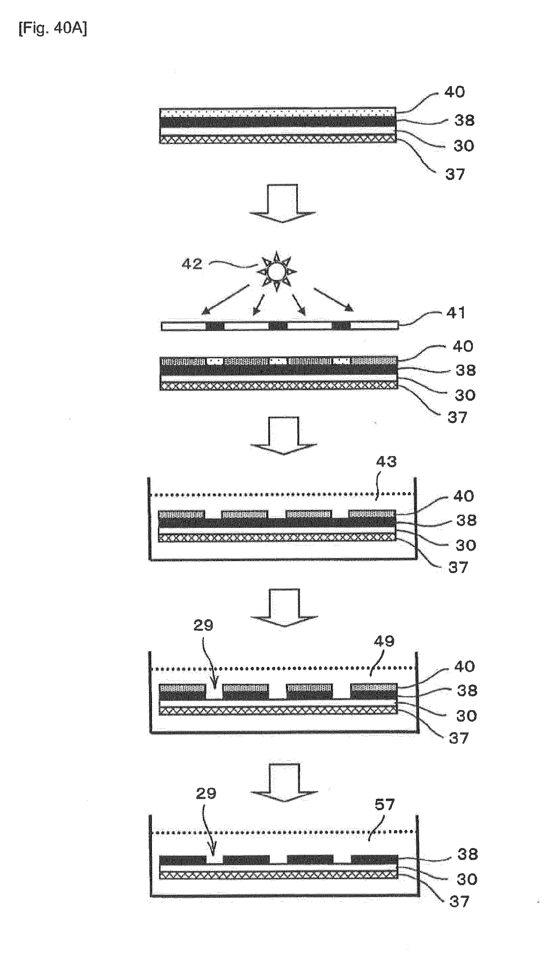

The holding unit (insulator film 18), which has a plurality of holding holes 9, is formed integrally on the lower electrode substrate by means of a method based on the photolithography and the etching shown in Figs. 40A to 40B. At first, ITO 37 is formed as a film on a first surface of the glass substrate 30, and Cr 38 having a film thickness of 100 nm is formed as a film on the second surface on the opposite side by means of the sputtering. Subsequently, a resist 40 is applied so as to provide a film thickness of 1 µm by using a spin coater onto the formed Cr. After performing natural drying for 1 minute, the prebaking (95°C, 3 minutes) is performed by using a hot plate. An epoxy-based negative type resist is used for the resist. Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) at intervals of 50 µm is depicted in an area of length 30 mm x breadth 30 mm, followed by being developed with a developing solution 43. The exposure time and the developing time are adjusted so that the depth of the holding hole is 1 µm, which is equal to the film thickness of the resist 40. After that, the postbaking (180°C, 30 minutes) is performed by using a hot plate to cause the curing of the resist structure. After that, the exposed Cr film is exfoliated by means of 30% ceric ammonium nitrate solution 49 to form the opening 29 so that the glass substrate 30 is exposed at the bottom surface of the opening 29. Subsequently, the resist is exfoliated by means of a remover 57. The Cr film 38 serves as the light shielding film.

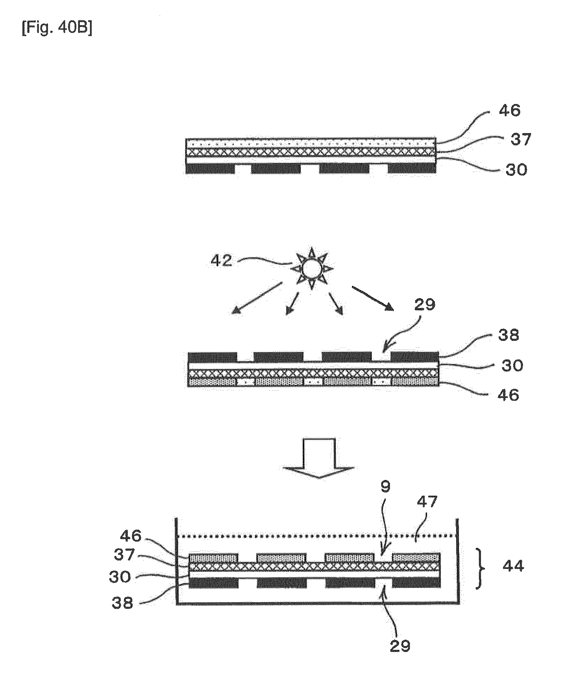

Subsequently, as shown in Fig. 40B, a resist 46 is applied so as to provide a film thickness of 5 µm by using a spin coater onto the film formation surface of ITO 37. After performing natural drying for 1 minute, the prebaking (105°C, 15 minutes) is performed by using a hot plate. A positive type resist is used for the resist. After that, the resist 46 is subjected to the exposure 42 by means of a UV exposure apparatus by using, as a photomask, the Cr film 38 formed with the openings 29, followed by being developed with a developing solution 47. The exposure time and the developing time are adjusted so that the depth of the hole is 5 µm, which is equal to the film thickness of the resist 46, and ITO 37 is exposed at the bottom surface of the hole 9. After the development, the postbaking (180°C, 30 minutes) is performed by using a hot plate to cause the curing of the resist structure. Accordingly, the lower electrode substrate 44 comprising the lower electrode substrate which is composed of ITO 37 and the glass substrate 30, the holding unit (insulator film) 46 which is formed with the plurality of holding holes 9, and the light shielding film (Cr film) 38 which has the openings 29 formed at the positions corresponding to the holding holes 9 is obtained.

The spacer 16 is stacked and adhered under pressure as shown in Fig. 39 on the holding unit on the structure manufactured as described above. The surface of the silicon sheet has the stickiness, and hence, the spacer 16 and the holding unit (insulator film 19) can be laminated with each other by being adhered under pressure. The areal size of the accommodating unit of the spacer 16 is length 20 mm x breadth 20 mm, and hence the number of the holding holes 9 existing in the accommodating unit is about 160,000. An upper electrode substrate 35 is arranged on the spacer 16, and a power source (signal generator) 4 is connected to the upper electrode substrate 35 and the lower electrode substrate 36 via respective conductive lines 3.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. In this case, the biological sample immobilization rate, at which rate approximately one cell enters one holding hole, is about 90%.

Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes). After that, the washing is performed with a phosphate buffer, and the detection of B cell is carried out. The labeled B cell is observed by means of a CCD camera with a fluorescence microscope (U-RFL-T/IX71, Olympus Corporation, Japan). Accordingly, as compared with a fluorescence microscope image of the cell before the labeling, the fluorescence intensity only on the surface of B cell is increased after the labeling, and hence, B cell can be detected.

### (Example 4-2)

In Example 4-2, the structure and the immobilizing apparatus shown in Fig. 35 and Fig. 36 as the sectional view thereof are used.

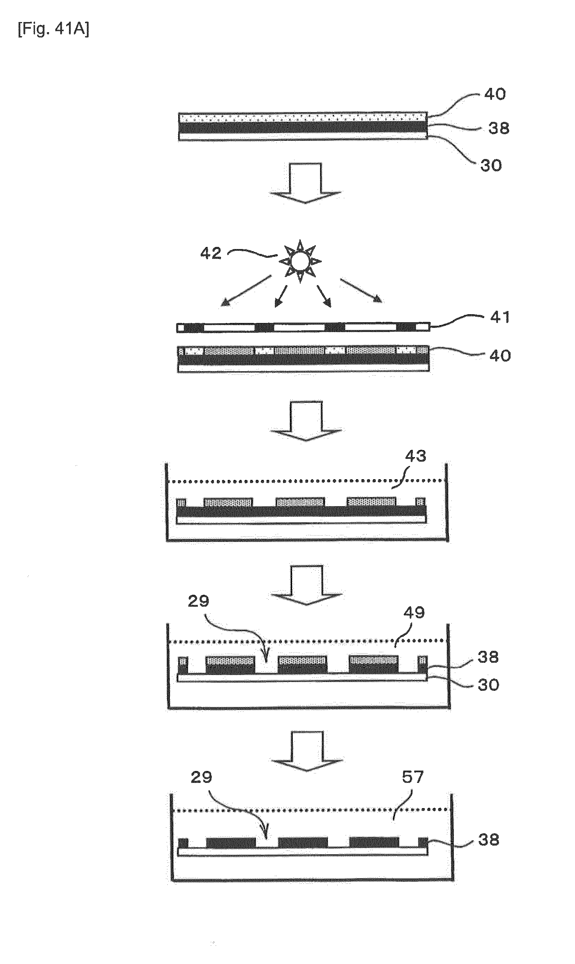

A glass substrate of length 70 mm x breadth 40 mm x thickness 1 mm is used for the light-transmissive substrate 15. A spacer 16 is manufactured by cutting out the central portion of length 20 mm x breadth 20 mm from a silicon sheet having length 40 mm x breadth 40 mm x thickness 1.5 mm to provide length 20 mm x breadth 20 mm. Further, as shown in Fig. 36, an introducing port 24 and a discharge port 25 are provided for the spacer 16 in order to introduce and discharge a suspension containing a biological sample. A holding unit (insulator film 18) having a plurality of holding holes 9, a comb-shaped electrode 21, and a light shielding film 19 having a plurality of openings 29 were integrally formed on the glass substrate by means of a method based on the photolithography and the etching shown in Figs. 41A to 41C.

As shown in Fig. 41A, Cr 38 having a film thickness of 100 nm is formed as a film by means of the sputtering on one surface of the glass substrate 30. Subsequently, a resist 40 is applied so as to provide a film thickness of 1 µm by using a spin coater onto the formed Cr. After performing natural drying for 1 minute, the prebaking (105°C, 15 minutes) is performed by using a hot plate. An epoxy-based negative type resist is used for the resist.

Subsequently, the resist 40 is subjected to the exposure 42 by means of a UV exposure apparatus by using a photomask 41 for exposure on which a pattern of micropores having diameters of φ8.5 µm and aligned in an array form composed of 600 pieces (length) x 600 pieces (breadth) at intervals of 50 µm is depicted in an area of length 30 mm x breadth 30 mm, followed by being developed with a developing solution 43. The exposure time and the developing time are adjusted so that the depth of the holding hole is 1 µm, which is equal to the film thickness of the resist 40. After that, the postbaking (180°C, 30 minutes) is performed by using a hot plate to cause the curing of the resist structure. After that, the exposed Cr film is exfoliated by means of 30% ceric ammonium nitrate solution 49 to form the opening 29 so that the glass substrate 30 is exposed at the bottom surface of the opening 29. Subsequently, the resist is exfoliated by means of a remover 57. The Cr film 38 serves as the light shielding film.

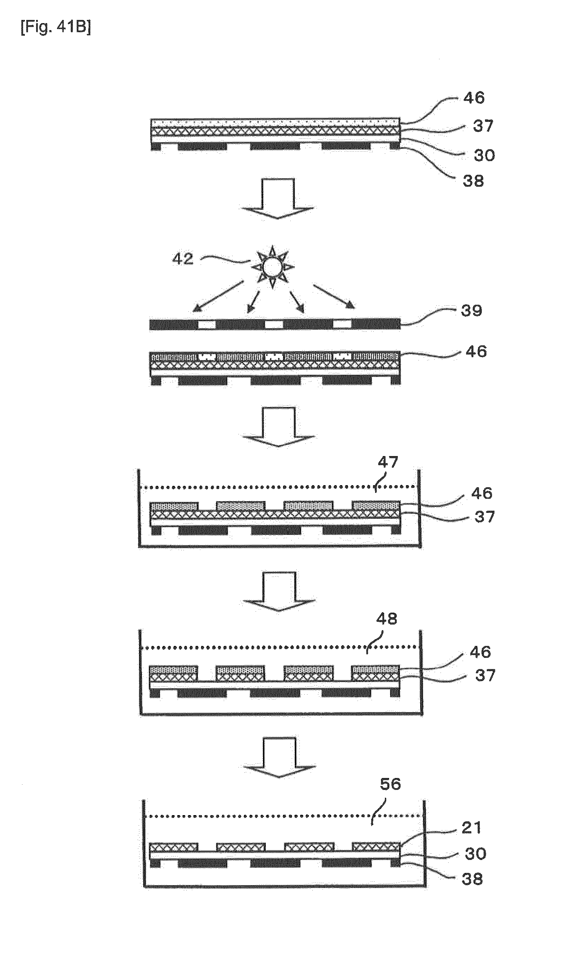

Subsequently, as shown in Fig. 41B, ITO 37 having a film thickness of 100 nm is formed as a film by means of the sputtering on the surface on the opposite side of the Cr film 38, of the glass substrate 30. A resist 46 is applied so as to provide a film thickness of 1 µm by using a spin coater onto the formed ITO 37. After performing natural drying for 1 minute, the prebaking is (105°C, 15 minutes) performed by using a hot plate. A positive type resist is used for the resist.

Subsequently, the resist 46 is subjected to the exposure 42 by means of a UV exposure apparatus by using a photomask 39 for exposure on which a comb-shaped electrode pattern in which band-shaped electrodes a each having a width of 10 µm and band-shaped electrodes b each having a width of 10µm were formed at intervals of 50 µm is depicted in an area of length 30 mm x breadth 30 mm, followed by being developed with a developing solution 47. The exposure time and the developing time are adjusted so that the film thickness exfoliated by the development is 1 µm, which is equal to the film thickness of the resist. After the development, the exposed ITO film 37 is exfoliated by means of ITO etching solution (ITO-Etchant, Wako Pure Chemical Industries, Ltd.). Subsequently, the resist 46 is exfoliated by means of a remover 56. Accordingly, the comb-shaped electrode 21 of ITO is formed on the surface on the opposite side of the Cr film 38, of the glass substrate 30.

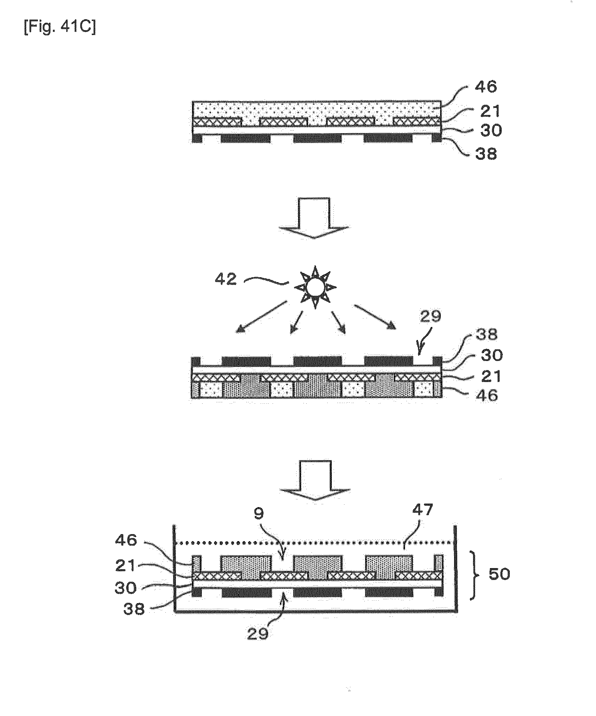

Subsequently, as shown in Fig. 41C, a resist 46 is applied so as to provide a film thickness of 5 µm by using a spin coater onto the film formation surface of ITO 37. After performing natural drying for 1 minute, the prebaking (95°C, 3 minutes) is performed by using a hot plate. A positive type resist is used for the resist. After that, the resist 46 is subjected to the exposure 42 by means of a UV exposure apparatus by using, as a photomask, the Cr film 38 formed with the openings 29, followed by being developed with a developing solution 47. The exposure time and the developing time are adjusted so that the depth of the hole is 5 µm, which is equal to the film thickness of the resist 46, and the comb-shaped electrode 21 is exposed at the bottom surface of the hole 9. After the development, the postbaking (180°C, 30 minutes) is performed by using a hot plate to cause the curing of the resist structure. Accordingly, the structure 50 comprising the electrode substrate which is composed of the comb-shaped electrode 21 of ITO and the glass substrate 30, the holding unit (insulator film) 46 which is formed with the plurality of holding holes 9, and the light shielding film (Cr film) 38 which has the openings 29 formed at the positions corresponding to the holding holes 9 is obtained.

The spacer 16 is stacked and adhered under pressure as shown in Fig. 36 on the holding unit of the structure manufactured as described above. The surface of the silicon sheet has the stickiness, and hence, the spacer 16 and the holding unit (insulator film 19) can be laminated with each other by being adhered under pressure. The areal size of the accommodating unit of the spacer 16 is length 20 mm x breadth 20 mm, and hence the number of the holding holes 9 existing in the accommodating unit is about 160,000. A power source (signal generator) is connected to the pair of electrodes constructing the comb-shaped electrode via respective conductive lines 3.

Mouse spleen cells (particle size: about 6 µm) are used as the biological sample. The cells are suspended in a mannitol aqueous solution having a concentration of 300 mM to prepare a cell suspension so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells can be immobilized one by one to each of the plurality of holding holes formed in the array form within an extremely short period of time of about 2 to 3 seconds. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells can be electrostatically bound to the inside of the holding holes.

Subsequently, B cell in the mouse spleen cell population is detected. The specific substance which serves as the target for detecting B cell is CD19 molecule existing on the surface of B cell. CD19 molecule is the B cell surface receptor, which is found on the cell through the entire differentiation of B cell line, in which B cell differentiates from the stage of the stem cell to finally into the plasma cell. The B cell line is exemplified by pre-B cell, B cell (including naive B cell, antigen-stimulated B cell, memory B cell, plasma cell, and B lymphocyte), and follicular dendritic cell.

Subsequently, 600 µL of PE-labeled CD19 antibody (Miltenyi Biotec, Bergisch Gladbach, Germany) as a labeled substance is fed to the accommodating unit so as to label B cell via the antigen-antibody reaction (4°C, 10 minutes). After that, the washing is performed with a phosphate buffer, and the detection of B cell is carried out. The labeled B cell is observed by means of a CCD camera with a fluorescence microscope (U-RFL-T/IX71, Olympus Corporation, Japan). Accordingly, as compared with a fluorescence microscope image of the cell before the labeling, the fluorescence intensity only on the surface of B cell is increased after the labeling, and hence, B cell can be detected.

A biological sample collecting means 34 is installed to this immobilizing apparatus. A pipette which can precisely collect the biological sample by utilizing an electroosmotic flow is used as the biological sample collecting means. Accordingly, the B cell detected by using the fluorescence-labeled antibody can be collected while performing the observation with the microscope 33.

### (Example 4-3)

The detection accuracy of one labeled cell immobilized to one holding hole can be confirmed as follows by using a structure and an immobilizing apparatus similar to those of Example 4-1.

At first, a part of mouse spleen cells are stained with CellTracker Green CMFDA (Invitrogen). A sample which is prepared by mixing cells stained with above-described CellTracker Green CMFDA and unstained mouse spleen cells (particle size: about 6 µm) at 3 : 7, is used as the sample subjected to the detection, and a cell suspension is prepared so that the density is 2.7 x 10⁵ cells/mL.

Subsequently, 600 µL of the above-described cell suspension is injected from the introducing port 24 of the spacer 16 by using a syringe (number of introduced cells: about 160,000 cells), and a rectangular wave AC voltage having a voltage of 20 Vpp and a frequency of 3 MHz is applied between the electrodes by means of the signal generator. Accordingly, each of the cells is immobilized one by one to each of the plurality of holding holes. Subsequently, 600 µL of poly-L-lysine having a concentration of 2.5 x 10⁻⁴% is injected into the accommodating unit. After static placement for 3 minutes, the application of the voltage is stopped. Subsequently, a phosphate buffer (pH 7.2) is injected so as to wash poly-L-lysine in the accommodating unit. Thus, the cells are electrostatically bound to the inside of the holding holes.

The cells stained with CellTracker Green CMFDA are observed by means of a CCD camera with a fluorescence microscope (U-RFL-T/IX71, Olympus Corporation, Japan). Accordingly, the fluorescence of the labeled cell can be detected from the plurality of spleen cells immobilized to the holding holes.

### (Comparative Example)

For the purpose of comparison, the following operation was performed by using a structure provided with no light shielding film. At first, 600 µL of the above-described spleen cell suspension (number of cells: about 160,000 cells) was injected from the introducing port of the spacer by using a syringe, and a rectangular wave AC voltage having a voltage of 20 Vpp and a frequency of 3 MHz was applied between the electrodes by means of the signal generator. As a result, each of the cells was successfully immobilized one by one to each of the plurality of holding holes within an extremely short period of time of about 2 to 3 seconds.

Subsequently, 600 µL of poly-L-lysine having a concentration of 2.5 x 10⁻⁴% was injected into the accommodating unit. After static placement for 3 minutes, the application of the voltage was stopped. Subsequently, a phosphate buffer (pH 7.2) was injected so as to wash poly-L-lysine in the accommodating unit. Thus, the cells were electrostatically bound to the inside of the through-holes successfully.

Subsequently, B cell in the mouse spleen cell population was detected. The specific substance which served as the target for detecting B cell was CD19 molecule existing on the surface of B cell, and B cell was labeled with PE-labeled CD19 antibody (Miltenyi Biotec, Bergisch Gladbach, Germany) as a labeled substance (4°C, 10 minutes), in the same manner as in Example 1-1. The labeled B cell was observed by means of a CCD camera with a fluorescence microscope (U-RFL-T/IX71, Olympus Corporation, Japan). As a result, the light noise which was caused by the fluorescence scattering from the insulator film (polymer film) around the holding hole was large, and thereby it was unsuccessful to accurately detect the fluorescence of the surface of B cell immobilized to the inside of the holding hole.

### PARTS LIST

2: biological sample
3: conductive line
4: AC power source
9: holding hole
12: electric flux line
14: structure for particle immobilization
15: substrate
16: spacer
17: upper lid
18: insulator film
19: light shielding film
20: holding unit
21: comb-shaped electrode
22: electrode
23: electrode
24: introducing port
25: discharge port
26: dielectrophoretic force
27: substance which binds to biological sample
28: biological sample
30: glass substrate
31: labeled substance
32: abnormal cell
33: fluorescence microscope
34: biological sample collecting means
35: upper electrode substrate
36: lower electrode substrate
37: ITO
38: Cr film
39: photomask for exposure (comb-shaped pattern)
40: resist (negative type)
41: photomask for exposure (micropore pattern, for negative resist)
42: exposure
43: developing solution (negative type)
44: lower electrode substrate
45: accommodating unit (space)
46: resist (positive type)
47: developing solution (positive type)
48: ITO etching solution
49: ceric ammonium nitrate solution
50: structure
54: portion (position) between holding holes
55: photomask for exposure (micropore pattern, for positive resist)
56: remover (positive type)
57: remover (negative type)

## Claims

1. A structure for particle immobilization having a plurality of holding holes for holding respective test particles in order to detect light emitted from a substance which indicates presence of a component for constructing each of said test particles, said structure comprising:
a flat plate substrate;
a holding unit which is arranged on said substrate and which is formed with said plurality of holding holes; and
a light shielding film which is provided for said substrate or said holding unit and which reduces light noise generated from said holding unit.

2. The structure for particle immobilization according to claim 1,
wherein said light shielding film is provided on the upper surface of said holding unit or at an intermediate layer of said holding unit.

3. The structure for particle immobilization according to claim 2,
wherein said holding unit has said light shielding film which is provided on the upper surface of said holding unit and an insulator film which is provided between said light shielding film and said substrate, and
wherein said holding holes are opened on said light shielding film positioned on the upper surface of said holding unit, and extend to said substrate via said insulator film.

4. The structure for particle immobilization according to claim 3,
wherein said light shielding film is provided on the entire portion other than said plurality of holding holes, of the upper surface of said holding unit.

5. The structure for particle immobilization according to claim 3,
wherein said light shielding film is provided around opening portions of said holding holes, of the upper surface of said holding unit.

6. The structure for particle immobilization according to claim 2,
wherein said holding unit has at least two insulator films and said light shielding film which is provided while being interposed between said two insulator films, and
wherein said holding holes are opened on the upper surface side of said holding unit, and extend to said substrate via said two insulator films and said light shielding film.

7. The structure for particle immobilization according to claim 1,
wherein said substrate is composed of light-transmissive material(s),
wherein said holding unit is arranged on a first surface of said substrate,
wherein said light shielding film is arranged on the second surface on the opposite side of said first surface of said substrate,
wherein said holding holes are opened on the upper surface of said holding unit and extend to said first surface of said substrate, and
wherein said light shielding film has a plurality of openings at positions corresponding to said plurality of holding holes, which openings allow said second surface of said substrate to be exposed.

8. The structure for particle immobilization according to any one of claims 1 to 7, further comprising:
an accommodating unit which is arranged on said holding unit and which accommodates a suspension containing said test particles,
wherein said holding holes are communicated with said accommodating unit.

9. The structure for particle immobilization according to any one of claims 1 to 8,
wherein a pair of electrodes which are arranged at respective positions corresponding to the mutually different holding holes are provided on the holding unit-side surface of said substrate, and
wherein said holding holes extend from the upper surface of said holding unit to said electrodes on said substrate.

10. The structure for particle immobilization according to claim 9,
wherein said substrate is composed of light-transmissive material(s), and
wherein said electrode, which is provided on said holding unit-side surface of said substrate, is a transparent electrode.

11. An apparatus for particle analysis, comprising:
said structure for particle immobilization according to claim 9 or 10;
a power source which applies an AC voltage to said electrodes in order to generate a dielectrophoretic force; and
a detecting unit which detects light emitted from a substance that indicates presence of a component for constructing each of said test particles held in said holding holes of said structure for particle immobilization after applying said voltage from said power source.
